(19) Europäisches Patentamt / European Patent Office / Office européen des brevets

(11) **EP 4 111 347 B1**

(12) **EUROPÄISCHE PATENTSCHRIFT**

(45) Veröffentlichungstag und Bekanntmachung des Hinweises auf die Patenterteilung:
**31.01.2024   Patentblatt 2024/05**

(21) Anmeldenummer: **21707977.1**

(22) Anmeldetag: **24.02.2022**

(51) Internationale Patentklassifikation (IPC):
**G06Q 20/02** *(2012.01)*   **G06F 21/64** *(2013.01)*
**G06Q 20/36** *(2012.01)*   **G06Q 20/06** *(2012.01)*
**G06Q 20/32** *(2012.01)*   **G06Q 20/38** *(2012.01)*

(52) Gemeinsame Patentklassifikation (CPC):
**G06F 21/64; G06Q 20/02; G06Q 20/0655;
G06Q 20/327; G06Q 20/3678; G06Q 20/3823;
G06Q 20/3825; G06Q 20/3827**

(86) Internationale Anmeldenummer:
**PCT/EP2021/054542**

(87) Internationale Veröffentlichungsnummer:
**WO 2021/170644 (02.09.2021 Gazette 2021/35)**

(54) **VERFAHREN ZUM DIREKTEN ÜBERTRAGEN VON ELEKTRONISCHEN MÜNZDATENSÄTZEN ZWISCHEN ENDGERÄTEN, BEZAHLSYSTEM, WÄHRUNGSSYSTEM UND ÜBERWACHUNGSINSTANZ**

METHOD FOR DIRECTLY TRANSMITTING ELECTRONIC COIN DATASETS BETWEEN TERMINALS, PAYMENT SYSTEM, PROTECTION SYSTEM, AND MONITORING ENTITY

PROCÉDÉ DE TRANSMISSION DIRECTE D'ENSEMBLES DE DONNÉES DE PIÈCE DE MONNAIE ÉLECTRONIQUE ENTRE TERMINAUX, SYSTÈME DE PAIEMENT, SYSTÈME DE PROTECTION ET ENTITÉ DE SURVEILLANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.02.2020   DE 102020104905**

(43) Veröffentlichungstag der Anmeldung:
**04.01.2023   Patentblatt 2023/01**

(73) Patentinhaber: **Giesecke+Devrient advance52 GmbH**
**81677 München (DE)**

(72) Erfinder:
• **FRITZHANNS, Tilo**
  **80639 München (DE)**
• **GAWLAS, Florian**
  **80805 München (DE)**

• **VELEVA, Maria**
  **80689 München (DE)**

(74) Vertreter: **Giesecke+Devrient IP**
**Prinzregentenstraße 161**
**81677 München (DE)**

(56) Entgegenhaltungen:
**US-A1- 2016 358 165**

• **ISABELLE SIMPLOT-RYL ET AL: "Distributed architectures for electronic cash schemes: a survey1", INTERNATIONAL JOURNAL OF PARALLEL, EMERGENT AND DISTRIBUTED SYSTEMS, Bd. 24, Nr. 3, 1. Juni 2009 (2009-06-01), Seiten 243-271, XP055672436, United Kingdom ISSN: 1744-5760, DOI: 10.1080/17445760802441671**

EP 4 111 347 B1

**Beschreibung**

TECHNISCHES GEBIET DER ERFINDUNG

Die Erfindung betrifft ein Verfahren zum direkten Übertragen von elektronischen Münzdatensätzen zwischen Endgeräten. Weiter betrifft die Erfindung ein Bezahlsystem zum Austauschen von monetären Beträgen. Die Erfindung betrifft zudem eine Überwachungsinstanz

TECHNISCHER HINTERGRUND DER ERFINDUNG

Sicherheit von Bezahltransaktionen und den dazugehörigen Bezahltransaktionsdaten bedeutet sowohl Schutz der Vertraulichkeit der ausgetauschten Daten; als auch Schutz der Integrität der ausgetauschten Daten; als auch Schutz der Verfügbarkeit der ausgetauschten Daten.

Herkömmliche Blockchain-basierte Bezahltransaktionen, wie beispielsweise Bitcoin, stellen einen hohen Schutz der Integrität dar. Wenn elektronische Münzdatensätze, auch "Coins" genannt, in einer Blockchain-Technologie den Besitzer wechseln, werden viele Informationen veröffentlicht. Somit sind derartige Bezahltransaktionen und insbesondere die ausgetauschten Daten nicht vollkommen vertraulich. Zudem sind die Bezahltransaktionen sehr rechenintensiv und damit energieaufwendig.

Daher werden herkömmlich oft anstelle der vertraulichen Daten nur die Hash-Werte der vertraulichen Daten in einem Blockchain-Ledger abgespeichert. Die korrespondierenden Klartext-Daten müssen dann außerhalb der Blockchain verwaltet werden. Für elektronische Münzdatensätze sind solche Konzepte bislang nicht anwendbar, weil sie grundlegende Kontrollfunktionen, insbesondere (1) das Erkennen von Mehrfachausgabe-Verfahren, auch Double-Spending, genannt und (2) das Erkennen von ungedeckten Zahlungen nicht aufweisen. Im Fall (1) versucht jemand denselben Münzdatensatz mehrfach auszugeben und im zweiten Fall versucht jemand einen Münzdatensatz auszugeben, obwohl er kein Guthaben (mehr) besitzt.

Aus der DE 10 2009 038 645 A1 und der DE 10 2009 034 436 A1 sind Systeme zum Übertragen von geldwerten Beträgen in Form elektronischer Datensätze, bei denen ein Bezahlen mit Duplikaten des Datensatzes verhindert und ein hoher Grad an Manipulationssicherheit gegeben ist, bekannt, wobei hier komplexe Strukturen und aufwendige Verschlüsselungs- und Signiervorgänge beim Austausch erforderlich sind. Diese haben sich als wenig praxistauglich herausgestellt.

In der WO 2016/200885 A1 ist ein Verfahren zur Verschlüsselung eines in einem Blockchain-Ledger getätigten Betrags beschrieben, wobei die Verifizierbarkeit der Transaktion erhalten bleibt. Dabei wird ein Verschleierungsbetrag zu einem Eingangswert addiert. Dann wird ein Ausgangswert erzeugt und verschlüsselt. Sowohl der Eingangswert als auch der Ausgangswert liegen innerhalb eines Wertebereichs, wobei eine Summe von zwei beliebigen Werten innerhalb des Bereichs einen Schwellenwert nicht überschreitet. Die Summe aus dem verschlüsselten Eingangswert und dem verschlüsselten Ausgangswert kann gleich Null sein. Bereichsprüfungen, sogenannte Range-Proofs, sind jedem der Eingangswerte und dem Ausgangswert zugeordnet. Diese Bereichsprüfungen beweisen, dass der Eingangswert und der Ausgangswert in den Wertebereich fallen. Jeder öffentliche Schlüssel kann mit einer Ringsignatur signiert werden, die auf einem öffentlichen Schlüssel eines Empfängers in der Transaktion basiert. In diesem Verfahren ist eine Blockchain-Technologie notwendig, die nach Erhalt eines Münzdatensatzes angerufen werden muss, um den Münzdatensatz zu validieren.

In dem Artikel "Distributed architecture for electronic cash schemes: a survey" - International Journal of parallel, emergent and distributed systems, Bd. 24, Nr. 3, 1.Juni 2009, Seite 243-271 von Isabelle Simplot-Ryl et al - wird ein e-cash-Schema beschrieben, in welchem ein Kunde dem Händler direkt eine digitale Münze, die einem Betrag entspricht, sendet und die Münzen in einer zentralen Instanz registriert sind. Der Händler erstellt eine modifizierte Münze und wendet dabei eine Einwegfunktion auf den Datensatz an, welcher somit maskiert wird. Die modifizierte Münze wird an die zentrale Instanz gesendet, bei welchem die Münzen anonym registriert sind.

Es ist Aufgabe der vorliegenden Erfindung, ein Verfahren und ein System zu schaffen, in denen eine Bezahltransaktion sicher aber dennoch einfach ausgestaltet ist. Dabei soll insbesondere eine direkte Bezahlung zwischen Geräten, wie Token, Smartphones aber auch Maschinen, wie Kassenterminals oder Automaten, geschaffen werden, die zunächst einmal anonym ist. Mehrere Münzdatensätze sollen beim Benutzer beliebig miteinander kombiniert und/oder aufgeteilt werden können, um ein flexibles Austauschen zu ermöglichen. Die ausgetauschten Münzdatensätze sollen einerseits vertraulich gegenüber anderen Systemteilnehmern sein, aber andererseits jedem Systemteilnehmer erlauben, grundlegende Überwachungsprüfungen durchzuführen, insbesondere das Erkennen von Mehrfach-Ausgabe-Versuchen und das Erkennen von Versuchen mit nicht vorhandenen monetären Beträgen zu zahlen. Es soll perspektivisch möglich sein, ganz auf Bargeld (Banknoten und analoge Münzen), zumindest aber auf analoge Münzen, zu verzichten.

Das Übertragen von Münzdatensätzen ist anonym soweit die Anonymität nicht explizit durch zusätzliche Maßnahmen aufgehoben wird. Es könnte eine Forderung sein, die Anonymität in Abhängigkeit eines Werts für monetäre Beträge aufzuheben. Mit anderen Worten: Eine typische Anforderung im Bezahlsystem könnte sein, monetäre Beträge, unterhalb eines bestimmten Grenzwerts anonym zu senden. Wird dieser Grenzwert überschritten, würde die Übertragung im System deanonymisiert werden.

Da eine Bezahltransaktion (Übertragung von Münzdatensätzen) eines großen geldwerten Betrags auch in mehrere Bezahltransaktionen kleinerer geldwerter Beträge aufgeteilt werden könnte, die jeweils unterhalb des Grenzwertes liegen können, sollte der Grenzwert endgerätspezifisch und zeitraumabhängig sein. Aufgrund der intransparenten vielfachen (direkten) Übertragung eines Münzdatensatzes zwischen einer Vielzahl von verschiedenen Endgeräten, ist diese Forderung nach Deanonymisierung, auch Re-Identifikation genannt, zudem nicht auf einzelne Übertragungen (Transaktionen) zwischen zwei Endgeräten gerichtet, sondern betrifft in der Regel die Summe aller Transaktionen innerhalb einer bestimmten Zeiteinheit (Zeitdauer), die von einem Endgerät empfangen und/oder gesendet werden. Es wird daher ein Mechanismus benötigt, mit dem festgestellt werden kann, wie hoch die Summe aller monetären Beträge, die von einem Endgerät gesendet oder empfangen wurden, innerhalb einer bestimmten Zeiteinheit ist. Mit anderen Worten, es wird ein Verfahren benötigt, das die Aufhebung der Anonymität eines sendenden Endgeräts bei Überschreitung eines Grenzwertes pro Zeiteinheit ermöglicht.

ZUSAMMENFASSUNG DER ERFINDUNG

Die gestellten Aufgaben werden mit den Merkmalen der unabhängigen Patentansprüche gelöst. Weitere vorteilhafte Ausgestaltungen sind in den abhängigen Patentansprüchen beschrieben.

Die Aufgabe wird insbesondere durch ein Verfahren zum direkten Übertragen von elektronischen Münzdatensätzen zwischen Endgeräten, wobei eine Überwachungsinstanz anonyme maskierte elektronische Münzdatensätze registriert, mit den folgenden Schritten in einem ersten Endgerät: Empfangen eines elektronischen Münzdatensatzes, wobei der zumindest eine elektronische Münzdatensatz einen monetären Betrag und einen Verschleierungsbetrag aufweist; Maskieren eines modifizierten elektronischen Münzdatensatzes oder des empfangenen elektronischen Münzdatensatzes durch Anwenden einer Einwegfunktion, die beispielsweise homomorph ist, auf den elektronischen Münzdatensatz, bevorzugt auf dessen Verschleierungsbetrag, zum Erhalten eines maskierten elektronischen Münzdatensatzes; Verknüpfen des maskierten elektronischen Münzdatensatzes mit einem Pseudonym zum Erhalten eines pseudonymisierten maskierten elektronischen Münzdatensatzes; und Senden des pseudonymisierten maskierten elektronischen Münzdatensatzes an die Überwachungsinstanz.

Die hier beschriebenen Schritte müssen nicht in der beschriebenen Reihenfolge durchgeführt werden. Die hier beschriebene Reihenfolge ist jedoch eine bevorzugte Ausgestaltung. Insbesondere kann der Verknüpfen-Schritt mit dem Maskieren-Schritt getauscht werden.

Ein elektronischer Münzdatensatz ist insbesondere ein elektronischer Datensatz, der einen geldwerten (=monetären) Betrag repräsentiert und umgangssprachlich auch als "digitale Münze" oder "elektronische Münze", englisch "digital/electronic Coin" bezeichnet wird. Dieser geldwerte Betrag wechselt bei dem Verfahren von einem ersten Endgerät zu einem anderen Endgerät. Als ein geldwerter Betrag wird im Folgenden ein digitaler Betrag verstanden, der z.B. auf einem Konto eines Geldinstituts gutgeschrieben werden kann, oder gegen ein anderes Zahlungsmittel getauscht werden kann. Ein elektronischer Münzdatensatz repräsentiert also Bargeld in elektronischer Form.

Das Endgerät kann eine Vielzahl von elektronischen Münzdatensätzen aufweisen, beispielsweise kann in einem Datenspeicher des Endgeräts die Vielzahl von Münzdatensätzen hinterlegt sein. Der Datenspeicher stellt dann beispielsweise eine elektronische Geldbörse dar. Der Datenspeicher kann beispielsweise intern, extern oder virtuell sein. In einer Ausgestaltung kann beim Empfangen eines elektronischen Datensatzes automatisch ein "Verbinden" stattfinden, sodass bevorzugt nur eine (oder eine bestimmte Anzahl an) elektronische(n) Datensätzen im Endgerät sind.

Das Endgerät kann beispielsweise ein passives Gerät, wie z. B. ein Token, ein mobiles Endgerät, wie z.B. ein Smartphone, ein Tablet-Computer, ein Computer, ein Server oder eine Maschine sein.

Ein elektronischer Münzdatensatz zum Übertragen von geldwerten Beträgen unterscheidet sich wesentlich von einem elektronischen Datensatz zum Datenaustausch oder Datentransfer, da beispielsweise eine klassische Datentransaktion auf Basis eines Frage-Antwort-Prinzips bzw. auf einer Interkommunikation zwischen den Datentransferpartnern stattfindet. Ein elektronischer Münzdatensatz ist dementgegen einmalig, eindeutig und steht im Kontext eines Sicherheitskonzepts, welches beispielsweise Maskierungen, Signaturen oder Verschlüsselungen umfassen kann. In einem elektronischen Münzdatensatz sind prinzipiell alle Daten enthalten, die für eine empfangende Instanz bezüglich Verifikation, Authentisierung und Weitergeben an andere Instanzen benötigt werden. Eine Interkommunikation zwischen den Endgeräten beim Austausch ist daher bei dieser Art Datensätze grundsätzlich nicht erforderlich.

Erfindungsgemäß weist ein zum Übertragen zwischen zwei Endgeräten verwendender elektronischer Münzdatensatz einen monetären Betrag, also ein Datum, das einen Geldwert des elektronischen Münzdatensatzes darstellt, und einen Verschleierungsbetrag, beispielsweise eine Zufallszahl, auf. Darüber hinaus kann der elektronische Münzdatensatz weitere Metadaten aufweisen, beispielsweise welche Währung der monetäre Betrag repräsentiert. Ein elektronischer Münzdatensatz wird durch diese wenigstens beiden Daten (monetärer Betrag und Verschleierungsbetrag) eindeutig repräsentiert. Jeder, der Zugriff auf diese beiden Daten eines gültigen Münzdatensatzes hat, kann diesen elektronischen Münzdatensatz zum Bezahlen verwenden. Die Kenntnis dieser beiden Werte (monetärer Betrag und Verschleierungsbetrag) ist also gleichbedeutend mit dem Besitz des digitalen Geldes. Dieser elektronische Münzdatensatz wird zwischen zwei Endgeräten direkt übertragen. In einer Ausgestaltung der Erfindung besteht ein elektronischer Münzdatensatz aus diesen beiden Daten, es ist somit zum Austausch von digitalem Geld nur die Übertragung des monetären Betrags und der Verschleierungsbetrag notwendig.

Zu jedem elektronischen Münzdatensatz wird ein entsprechender maskierter elektronischer Münzdatensatz zugeordnet. Die Kenntnis eines maskierten elektronischen Münzdatensatzes berechtigt nicht dazu, das digitale Geld, das durch den elektronischen Münzdatensatz repräsentiert wird, auszugeben. Dies stellt einen wesentlichen Unterschied zwischen den maskierten elektronischen Münzdatensätzen und den (nicht maskierte) elektronischen Münzdatensätzen dar und ist der Kern der hier vorliegenden Erfindung. Ein maskierter elektronischer Münzdatensatz ist einzigartig und zudem eindeutig einem elektronischen Münzdatensatz zuzuordnen, es gibt also eine 1-zu-1 Beziehung zwischen einem maskierten elektronischen Münzdatensatz und einem (nicht-maskierten) elektronischen Münzdatensatz. Das Maskieren des elektronischen Münzdatensatzes erfolgt bevorzugt durch eine Recheneinheit des Endgeräts innerhalb des Endgeräts. Das Endgerät weist zumindest einen elektronischen Münzdatensatz auf. Alternativ kann das Maskieren durch eine Recheneinheit des Endgeräts, das den elektronischen Münzdatensatz empfängt, erfolgen.

Dieser maskierte elektronische Münzdatensatz wird durch Anwenden einer Einwegfunktion, beispielsweise einer homomorphen Einwegfunktion, beispielsweise einer kryptographischen Funktion, erhalten. Diese Funktion ist eine Einwegfunktion, also eine mathematische Funktion, die komplexitätstheoretisch "leicht" berechenbar, aber "schwer" bis praktisch unmöglich umzukehren ist. Hierbei wird unter Einwegfunktion auch eine Funktion bezeichnet, zu der bislang keine in angemessener Zeit und mit vertretbarem Aufwand praktisch ausführbare Umkehrung bekannt ist. Somit ist die Berechnung eines maskierten elektronischen Münzdatensatzes aus einem elektronischen Münzdatensatz vergleichbar mit bzw. entspricht der Generierung eines öffentlichen Schlüssels in einem Verschlüsselungsverfahren über eine Restklassengruppe. Vorzugsweise wird eine Einwegfunktion verwendet, die auf eine Gruppe operiert, in der das diskrete Logarithmusproblem schwer zu lösen ist, wie z. B. ein kryptographisches Verfahren analog einer elliptischer-Kurve-Verschlüsselung, kurz ECC, aus einem privaten Schlüssel eines entsprechenden Kryptographie-Verfahrens. Die umgekehrte Funktion, also die Erzeugung eines elektronischen Münzdatensatzes aus einem maskierten elektronischen Münzdatensatz (oder des Teils des elektronischen Münzdatensatzes), ist dabei - äquivalent zur Erzeugung des privaten Schlüssels aus einem öffentlichen Schlüssel in einem Verschlüsselungsverfahren über einer Restklassengruppe - sehr zeitintensiv. Wenn im vorliegenden Dokument von Summen und Differenzen oder anderen mathematischen Operationen die Rede ist, dann sind dabei im mathematischen Sinn die jeweiligen Operationen auf der entsprechenden mathematischen Gruppe zu verstehen, beispielsweise der Gruppe der Punkte auf einer elliptischen Kurve.

Die Einwegfunktion ist in einer Ausgestaltung homomorph, also ein kryptographisches Verfahren, welches über Homomorphie-Eigenschaften verfügt. Somit können mit dem maskierten elektronischen Münzdatensatz mathematische Operationen durchgeführt werden, die parallel dazu auch auf dem (nicht maskierten) elektronischen Münzdatensatz durchgeführt und somit nachvollzogen werden können. Mit Hilfe der homomorphen Einwegfunktion können Berechnungen mit maskierten elektronischen Münzdatensätzen in der Überwachungsinstanz nachvollzogen werden, ohne dass die entsprechenden (nicht maskierten) elektronischen Münzdatensätze dort bekannt sind. Daher können bestimmte Berechnungen mit elektronischen Münzdatensätzen, beispielsweise für ein Verarbeiten des (nicht maskierten) elektronischen Münzdatensatzes (zum Beispiel Aufteilen oder Verbinden), auch parallel mit den dazugehörigen maskierten elektronischen Münzdatensätzen nachgewiesen werden, beispielsweise zu Validierungsprüfungen oder zur Überwachung über die Rechtmäßigkeit des jeweiligen elektronischen Münzdatensatzes. Die Homomorphie-Eigenschaften treffen zumindest auf Additions- und Subtraktionsoperationen zu, sodass ein Aufteilen oder Kombinieren (=Verbinden) von elektronischen Münzdatensätzen auch mittels der entsprechend maskierten elektronischen Münzdatensätze in der Überwachungsinstanz festgehalten und von anfragenden Endgeräten und/ oder von der Überwachungsinstanz nachvollzogen werden kann, ohne Kenntnis über den monetären Betrag und das durchführende Endgerät zu erlangen.

Die Homomorphie-Eigenschaft ermöglicht es also, eine Eintragung von gültigen und ungültigen elektronischen Münzdatensätzen auf Basis ihrer maskierten elektronischen Münzdatensätze in einer Überwachungsinstanz zu führen ohne Kenntnis der elektronischen Münzdatensätze, auch wenn diese elektronische Münzdatensätze verarbeitet werden (aufgeteilt, verbunden, umschalten). Dabei wird sichergestellt, dass kein zusätzlicher monetärer Betrag geschaffen wurde oder dass eine Identität des Endgeräts in der Überwachungsinstanz festgehalten wird. Das Maskieren ermöglicht ein hohes Maß an Sicherheit, ohne einen Einblick in den monetären Betrag oder das Endgerät zu geben. Somit ergibt sich ein zweischichtiges Bezahlsystem. Zum einen existiert die Verarbeitungsschicht, in der maskierte elektronische Datensätze geprüft werden, und zum anderen die Direkttransaktionsschicht, in der zumindest zwei Endgeräte elektronische Münzdatensätze übertragen.

In einer weiteren Ausgestaltung ist die Einwegfunktion eine kryptographisches Verschlüsselungsfunktion.

Das Anwenden der Einwegfunktion auf den elektronischen Münzdatensatz umfasst auch das Anwenden der Einwegfunktion auf einen Teil des elektronischen Münzdatensatzes, insbesondere auf den Verschleierungsbetrag, in einer Ausgestaltung nur auf den Verschleierungsbetrag.

Beim Übertragen eines elektronischen Münzdatensatzes vom ersten Endgerät auf das zweite Endgerät haben zwei Endgeräte Kenntnis über den elektronischen Münzdatensatz. Um zu verhindern, dass das sendende erste Endgerät den elektronischen Münzdatensatz bei einem anderen (dritten) Endgerät ebenfalls zum Bezahlen verwendet (sogenanntes Double-Spending), wird bevorzugt ein Umschalten ("Switch") des übertragenen elektronischen Münzdatensatzes vom ersten Endgerät auf das zweite Endgerät ausgeführt. Das Umschalten kann bevorzugt automatisch beim Empfangen eines elektronischen Münzdatensatzes im zweiten Endgerät geschehen. Zusätzlich kann es auch auf Anforderung, beispielsweise eines Befehls vom ersten und/ oder zweiten Endgerät, erfolgen. Zusätzlich kann es auch auf Anforderung, beispielsweise eines Befehls vom ersten und/ oder zweiten Endgerät, erfolgen. Zusätzlich kann ein elektronischer Münzdatensatz auch in zumindest zwei Münzteildatensätze aufgeteilt werden ("Split"). Zusätzlich können zwei elektronische Münzdatensätze zu einem Münzdatensatz verbunden werden ("Merge").

Das Umschalten, das Aufteilen und das Verbinden sind verschiedene Modifikation an einem elektronischen Münzdatensatz. Diese Modifikationen bedingen ein Registrieren des maskierten Münzdatensatzes in einer Überwachungsinstanz. Dieses Registrieren im Zuge der Modifikationen führt dazu, dass der vom ersten Endgerät gesendete elektronische Münzdatensatz ungültig wird und bei einem zweiten Ausgeben-Versuch des ersten Endgeräts als entsprechend ungültig erkannt wird. Der vom zweiten Endgerät zu registrierende Münzdatensatz wird durch das Registrieren in der Überwachungsinstanz gültig. Das konkrete Durchführen der einzelnen Modifikationen wird später erläutert.

Ein Umschalten erfolgt zudem, wenn ein elektronischer Münzdatensatz modifiziert, beispielsweise aufgeteilt oder mit anderen elektronischen Münzdatensätzen verbunden wurde, insbesondere um einen zu zahlenden monetären Betrag passend begleichen zu können. Dabei sollte ein digitales Zahlungssystem unter allen Umständen in der Lage sein, jeden monetären Betrag zu zahlen.

Auch um den geforderten Mechanismus zur Deanonymisierung zu ermöglichen, wird vor dem Maskieren ein Verknüpfen-Schritt durchgeführt, um ein Pseudonym des Endgeräts mit dem elektronischen Münzdatensatz zu verknüpfen. Das Pseudonym ist bevorzugt endgerätespezifisch. Ein Pseudonym ist jegliche Art von verschleierter Identität, die es ermöglicht, dass nicht in bloßer Kenntnis des Münzdatensatzes direkt auf das Endgerät und die damit durchgeführten Transaktionen zurückgeschlossen werden kann.

Das Endgerät muss für jeden empfangenen Münzdatensatz eine Modifikation (Aufteilen, Umschalten, Verbinden) durchführen, um das Pseudonym mit dem Münzdatensatz zu verknüpfen. Das mit jeder Modifikation (für das Validieren der Modifikation) einhergehende Registrieren in der Überwachungsinstanz ist ausreichend, um alle Münzdatensatz-Transaktionen, die mit dem Endgerät durchgeführt wurden, aufgrund des verknüpften Pseudonyms eindeutig diesem Endgerät zuordnen zu können. Die Überwachungsinstanz kann bei Kenntnis der Zugehörigkeit von Pseudonym und Endgerät die beim Endgerät eingehenden Transaktionen identifizieren.

Somit werden Modifikationen des Münzdatensatzes mit einem auf dem Endgerät gespeicherten Pseudonym verknüpft. Dieses Pseudonym kann entweder dauerhaft oder nur für einen bestimmten Zeitraum gültig ist.

Der Unterschied zwischen einem anonymen maskierten Münzdatensatz und einem pseudonymisierten maskierten Münzdatensatz liegt also in der Identifizierbarkeit des Endgeräts durch die Überwachungsinstanz, wenn es das Pseudonym verwendet. Ein anonymer maskierter Münzdatensatz enthält keinerlei Information über seine Herkunft, kann also nicht mit einem Endgerät in Verbindung gebracht werden. Dementgegen hat ein pseudonymisierter maskierter Münzdatensatz eine Verknüpfung mit einem Pseudonym des Endgeräts, so dass das Endgerät, was den pseudonymisierten maskierten Münzdatensatz an die Überwachungsinstanz versendet hat, über das verknüpfte Pseudonym identifiziert werden kann.

Der beschriebene Mechanismus ist ausreichend, um zu bestimmen, ob die Summe der monetären Beträge aller Transaktionen eines Endgeräts unterhalb eines Grenzwertes, bevorzugt innerhalb einer bestimmten Zeiteinheit, liegen. Wird erkannt, dass der Grenzwert durch eine gewünschte Modifikation überschritten wird, könnte die Überwachungsinstanz eine derartige Modifikation prompt unterbinden, indem es die Registrierung des entsprechenden Münzdatensatzes ablehnt. Alternativ oder zusätzlich könnte das Endgerät informiert werden, dass die Modifikation (und damit die Transkation) nur durchgeführt würde, wenn das Endgerät sich deanonymisiert, also beispielsweise persönliche Zugangsdaten offenlegt, bevor die Modifikation registriert und der Münzdatensatz auf gültig gesetzt wird, wodurch die Transaktion akzeptiert würde.

In einer bevorzugten Ausgestaltung wird durch das Senden des pseudonymisierten maskierten elektronischen Münzdatensatzes anstelle eines anonymen maskierten elektronischen Münzdatensatzes die Anzahl von Bereichsbestätigungen oder Bereichsnachweisen, welche die Überwachungsinstanz von dem ersten Endgerät anfordert, reduziert.

Die Überwachungsinstanz und/oder das erste Endgerät können die maskierten elektronischen Münzdatensätze in einem anonymen oder in einem pseudonymen Modus verarbeiten. Die Überwachungsinstanz fordert in einem anonymen Modus notwendige und weitere (nachholbare) Bereichsnachweise oder Bereichsbestätigungen an. Im pseudonymen Modus fordert die Überwachungsinstanz zumindest eine der weiteren Bereichsnachweise oder Bereichsbestätigungen nicht an, prüft jedoch für das Pseudonym ob ein (Nachhol-)Kriterium erfüllt ist. Ein Münzdatensatz kann bereits als gültig behandelt werden, wenn die notwendigen Prüfungen erfolgt sind. Erst wenn das (Nachhol-)Kriterium erfüllt ist, werden Bereichsnachweise oder ein Summenbereichsnachweis (bzw. -bestätigung) von dem Endgerät angefordert. Als (Nachhol-)Kriterien können beispielsweise für das Pseudonym ein Zeitraum oder eine Anzahl maskierter Münzdatensätze verwendet werden.

In einer bevorzugten Ausgestaltung empfängt das erste Endgerät eine Anforderung für eine Summenbereichsbestätigung oder eines Summenbereichsnachweises von der Überwachungsinstanz, und sendet die angeforderte Summenbereichsbestätigung oder den angeforderten Summenbereichsnachweis an die Überwachungsinstanz.

In einer alternativen Ausgestaltung erstellt das erste Endgerät eine unaufgeforderte Summenbereichsbestätigung oder einen unaufgeforderten Summenbereichsnachweis, und sendet die unaufgeforderte Summenbereichsbestätigung oder den angeforderten Summenbereichsnachweises an die Überwachungsinstanz.

Eine Summenbereichsbestätigung bzw. ein Summenbereichsnachweis ist dabei eine Angabe des Endgeräts über eine Summe von monetären Beträgen einer Mehrzahl von Münzdatensätzen, bevorzugt direkt zwischen Endgeräten übertragenen Münzdatensätzen. Diese Summenangabe wird in der Überwachungsinstanz mit einer Bereichsangabe abgeglichen. Bei Überschreitung der Bereichsangabe erfolgt ein Deanomyisieren der Münzdatensätze, um das Übertragen großer monetärer Beträge abzusichern bzw. kontrollieren zu können.

Bevorzugt bildet das erste Endgerät dazu eine Summe aus monetären Beträgen mehrerer elektronischer Münzdatensätze bestätigt mit der Summenbereichsbestätigung, dass die gebildete Summe in einem Bereich liegt. Die Summenbereichsbestätigung wird in der Überwachungsinstanz als eine Anzeige des Endgeräts verstanden und das Endgerät wird als vertrauenswürdig eingestuft.

In einer alternativen Ausgestaltung erstellt das erste Endgerät für mehrere elektronische Münzdatensätze einen durch die Überwachungsinstanz überprüfbaren Summenbereichsnachweis. Der Summenbereich wird dann also von der Überwachungsinstanz geprüft und dort erfolgt die Bestätigung, dass die Summe im Bereich liegt (oder nicht).

In einer bevorzugten Ausgestaltung umfassen die mehreren elektronischen Münzdatensätze nur ausgewählte elektronische Münzdatensätze. Somit wird die Summenbereichsbestätigung bzw. der Summenbereichsnachweis nicht für alle Münzdatensätze des Endgeräts durchgeführt, sondern nur für eine gezielte Auswahl. Die Auswahl betrifft in einer Ausgestaltung nur elektronische Münzdatensätze von gesendeten pseudonymisierten maskierten elektronischen Münzdatensätzen. In einer alternativen Ausgestaltung sind nur elektronische Münzdatensätze von gesendeten anonymen maskierten elektronischen Münzdatensätzen oder gesendeten pseudonymisierten maskierten elektronischen Münzdatensätzen betroffen. In einer alternativen Ausgestaltung sind nur elektronische Münzdatensätze von gesendeten anonymen maskierten elektronischen Münzdatensätzen, gesendeten pseudonymisierten maskierten elektronischen Münzdatensätzen und/oder nicht an die Überwachungsinstanz gesendeten maskierten elektronischen Münzdatensätzen betroffen.

In einer bevorzugten Ausgestaltung werden die mehreren elektronischen Münzdatensätze nach einem vorausgewählten Zeitraum als Auswahlkriterium ausgewählt. Als Zeitraum kann ein Tag, eine Woche oder auch ein viel geringerer Zeitraum ausgewählt werden. In einer alternativen oder zusätzlichen Ausgestaltung ist als Auswahlkriterium eine Liste im ersten Endgerät oder der Überwachungsinstanz zu verwenden, anhand derer Liste die Münzdatensätze ausgewählt werden.

In einer bevorzugten Ausgestaltung fordert die Überwachungsinstanz im Rahmen einer Summenprüfung Bereichsbestätigungen oder Bereichsnachweise von Endgeräten an. Vorzugsweise wendet die Überwachungsinstanz für anonyme maskierte elektronische Münzdatensatze einen ersten Summenprüfmodus an. Vorzugsweise wendet die Überwachungsinstanz für pseudonymisierte maskierte elektronische Münzdatensätze einen zweiten Summenprüfmodus an.

In einer bevorzugten Ausgestaltung prüft die Überwachungsinstanz für jeden empfangenen modifizierten Münzdatensatz einen Bereichsnachweis.

In einer bevorzugten Ausgestaltung fordert die Überwachungsinstanz regelmäßig oder quasizufällig Bereichsbestätigungen oder Bereichsnachweise von Endgeräten an. Dies erfolgt beispielsweise in dem ersten Summenprüfmodus.

In einer alternativen oder zusätzlichen Ausgestaltung fordert die Überwachungsinstanz erst ab einer Anzahl von für ein Pseudonym empfangenen Münzdatensätzen von dem Endgerät eine Bereichsbestätigung oder einen Bereichsnachweis an. Dies erfolgt beispielsweise in dem zweiten Summenprüfmodus. Diese Anzahl ist bevorzugt abhängig vom Endgerätetyp und/oder Münzbetragsbereich. Damit können die Bereichsnachweise bzw. Bereichsbestätigungen flexibel auf eine bestimmte Nutzersituation abgestimmt werden und erhöhen so die Sicherheit des Bezahlsystems.

Weiterhin umfasst das Verfahren die nachfolgenden Schritte: Maskieren des übertragenen elektronischen Münzdatensatzes durch Anwenden der beispielsweise homomorphen Einwegfunktion auf den übertragenen elektronischen Münzdatensatz zum Erhalten eines maskierten elektronischen Münzdatensatzes; Verknüpfen des maskierten übertragenen elektronischen Münzdatensatzes im zweiten Endgerät mit einem Pseudonym des zweiten Endgeräts im zweiten Endgerät zum Erhalten eines pseudonymisierten maskierten übertragenen elektronischen Münzdatensatzes; und Senden des pseudonymisierten maskierten übertragenen elektronischen Münzdatensatzes an die Überwachungsinstanz zum Prüfen der Validität des übertragenen elektronischen Münzdatensatzes durch die Überwachungsinstanz.

Die Überwachungsinstanz kann somit auch bei Kenntnis der Zugehörigkeit von Pseudonym und Endgerät die beim Endgerät ausgehenden Transaktionen identifizieren.

Die hier beschriebenen Schritte müssen nicht in der beschriebenen Reihenfolge durchgeführt werden. Die hier beschriebene Reihenfolge ist jedoch eine bevorzugte Ausgestaltung.

Insbesondere kann die Reihenfolge von Verknüpfen-Schritt und Maskieren-Schritt vertauscht werden.

Ausreichend ist prinzipiell das Identifizieren der ausgehenden Transaktionen oder der eingehenden Transaktionen, sodass in einer Ausgestaltung das Maskieren des elektronischen Münzdatensatzes und Verknüpfen des maskierten elektronischen Münzdatensatzes im zweiten Endgerät mit einem Pseudonym des zweiten Endgeräts im zweiten Endgerät und Senden des pseudonymisierten maskierten elektronischen Münzdatensatzes an die Überwachungsinstanz nicht durchgeführt wird.

Der Verknüpfen-Schritt wird bevorzugt durch ein Signieren des jeweiligen maskierten elektronischen Münzdatensatzes im zweiten Endgerät mit einem privaten Signaturschlüssel des zweiten Endgeräts zum Erhalten eines signierten maskierten elektronischen Münzdatensatzes als pseudonymisierter maskierter elektronischer Münzdatensatz oder als pseudonymisierter maskierter übertragener elektronischer Münzdatensatz durchgeführt.

Das Signieren erfolgt mit einem privaten Signaturschlüssel des Endgeräts. Dieser Signaturschlüssel ist bevorzugt endgerätespezifisch, d.h. in Kenntnis des Verifikationsschlüssels kann nachvollzogen werden, wer den Münzdatensatz zuletzt modifiziert (umgeschaltet, aufgeteilt, verbunden) hat. Der signierte maskierte Münzdatensatz wird in der Überwachungsinstanz registriert.

Zum Erzeugen einer Signatur wird demnach bevorzugt ein asymmetrisches Kryptosystem, bei dem das Endgerät mit Hilfe eines geheimen Signaturschlüssels, hier als privater Signaturschlüssel oder "Private Key" bezeichnet, zu einem Datensatz einen Wert berechnet. Dieser Wert ermöglicht es jedem, mit Hilfe eines öffentlichen Verifikationsschlüssels, dem "Public Key", die Urheberschaft und Integrität des Datensatzes zu prüfen.

Bevorzugt wird mit dem Schritt des Registrierens eine Prüfung der Signatur in der Überwachungsinstanz erfolgen, wobei die Überwachungsinstanz dazu den öffentlichen Verifikationsschlüssel der Signatur aufweist. Die Signatur kann nun von der Überwachungsinstanz geprüft werden, indem ein öffentlicher Verifikationsschlüssel der Signatur dort bekannt ist.

Der öffentliche Verifikationsschlüssel zum Prüfen der Signatur ist bevorzugt nur der Überwachungsinstanz bekannt, wodurch das Verfahren für die Teilnehmer (Endgeräte) untereinander weiterhin anonym bleibt.

Bevorzugt registriert die Überwachungsinstanz jegliches Modifizieren, also das Umschalten, Aufteilen und/oder Verbinden zusammen mit der Signatur des zweiten Endgeräts. Auf diese Weise kann eine Überwachung und Bestimmung der Summe von monetären Beträgen für alle Transaktionen eines Endgeräts durch die Überwachungsinstanz erfolgen.

Bevorzugt ist die Signatur innerhalb einer bestimmte Zeiteinheit gültig ist, wobei die bestimmte Zeiteinheit bevorzugt ein Tag ist. Somit kann für diese bestimmte Zeiteinheit das Transaktionsvolumen (=Summe der monetären Beträge bei Transaktionen) pro Endgerät geprüft werden.

Jedes Endgerät hat demnach ein asymmetrisches Schlüsselpaar, um jede Modifikation mit dem privaten Signaturschlüssel zu signieren. Der öffentliche Schlüssel ist der Überwachungsinstanz bekannt. Somit kann die Überwachungsinstanz jede Transaktion mit einer Endgerät als Absender oder Empfänger des Münzdatensatzes verknüpfen.

Der beschriebene Mechanismus ist ausreichend, um zu erfassen (messen), ob die Summe aller monetären Beträge pro Endgerät (=Transaktionen) innerhalb eines Grenzwertes pro Zeiteinheit, beispielsweise einem Tagesgrenzwert, liegt.

Das Aufteilen und anschließende Registrieren hat den Vorteil, dass ein Besitzer des zumindest einen elektronischen Münzdatensatzes nicht gezwungen ist, stets den gesamten monetären Betrag auf einmal zu übertragen, sondern nunmehr entsprechende monetäre Teilbeträge zu bilden und zu übertragen. Der Geldwert kann ohne Einschränkungen asymmetrisch aufgeteilt werden, solange alle elektronische Münzdatenteilsätze einen positiven monetären Betrag aufweisen, der kleiner ist als der monetäre Betrag des elektronische Münzdatensatzes, von dem aus aufgeteilt wird und die Summe der elektronischen Münzteildatensätze gleich dem aufzuteilenden elektronischen Münzteildatensatzes ist. Alternativ oder zusätzlich können feste Denominationen genutzt werden. Die Aufteilung in Teilbeträge ist beliebig, solange alle Teilbeträge gleichgroß sind.

Das Verfahren weist bevorzugt die weiteren folgenden Schritte auf: Umschalten des übertragenen elektronischen Münzteildatensatzes; und/oder Verbinden des übertragenen elektronischen Münzdatensatzes mit einem zweiten elektronischen Münzdatensatz zu einem weiteren elektronischen Münzdatensatz, nämlich verbundenen elektronischen Münzdatensatz.

Beim Umschalten ergibt der vom ersten Endgerät erhaltene elektronische Münzteildatensatz einen neuen elektronischen Münzdatensatz, bevorzugt mit gleichem monetären Betrag, dem sogenannten umzuschaltenden elektronischen Münzdatensatz. Der neue elektronische Münzdatensatz wird vom zweiten Endgerät generiert, vorzugsweise indem der monetäre Betrag des erhaltenen elektronischen Münzdatensatzes als monetärer Betrag des umzuschaltenden elektronischen Münzdatensatzes verwendet wird. Dabei wird ein neuer Verschleierungsbetrag, beispielsweise eine Zufallszahl, generiert. Der neue Verschleierungsbetrag wird beispielsweise zum Verschleierungsbetrag des erhaltenen elektronischen Münzdatensatzes addiert, damit die Summe beider Verschleierungsbeträge (neu und erhalten) als Verschleierungsbetrag des umzuschaltenden elektronischen Münzdatensatzes dient. Nach dem Umschalten wird bevorzugt der erhaltene elektronische Münzteildatensatz und der umzuschaltende elektronische Münzteildatensatz im Endgerät durch Anwenden der beispielsweise homomorphen Einwegfunktion auf jeweils den erhaltenen elektronischen Münzteildatensatz und den umzuschaltenden elektronischen Münzteildatensatz maskiert, um entsprechend einen maskierten erhaltenen elektronischen Münzteildatensatz und einen maskierten umzuschaltenden elektronischen Münzteildatensatz zu erhalten.

Das Umschalten wird also durch Hinzufügen eines neuen Verschleierungsbetrags zum Verschleierungsbetrag des erhaltenen elektronischen Münzdatensatz abgesichert, wodurch ein Verschleierungsbetrag erhalten wird, den nur das zweite Endgerät kennt. Neu geschaffene Verschleierungsbeträge müssen eine hohe Entropie aufweisen, da sie als Blendungsfaktor für die entsprechenden maskierten elektronischen Münzteildatensätze verwendet werden. Bevorzugt wird dazu ein Zufallszahlengenerator auf dem Endgerät verwendet. Diese Absicherung kann in der Überwachungsinstanz nachverfolgt werden.

Im Rahmen des Umschaltens werden bevorzugt zusätzliche Informationen, die zum Registrieren des Umschaltens des maskierten elektronischen Münzdatensatzes in der entfernten Überwachungsinstanz benötigt werden, im Endgerät berechnet. Bevorzugt beinhalten die zusätzlichen Informationen einen Bereichsnachweis über den maskierten umzuschaltenden elektronischen Münzdatensatz und einen Bereichsnachweis über den maskierten erhaltenen elektronischen Münzdatensatz. Bei dem Bereichsnachweis handelt es sich um einen Nachweis, dass der monetäre Betrag des elektronischen Münzdatensatzes nicht negativ ist, der elektronische Münzdatensatz gültig erstellt und/ oder der monetäre Betrag und der Verschleierungsbetrag des elektronischen Münzdatensatzes dem Ersteller des Bereichsnachweises bekannt sind. Insbesondere dient der Bereichsnachweis dazu, diese(n) Nachweis(e) zu führen ohne den monetären Betrag und/oder den Verschleierungsbetrag des maskierten elektronischen Münzdatensatzes zu offenbaren. Diese Bereichsnachweise werden auch "Zero-Knowledge-Range-Proofs" genannt. Bevorzugt werden als Bereichsnachweis Ringsignaturen verwendet. Anschließend erfolgt ein Registrieren des Umschaltens des maskierten elektronischen Münzdatensatzes in der entfernten Überwachungsinstanz.

Der Schritt des Registrierens wird vorzugsweise dann ausgeführt, wenn das zweite Endgerät mit der Überwachungsinstanz verbunden ist. Während die elektronischen Münzdatensätze für direktes Bezahlen zwischen zwei Endgeräten verwendet werden, werden die maskierten Münzdatensätze mit dem Pseudonym in der Überwachungsinstanz registriert.

In einer weiter bevorzugten Ausgestaltung des Verfahrens wird für ein Verbinden von elektronischen Münzteildatensätzen ein weiterer elektronischer Münzdatensatz (verbundener elektronischer Münzdatensatz) aus einem ersten und einem zweiten elektronischen Münzteildatensatz bestimmt. Dabei wird der Verschleierungsbetrag für den zu verbindenden elektronischen Münzdatensatz durch Bilden der Summe aus den jeweiligen Verschleierungsbeträgen des ersten und des zweiten elektronischen Münzdatensatzes berechnet. Weiterhin wird vorzugsweise der monetäre Betrag für den verbundenen elektronischen Münzdatensatz durch Bilden der Summe aus den jeweiligen monetären Beträgen des ersten und des zweiten elektronischen Münzdatensatzes berechnet.

Nach dem Verbinden wird der erste elektronische Münzteildatensatz, der zweite elektronische Münzteildatensatz, sowie der zu verbindende elektronische Münzdatensatz im (ersten und/ oder zweiten) Endgerät durch Anwenden der beispielsweise homomorphen Einwegfunktion auf jeweils den ersten elektronischen Münzteildatensatz, den zweiten elektronischen Münzteildatensatz, sowie den zu verbindenden elektronischen Münzdatensatz maskiert, um entsprechend einen maskierten ersten elektronischen Münzteildatensatz, einen maskierten zweiten elektronischen Münzteildatensatz, sowie einen maskierten zu verbindenden elektronischen Münzdatensatz zu erhalten. Des Weiteren werden zusätzliche Informationen, die zum Registrieren des Verbindens der maskierten elektronischen Münzdatensätze in der entfernten Überwachungsinstanz benötigt werden, im Endgerät berechnet. Bevorzugt beinhalten die zusätzlichen Informationen einen Bereichsnachweis über den maskierten ersten elektronischen Münzteildatensatz und einen Bereichsnachweis über den maskierten zweiten elektronischen Münzteildatensatz. Bei dem Bereichsnachweis handelt es sich um einen Nachweis, dass der monetäre Betrag des elektronischen Münzdatensatzes nicht negativ ist, der elektronische Münzdatensatz gültig erstellt und/ oder der monetäre Betrag und der Verschleierungsbetrag des elektronischen Münzdatensatzes dem Ersteller des Bereichsnachweises bekannt sind. Insbesondere dient der Bereichsnachweis dazu, diese(n) Nachweis zu führen ohne den monetären Wert und/oder den Verschleierungsbetrag des maskierten elektronischen Münzdatensatzes zu offenbaren. Diese Bereichsnachweise werden auch "Zero-Knowledge-Range-Proofs" genannt. Bevorzugt werden als Bereichsnachweis Ringsignaturen verwendet. Anschließend erfolgt ein Registrieren des Verbindens der beiden maskierten elektronischen Münzteildatensätze in der entfernten Überwachungsinstanz.

Durch die Verwendung der Pseudonyme pro Endgerät kann die Überwachungsinstanz nun bevorzugt von jedem Endgerät einen Bereich anfordern, nicht nur, um nachzuweisen, dass für eine einzelne Transaktion der monetäre Betrag zwischen einem gültigen Minimal- und Maximalwert liegt, sondern es ist nun auch möglich, dass eine Summe aller Transaktionen, beispielsweise innerhalb einer Zeiteinheit innerhalb eines vordefinierten Grenzwerts, bevorzugt für diese Zeiteinheit liegt.

Mit dem Schritt des Verbindens können zwei elektronische Münzdatensätze bzw. zwei elektronische Münzteildatensätze zusammengefasst werden. Dabei werden die monetären Beträge sowie auch die Verschleierungsbeträge addiert. Wie beim Aufteilen kann somit auch beim Verbinden eine Validität der beiden ursprünglichen Münzdatensätze durchgeführt werden.

In einer bevorzugten Ausgestaltung umfasst der Registrieren-Schritt das Empfangen des maskierten umzuschaltenden elektronischen Münzteildatensatzes in der Überwachungsinstanz, das Prüfen des maskierten umzuschaltenden elektronischen Münzteildatensatzes auf Validität; und das Registrieren des maskierten umzuschaltenden elektronischen Münzdatensatzes in der Überwachungsinstanz, wenn der Prüfen-Schritt erfolgreich ist, wodurch der umzuschaltende elektronische Münzteildatensatz als überprüft gilt.

Erfindungsgemäß ist zudem auch ein Endgerät, eingerichtet zum direkten Übertragen von elektronischen Münzdatensätzen zwischen Endgeräten aufweisend eine Recheneinheit, eingerichtet zum Ausführen der Schritte des Verfahrens der vorhergehend beschriebenen Art, vorgesehen.

Erfindungsgemäß ist zudem auch eine Überwachungsinstanz, eingerichtet zum direkten Übertragen von elektronischen Münzdatensätzen zwischen Endgeräten aufweisend eine Recheneinheit, eingerichtet zum Ausführen des Verfahrens der vorhergehend beschriebenen Art, vorgesehen.

Erfindungsgemäß ist auch ein zweischichtiges Bezahlsystem aus einer Direktbezahltransaktionsschicht, zum direkten Austauschen von (nicht maskierten) elektronischen Münzdatensätzen und einer Überwachungsschicht, welche auch als "Verschleierter-elektronischer-Datensatz-Ledger" bezeichnet werden kann und in welcher das vorhergehend beschriebene Verfahren durchführbar ist, vorgesehen. Das Bezahlsystem dient zum Austausch von monetären Beträgen. In der Überwachungsinstanz, der Überwachungsschicht, werden keine Bezahltransaktionen festgehalten, sondern ausschließlich maskierte elektronische Münzdatensätze, deren Pseudonyme und deren Modifikationen zum Zweck der Verifizierung der Gültigkeit von (nicht maskierten) elektronischen Münzdatensätzen. So wird die Anonymität der Teilnehmer des Bezahlsystems gewährleistet. Die Überwachungsinstanz gibt Auskunft über gültige und ungültige elektronische Münzdatensätze, um beispielsweise eine Mehrfach-Ausgabe des gleichen elektronischen Münzdatensatzes zu vermeiden oder die Echtheit des elektronischen Münzdatensatzes als gültig herausgegebenes elektronisches Geld zu verifizieren oder die Summe monetärer Beträge pro Endgerät zu erfassen, um diese Summe mit einem Grenzwert zu vergleichen und eine Modifikation entsprechend zu unterbinden oder zu gestatten.

Das Endgerät kann vorliegend ein Sicherheitselement aufweisen, in dem die elektronischen Münzdatensätze sicher abgelegt sind. Ein Sicherheitselement ist bevorzugt ein spezielles Computerprogrammprodukt, insbesondere in Form einer abgesicherten Laufzeitumgebung innerhalb eines Betriebssystems eines Endgeräts, englisch Trusted Execution Environments, TEE, gespeichert auf einem Datenspeicher, beispielsweise eines mobilen Endgeräts, einer Maschine, vorzugsweise Bankautomat. Alternativ ist das Sicherheitselement beispielsweise als spezielle Hardware, insbesondere in Form eines gesicherten Hardware-Plattform-Moduls, englisch Trusted Platform Module, TPM oder als ein eingebettetes Sicherheitsmodul, eUICC, eSIM, ausgebildet. Das Sicherheitselement stellt eine vertrauenswürdige Umgebung bereit.

Die Kommunikation zwischen zwei Endgeräten kann drahtlos oder drahtgebunden, oder z.B. auch auf optischem Weg, bevorzugt über QR-Code oder Barcode, erfolgen und kann als ein gesicherter Kanal ausgebildet sein. Der optische Weg kann beispielsweise die Schritte des Generierens einer optischen Codierung, insbesondere einer 2D-Codierung, vorzugsweise ein QR-Code, und des Einlesens der optischen Codierung umfassen. Somit ist der Austausch des elektronischen Münzdatensatzes beispielsweise durch kryptografische Schlüssel gesichert, beispielsweise einem für einen elektronischen Münzdatensatz-Austausch ausgehandelten Sitzungsschlüssel oder einem symmetrischen oder asymmetrischen Schlüsselpaar.

Durch das Kommunizieren zwischen Endgeräten, beispielsweise über ihre Sicherheitselemente, werden die ausgetauschten elektronischen Münzdatensätze vor Diebstahl oder Manipulation geschützt. Die Ebene der Sicherheitselemente ergänzt so die Sicherheit etablierter Blockchain-Technologie.

In einer bevorzugten Ausgestaltung erfolgt das Übertragen der Münzdatensätze als APDU Kommandos. Dazu ist der Münzdatensatz bevorzugt in einer (embedded) UICC als Sicherheitselement abgelegt und wird dort verwalten. Ein APDU ist ein kombinierter Kommando-/Datenblock eines Verbindungsprotokolls zwischen der UICC und einem Gerät. Die Struktur der APDU ist durch den Standard ISO-7816-4 definiert. APDUs stellen ein Informationselement der Anwendungsebene (Schicht 7 des OSI-Schichtenmodels) dar.

Darüber hinaus ist es vom Vorteil, dass die elektronischen Münzdatensätze in beliebiger Formatierung übertragen werden können. Dies impliziert, dass sie auf beliebigen Kanälen kommuniziert, also übertragen werden können. Sie müssen nicht in einem festgelegten Format oder in einem bestimmten Programm gespeichert werden.

Als ein Endgerät wird insbesondere ein mobiles Telekommunikationsendgerät, beispielsweise ein Smartphone angesehen. Alternativ oder zusätzlich kann das Endgerät auch ein Gerät, wie Wearable, Smartcard, Maschine, Werkzeug, Automat oder auch Behälter bzw. Fahrzeug sein. Ein erfindungsgemäßes Endgerät ist somit entweder stationär oder mobil. Das Endgerät ist vorzugsweise ausgebildet, das Internet und/ oder andere öffentliche oder private Netze zu nutzen. Dazu verwendet das Endgerät eine geeignete Verbindungstechnologie, beispielsweise Bluetooth, Lora, NFC und/ oder WiFi und weist wenigstens eine entsprechende Schnittstelle auf. Das Endgerät kann auch ausgebildet sein, mittels Zugang zu einem Mobilfunknetz mit dem Internet und/ oder anderen Netzen verbunden zu werden.

In einer Ausgestaltung kann vorgesehen sein, dass das erste und/ oder zweite Endgerät bei dem aufgezeigten Verfahren die empfangenen elektronischen Münzdatensätze bei Vorliegen oder Empfang mehrerer elektronischer Münzdatensätze diese entsprechend ihrer monetären Wertigkeit abarbeitet. So kann vorgesehen sein, dass elektronische Münzdatensätze mit höherer monetärer Wertigkeit vor elektronische Münzdatensätze mit niedriger monetärer Wertigkeit verarbeitet. In einer Ausgestaltung kann das erste und/ oder zweite Endgerät ausgebildet sein, nach Empfang eines elektronischen Münzdatensatzes diesen in Abhängigkeit von beigefügter Information, beispielsweise einer Währung oder Denomination, mit bereits im zweiten Endgerät vorhandenem elektronischen Münzdatensatz zu verbinden und entsprechend einen Schritt des Verbindens auszuführen. Weiterhin kann das zweite Endgerät auch zum automatisierten Ausführen eines Umschaltens nach Empfang des elektronischen Münzdatensatzes vom ersten Endgerät ausgebildet sein.

In einer Ausgestaltung werden beim Übertragen weitere Informationen, insbesondere Metadaten, vom ersten Endgerät auf das zweite Endgerät übermittelt, beispielsweise eine Währung. Diese Information kann in einer Ausgestaltung vom elektronischen Münzdatensatz umfasst sein.

In einer bevorzugten Ausgestaltung ist die Überwachungsinstanz eine entfernte Instanz. Damit ist beispielsweise zum Registrieren des elektronischen Münzdatensatzes der Aufbau einer Kommunikationsverbindung zu der Überwachungsinstanz vorgesehen. Diese Kommunikationsverbindung muss nunmehr nicht zwangsläufig während des Bezahlvorgangs vorhanden sein. Stattdessen kann das sendende (erste) Endgerät das Aufteilen und/oder Verbinden und/oder Umschalten auch an das empfangene (zweite) Endgerät delegieren.

Die Überwachungsinstanz ist als übergeordnete Instanz ausgebildet. Die Überwachungsinstanz ist demnach nicht zwingend in der Ebene bzw. in der Schicht der Endgeräten (Direkttransaktionsschicht) angeordnet. Vorzugsweise ist die Überwachungsinstanz zur Verwaltung und Prüfung von maskierten elektronischen Münzdatensätzen vorgesehen und einer Herausgeberschicht, in welcher auch eine Herausgeberinstanz angeordnet ist, und/ oder einer Überwachungsschicht angeordnet. Es ist denkbar, dass die Überwachungsinstanz zusätzlich Transaktionen zwischen Endgeräten verwaltet und prüft.

Die Überwachungsinstanz ist bevorzugt eine dezentral gesteuerte Datenbank, englisch Distributed Ledger Technology, DLT, in der die maskierten elektronischen Münzdatensätze mit entsprechender Verarbeitung des maskierten elektronischen Münzdatensatzes registriert sind. In einer bevorzugten Ausgestaltung lässt sich daraus ein Gültigkeitsstatus des (maskierten) elektronischen Münzdatensatzes ableiten. Bevorzugt wird die Gültigkeit der (maskierten) elektronischen Münzdatensätze in der und durch die Überwachungsinstanz vermerkt. Die Registrierung der Verarbeitung bzw. der Verarbeitungsschritte kann auch das Registrieren von Prüfergebnissen und Zwischenprüfergebnissen betreffend die Gültigkeit eines elektronischen Münzdatensatzes betreffen. Ist eine Verarbeitung endgültig, wird dies beispielsweise durch entsprechende Markierungen oder einer abgeleiteten Gesamtmarkierung angezeigt. Eine endgültige Verarbeitung entscheidet sodann, ob ein elektronischer Münzdatensatz gültig oder ungültig ist. Auf diese Weise kann das Überschreiten eines Transaktionsvolumens dazu führen, dass eine Modifikation für ungültig erklärt wird.

Diese Datenbank ist weiter bevorzugt eine nicht-öffentliche Datenbank, kann aber auch als öffentliche Datenbank realisiert werden. Diese Datenbank ermöglicht es auf einfache Weise, Münzdatensätze bezüglich ihrer Gültigkeit zu prüfen und "Double-Spending", also Mehrfachausgaben, zu verhindern, ohne dass die Bezahltranskation selbst registriert oder protokolliert wird. Die DLT beschreibt dabei eine Technik für vernetzte Computer, die zu einer Übereinkunft über die Reihenfolge von bestimmten Transaktionen kommen und darüber, dass diese Transaktionen Daten aktualisieren. Es entspricht einem dezentral geführten Verwaltungssystem oder einer dezentral geführten Datenbank.

In einer weiteren Ausgestaltung kann die Datenbank auch als öffentliche Datenbank ausgebildet sein.

Alternativ ist die Überwachungsinstanz eine zentral geführte Datenbank, beispielsweise in Form eines öffentlich zugänglichen Datenspeichers oder als Mischform aus zentraler und dezentraler Datenbank.

Bevorzugt wird der zumindest eine initiale elektronische Münzdatensatz ausschließlich von der Herausgeberinstanz erstellt, wobei vorzugsweise die aufgeteilten elektronischen Münzdatensätze, insbesondere elektronischen Münzteildatensätze, auch durch ein Endgerät generiert werden können. Das Erstellen und das Wählen eines monetären Betrags beinhalten bevorzugt auch das Wählen eines Verschleierungsbetrags mit hoher Entropie. Die Herausgeberinstanz ist ein Rechensystem, welches bevorzugt entfernt vom ersten und/ oder zweiten Endgerät ist. Nach dem Erstellen des neuen elektronischen Münzdatensatzes wird der neue elektronische Münzdatensatz in der Herausgeberinstanz durch Anwenden der beispielsweise homomorphen Einwegfunktion auf den neuen elektronischen Münzdatensatz maskiert, um entsprechend einen maskierten neuen elektronischen Münzdatensatz zu erhalten. Des Weiteren werden zusätzliche Informationen, die zum Registrieren des Erstellens des maskierten neuen elektronischen Münzdatensatzes in der entfernten Überwachungsinstanz benötigt werden, im der Herausgeberinstanz berechnet. Bevorzugt sind diese weiteren Informationen ein Nachweis, dass der (maskierte) neue elektronische Münzdatensatz von der Herausgeberinstanz stammt, beispielsweise durch eine signieren des maskierten neuen elektronischen Münzdatensatzes. In einer Ausgestaltung kann vorgesehen sein, dass die Herausgeberinstanz einen maskierten elektronischen Münzdatensatz beim Erzeugen des elektronischen Münzdatensatzes mit ihrer Signatur signiert. Die Signatur der Herausgeberinstanz wird dazu in der Überwachungsinstanz hinterlegt. Die Signatur der Herausgeberinstanz ist von der erzeugten Signatur des ersten Endgeräts verschieden.

Bevorzugt kann die Herausgeberinstanz einen elektronischen Münzdatensatz, der sich in ihrem Besitz befindet (also von dem sie den monetären Betrag und den Verschleierungsbetrag kennt) deaktivieren, indem sie den maskierten zu deaktivierenden elektronischen Münzdatensatz mit der beispielsweise homomorphen Einwegfunktion maskiert und einen Deaktivieren-Befehl für die Überwachungsinstanz vorbereitet. Teil des Deaktivieren-Befehls ist bevorzugt neben dem maskierten zu deaktivierenden elektronischen Münzdatensatzes auch der Nachweis, dass der Deaktivieren Schritt von der Herausgeberinstanz initiiert wurde, beispielsweise in Form des signierten maskierten zu deaktivierenden elektronischen Münzdatensatzes. Als zusätzliche Information könnten im Deaktivieren-Befehl Bereichsprüfungen für den maskierten zu deaktivierenden elektronischen Münzdatensatz enthalten sein. Anschließend erfolgt ein Registrieren des Deaktivierens des maskierten elektronischen Münzdatensatzes in der entfernten Überwachungsinstanz. Mit dem Deaktivieren-Befehl wird der Schritt des Deaktivierens ausgelöst.

Die Schritte Erstellen und Deaktivieren erfolgen bevorzugt an gesicherten Orten, insbesondere nicht in den Endgeräten. In einer bevorzugten Ausgestaltung werden die Schritte des Erstellens und Deaktivierens nur von der Herausgeberinstanz durchgeführt bzw. angestoßen. Vorzugsweise finden diese Schritte an einen gesicherten Ort statt, beispielsweise in einer Hard- und Software-Architektur, die zur Verarbeitung von sensiblem Datenmaterial in unsicheren Netzen entwickelt wurde. Das Deaktivierendes entsprechenden maskierten elektronischen Münzdatensatz bewirkt, dass der entsprechende maskierte elektronische Münzdatensatz nicht mehr für weitere Verarbeitung, insbesondere Transaktionen, verfügbar ist, da er in und von der Überwachungsinstanz als ungültig markiert wurde. Jedoch kann in einer Ausführungsform vorgesehen sein, dass der deaktivierte maskierte elektronische Münzdatensatz bei der Herausgeberinstanz archivarisch bestehen bleibt. Dass der deaktivierte maskierte elektronische Münzdatensatz nicht mehr gültig ist, kann beispielsweise mithilfe eines Flags oder einer anderen Codierung gekennzeichnet oder der deaktivierte maskierte elektronische Münzdatensatz kann zerstört und/ oder gelöscht werden. Selbstverständlich kann der deaktivierte maskierte elektronische Münzdatensatz auch physisch vom Endgerät entfernt werden.

Durch das erfindungsgemäße Verfahren werden verschiedene Verarbeitungsoperationen (Modifikationen) für die elektronischen Münzdatensätze und die entsprechenden maskierten elektronischen Münzdatensätze ermöglicht. Jeder der Verarbeitungsoperationen (insbesondere das Erstellen, Deaktivieren, Aufteilen, Verbinden und Umschalten) wird dabei in der Überwachungsinstanz registriert und dort in unveränderlicher Form an die Liste der vorherigen Verarbeitungsoperationen für den jeweiligen maskierten elektronischen Münzdatensatz angehängt. Die Registrierung ist dabei vom Bezahlvorgang zwischen den Endgeräten sowohl zeitlich als auch örtlich (räumlich) unabhängig. Die Verarbeitungsoperationen "Erstellen" und "Deaktivieren", die die Existenz des monetären Betrags an sich betreffen, also die Schaffung und die Vernichtung bis hin der Zerstörung von Geld bedeuten, bedürfen einer zusätzlichen Genehmigung , beispielsweise in Form einer Signatur, durch die Herausgeberinstanz, um in der Überwachungsinstanz registriert (also protokolliert) zu werden. Die übrigen Verarbeitungsoperationen (Aufteilen, Verbinden, Umschalten), von denen das Aufteilen und das Verbinden auch von einem Endgerät auch an ein weiteres Endgerät delegiert werden können, bedürfen keiner Autorisierung durch die Herausgeberinstanz oder durch den Befehlsinitiator (= Zahler, bspw. das erste Endgerät).

Eine Verarbeitung in der Direkttransaktionsschicht betrifft nur die Besitzverhältnisse und/ oder die Zuordnung der Münzdatensätze zu Endgeräten der jeweiligen elektronischen Münzdatensätze. Eine Registrierung der jeweiligen Verarbeitung in der Überwachungsinstanz wird beispielsweise durch entsprechende Listeneinträge in einer Datenbank realisiert, die eine Reihe von Markierungen umfasst, die von der Überwachungsinstanz durchgeführt werden müssen. Eine mögliche Struktur für einen Listeneintrag umfasst beispielsweise Spalte(n) für einen Vorgänger-Münzdatensatz, Spalte(n) für einen Nachfolger-Münzdatensatz, eine Signatur-Spalte für die Herausgeberinstanz, eine Signatur-Spalte für das sendende und/oder empfangende Endgerät, eine Signatur-Spalte für Münzteilungsvorgänge und zumindest eine Markierungsspalte. Eine Änderung des Status der Markierung bedarf der Genehmigung durch die Überwachungsinstanz und muss sodann unveränderlich gespeichert werden. Eine Änderung ist endgültig, wenn und nur wenn die erforderlichen Markierungen durch die Überwachungsinstanz validiert wurden, d.h. nach der entsprechenden Prüfung beispielsweise vom Status "0" in den Status "1" gewechselt wurden. Scheitert eine Prüfung oder dauert zu lang, so wird sie stattdessen beispielsweise vom Status "-" in den Status "0" gewechselt. Weitere Statuswerte sind denkbar und/oder die hier genannten Statuswerte sind austauschbar. Bevorzugt wird die Gültigkeit der jeweiligen (maskierten) elektronischen Münzdatensätze aus den Statuswerten der Markierungen zusammengefasst jeweils in einer Spalte für jeden maskierten elektronischen Münzdatensatz, der im Registrieren der Verarbeitung involviert ist, dargestellt.

In einem weiteren Ausführungsbeispiel können wenigstens zwei vorzugsweise drei oder sogar alle der vorhergenannten Markierungen auch durch eine einzige Markierung ersetzt werden, die dann gesetzt wird, wenn alle Prüfungen erfolgreich abgeschlossen wurden. Des Weiteren lassen sich die je zwei Spalten für Vorgänger-Datensätze und Nachfolger-Datensätze zu jeweils einem zusammenfassen, in welchem alle Münzdatensätze gemeinsam ausgelistet sind. Dadurch könnten dann auch mehr als zwei elektronische Münzdatensätze je Feldeintrag verwaltet werden, und somit z.B. eine Aufspaltung in mehr als zwei Münzdatensätze realisiert werden.

Die Prüfungen durch die Überwachungsinstanz, um zu prüfen, ob eine Verarbeitung endgültig ist sind bereits oben beschrieben und sind insbesondere:

- Sind die maskierten elektronischen Münzdatensätze der Vorgänger-Spalte(n) gültig?
- Ergibt eine Überwachung den korrekten Prüfwert?
- Sind die Bereichsnachweise für die maskierten elektronischen Münzdatensätze erfolgreich?
- Ist die Signatur des maskierten elektronischen Münzdatensatzes eine gültige Signatur der Herausgeberinstanz?
- Überschreitet das sendende/empfangende Endgerät (Pseudonym) einen Grenzwert für einen maximal zulässigen monetären Betrag, insbesondere pro Zeiteinheit?

Bevorzugt gilt zudem, dass ein maskierter elektronischer Münzdatensatz ungültig ist, wenn einer der folgenden Prüfungen zutrifft, also wenn:

(1) der maskierte elektronische Münzdatensatz nicht in der Überwachungsinstanz registriert ist;
(2) die letzte Verarbeitung des maskierten elektronischen Münzdatensatzes angibt, dass es für ihn Vorgänger-Münzdatensätze gibt, diese letzte Verarbeitung aber nicht endgültig ist; oder
(3) die letzte Verarbeitung des maskierten elektronischen Münzdatensatzes angibt, dass es für ihn Nachfolger-Münzdatensätze gibt und diese letzte Verarbeitung endgültig ist;
(4) der maskierte elektronische Münzdatensatz nicht der Nachfolger von einem gültigen maskierten elektronischen Datensatz ist, es sei denn er ist von der Herausgeberinstanz signiert;
(5) der monetäre Betrag des maskierten elektronischen Münzdatensatzes dazu führt, dass ein Grenzwert für einen maximal zulässigen monetären Betrag, insbesondere pro Zeiteinheit, überschritten wird und die geforderte Deanonymisierung vom entsprechenden Endgerät abgelehnt wird.

In einem Aspekt der Erfindung ist ein Bezahlsystem zum Austausch von monetären Beträgen vorgesehen mit einer Überwachungsschicht mit einer bevorzugt dezentral gesteuerten Datenbank, englisch Distributed Ledger Technology, DLT, in der maskierte elektronische Münzdatensätze abgelegt sind; und einer Direkttransaktionsschicht mit zumindest zwei Endgeräten, in welche das vorhergehend beschriebene Verfahren durchführbar ist; und/oder eine Herausgeberinstanz zum Erzeugen eines elektronischen Münzdatensatzes. Dabei kann die Herausgeberinstanz nachweisen, dass der maskierte erzeugte elektronische Münzdatensatz von ihr erzeugt wurde, bevorzugt kann sich die Herausgeberinstanz durch das Signieren ausweisen und die Überwachungsinstanz kann die Signatur der Herausgeberinstanz prüfen.

In einer bevorzugten Ausgestaltung umfasst das Bezahlsystem eine Herausgeberinstanz zum Erzeugen eines elektronischen Münzdatensatzes. Dabei kann die Herausgeberinstanz nachweisen, dass der maskierte erzeugte elektronische Münzdatensatz von ihr erzeugt wurde, bevorzugt kann sich die Herausgeberinstanz durch das Signieren ausweisen und die Überwachungsinstanz kann die Signatur der Herausgeberinstanz prüfen.

Bevorzugt ist das Bezahlsystem zum Durchführen des oben genannten Verfahrens und/ oder wenigstens einer der Ausführungsvarianten ausgebildet.

Ein weiterer Aspekt der Erfindung betrifft ein Währungssystem umfassend eine Herausgeberinstanz, eine Überwachungsinstanz, ein erstes Endgerät und ein zweites Endgerät, wobei die Herausgeberinstanz ausgebildet ist, einen elektronischen Münzdatensatzes zu erstellen. Der maskierte elektronische Münzdatensatz ist ausgebildet, nachweisbar durch die Herausgeberinstanz erstellt zu sein. Die Überwachungsinstanz ist zum Ausführen eines Registrierschritts wie in dem oben genannten Verfahren ausgeführt, ausgebildet Vorzugsweise sind die Endgeräte, d.h. wenigstens das erste und zweite Endgerät zum Ausführen eines des oben genannten Verfahrens zum Übertragen geeignet.

In einer bevorzugten Ausführung des Währungssystems ist lediglich die Herausgeberinstanz berechtigt, einen elektronischen Münzdatensatz initial zu erstellen. Eine Verarbeitung, beispielsweise der Schritt des Verbindens, des Aufteilens und/ oder des Umschaltens, kann und wird vorzugsweise durch ein Endgerät durchgeführt. Der Verarbeitungsschritt des Deaktivierens kann vorzugsweise nur von der Herausgeberinstanz ausgeführt werden. Somit wäre lediglich die Herausgeberinstanz berechtigt, den elektronischen Münzdatensatzes und/ oder den maskierten elektronischen Münzdatensatz zu invalidieren.

Bevorzugt sind die Überwachungsinstanz und die Herausgeberinstanz in einer Serverinstanz angeordnet oder liegen als Computerprogrammprodukt auf einem Server und/ oder einem Computer vor.

Ein elektronischer Münzdatensatz kann dabei in einer Vielzahl von unterschiedlichen Erscheinungsformen vorliegen und damit über verschiedene Kommunikationskanäle, nachfolgend auch Schnittstellen genannt, ausgetauscht werden. Ein sehr flexibler Austausch von elektronischen Münzdatensätzen ist damit geschaffen.

Der elektronische Münzdatensatz ist beispielsweise in Form einer Datei darstellbar. Eine Datei besteht dabei aus inhaltlich zusammengehörigen Daten, die auf einem Datenträger, Datenspeicher oder Speichermedium gespeichert sind. Jede Datei ist zunächst eine eindimensionale Aneinanderreihung von Bits, die normalerweise in Byte-Blöcken zusammengefasst interpretiert werden. Ein Anwendungsprogramm (Applikation) oder ein Betriebssystem selbst interpretieren diese Bit- oder Bytefolge beispielsweise als einen Text, ein Bild oder eine Tonaufzeichnung. Das dabei verwendete Dateiformat kann unterschiedlich sein, beispielsweise kann es eine reine Textdatei sein, die den elektronischen Münzdatensatz repräsentiert. Dabei werden insbesondere der monetäre Betrag und die blinde Signatur als Datei abgebildet.

Der elektronische Münzdatensatz ist beispielsweise eine Folge von American Standard Code for Information Interchange, kurz ASCII, Zeichen. Dabei werden insbesondere der monetäre Betrag und die blinde Signatur als diese Folge abgebildet.

Der elektronische Münzdatensatz kann in einem Gerät auch von einer Darstellungsform in eine andere Darstellungsform umgewandelt werden. So kann beispielsweise der elektronische Münzdatensatz als QR-Code im Gerät empfangen werden und als Datei oder Zeichenfolge vom Gerät ausgegeben werden.

Diese unterschiedlichen Darstellungsformen von ein und demselben elektronischen Münzdatensatz ermöglichen einen sehr flexiblen Austausch zwischen Geräten unterschiedlicher technischer Ausrüstung unter Verwendung unterschiedlicher Übertragungsmedien (Luft, Papier, drahtgebunden) und unter Berücksichtigung der technischen Ausgestaltung eines Geräts. Die Wahl der Darstellungsform der elektronischen Münzdatensätze erfolgt bevorzugt automatisch, beispielsweise aufgrund erkannter oder ausgehandelter Übertragungsmedien und Gerätekomponenten. Zusätzlich kann auch ein Benutzer eines Gerät die Darstellungsform zum Austausch (=Übertragen) eines elektronischen Münzdatensatzes wählen.

In einem Aspekt der Erfindung wird die Aufgabe durch ein Gerät gelöst, das zum direkten Übertragen von elektronischen Münzdatensätzen an ein anderes Gerät eingerichtet ist. Das Gerät umfasst Mittel zum Zugreifen auf einen Datenspeicher, wobei im Datenspeicher zumindest ein elektronischer Münzdatensatz abgelegt ist; eine Schnittstelle zumindest zum Ausgaben des zumindest einen elektronischen Münzdatensatzes an das andere Gerät; und eine Recheneinheit, die zum Maskieren des elektronischen Münzdatensatzes im Gerät durch Anwenden einer Verschlüsselungsfunktion, beispielsweise einer homomorphen Verschlüsselungsfunktion als Einwegfunktion, auf den elektronischen Münzdatensatz zum Erhalten eines maskierten elektronischen Münzdatensatzes; zum Verknüpfen des maskierten elektronischen Münzdatensatzes mit einem Pseudonym zum Erhalt eines pseudonymisierten maskierten elektronischen Münzdatensatz; und zum Registrieren des maskierten elektronischen Münzdatensatzes in einer Überwachungsinstanz; und zum Ausgeben des elektronischen Münzdatensatzes mittels der Schnittstelle eingerichtet ist.

Ein Gerät ist dabei ein zuvor beschriebenes Endgerät bzw. eine zuvor beschriebene Maschine.

In einem einfachen Fall ist der Datenspeicher ein interner Datenspeicher des Geräts. Hier werden die elektronischen Münzdatensätze abgelegt. Ein einfacher Zugriff auf elektronische Münzdatensätze ist somit gewährleistet.

Der Datenspeicher ist insbesondere ein externer Datenspeicher, auch Online-Speicher genannt. Somit weist das Gerät nur ein Zugriffsmittel auf die extern und damit sicher abgelegten Münzdatensätze auf. Insbesondere bei einem Verlust des Geräts oder bei Fehlfunktionen des Geräts sind die elektronischen Münzdatensätze nicht verloren. Da der Besitz der (nicht maskierten) elektronischen Münzdatensätze gleich dem Besitz des monetären Betrags entspricht, kann durch Verwendung externer Datenspeicher Geld sicherer aufbewahrt werden.

Ist die Überwachungsinstanz eine entfernte Überwachungsinstanz, so verfügt das Gerät bevorzugt über eine Schnittstelle zur Kommunikation mittels einem üblichen Internet-Kommunikationsprotokoll, beispielsweise TCP, IP, UDP oder HTTP. Die Übertragung kann eine Kommunikation über das Mobilfunknetz beinhalten.

In einer bevorzugten Ausgestaltung ist das Gerät dazu eingerichtet, die bereits beschriebenen Verarbeitungen, insbesondere das Aufteilen, Verbinden und Umschalten an einem elektronischen Münzdatensatz durchzuführen. Dazu ist die Recheneinheit dazu eingerichtet, einen umzuschaltenden elektronischen Münzdatensatz als den elektronischen Münzdatensatz zu maskieren und mit einem Pseudonym zu verknüpfen, den die Überwachungsinstanz als maskierten elektronischen Münzdatensatz zum Registrieren des Umschalten-Befehls bzw. im Umschalten-Schritt braucht. Auf diese Weise kann ein elektronischer Münzdatensatz - wie oben beschrieben - umgeschaltet werden.

Zudem oder alternativ ist die Recheneinheit bevorzugt eingerichtet, einen in eine Anzahl von Münzteildatensätzen aufgeteilten elektronischen Münzdatensatz zu maskieren und mit einem Pseudonym zu verknüpfen, um einen maskierten elektronischen Münzdatensatz und ggf. maskierte elektronischen Münzteildatensätze zu erhalten, die in der Überwachungsinstanz registriert werden können. Auf diese Weise kann ein elektronischer Münzdatensatz - wie oben beschrieben - aufgeteilt werden.

Zudem oder alternativ ist die Recheneinheit bevorzugt eingerichtet, einen aus einem ersten und einem zweiten elektronischen Münzdatensatz zu verbindenden elektronischen Münzteildatensatzes als den elektronischen Münzdatensatz zu maskieren und mit einem Pseudonym zu verknüpfen, um einen maskierten zu verbindenden Münzdatensatzes als den maskierten elektronischen Münzdatensatz zu erhalten, der in der Überwachungsinstanz registriert wird. Auf diese Weise kann ein elektronischer Münzdatensatz - wie oben beschrieben - verbunden werden.

In einer bevorzugten Ausgestaltung ist die Schnittstelle zum Ausgeben des zumindest einen elektronischen Münzdatensatzes eine elektronische Anzeigeeinheit des Geräts, die zum Anzeigen des elektronischen Münzdatensatzes und dadurch (auch) zum Ausgeben des elektronischen Münzdatensatzes in visueller Form eingerichtet ist. Wie bereits beschrieben wurde, ist der elektronische Münzdatensatz dann beispielsweise in Form eines optoelektronisch erfassbaren Codes, einem Bild, etc. zwischen Geräten austauschbar.

In einer bevorzugten Ausgestaltung ist die Schnittstelle zum Ausgeben des zumindest einen elektronischen Münzdatensatzes eine Protokollschnittstelle zum drahtlosen Senden des elektronischen Münzdatensatzes an das andere Gerät mittels eines Kommunikationsprotokolls für Drahtloskommunikation. Dabei ist insbesondere eine Nahfeldkommunikation, beispielsweise mittels Bluetooth-Protokoll oder NFC-Protokoll oder IR-Protokoll vorgesehen, alternativ oder zusätzlich sind WLAN Verbindungen oder Mobilfunkverbindungen denkbar. Der elektronische Münzdatensatz wird dann gemäß den Protokolleigenschaften angepasst und übertragen.

In einer bevorzugten Ausgestaltung ist die Schnittstelle zum Ausgeben des zumindest einen elektronischen Münzdatensatzes eine Datenschnittstelle zum Bereitstellen des elektronischen Münzdatensatzes an das andere Gerät mittels einer Applikation. Im Unterschied zur Protokollschnittstelle wird hier der elektronische Münzdatensatz mittels einer Applikation übertragen. Diese Applikation überträgt sodann den Münzdatensatz in einem entsprechenden Dateiformat. Es kann ein für elektronische Münzdatensätze spezifisches Dateiformat verwendet werden. In einfachster Form wird der Münzdatensatz als ASCII-Zeichenfolge oder als Textnachricht, beispielsweise SMS, MMS, Instant-Messenger-Nachricht (wie Threema oder WhatsApp) übertragen. In einer alternativen Form wird der Münzdatensatz als APDU-Zeichenfolge übertragen. Es kann auch eine Geldbörsen-Applikation vorgesehen sein. Hierbei stellen die austauschenden Geräte bevorzugt sicher, dass ein Austausch mittels der Applikation möglich ist, also dass beide Geräte die Applikation aufweisen und austauschbereit sind.

In einer bevorzugten Ausgestaltung weist das Gerät weiter eine Schnittstelle zum Empfangen von elektronischen Münzdatensätzen auf.

In einer bevorzugten Ausgestaltung ist die Schnittstelle zum Empfangen des zumindest einen elektronischen Münzdatensatzes ein elektronisches Erfassungsmodul des Geräts, eingerichtet zum Erfassen eines, in visueller Form dargestellten elektronischen Münzdatensatzes. Das Erfassungsmodul ist dann beispielsweise eine Kamera oder ein Barcode bzw. QR-Code Scanner.

In einer bevorzugten Ausgestaltung ist die Schnittstelle zum Empfangen des zumindest einen elektronischen Münzdatensatzes eine Protokollschnittstelle zum drahtlosen Empfangen des elektronischen Münzdatensatzes von einem anderen Gerät mittels eines Kommunikationsprotokolls für Drahtloskommunikation. Dabei ist insbesondere eine Nahfeldkommunikation, beispielsweise mittels Bluetooth-Protokoll oder NFC-Protokoll oder IR-Protokoll, vorgesehen. Alternativ oder zusätzlich sind WLAN Verbindungen oder Mobilfunkverbindungen denkbar.

In einer bevorzugten Ausgestaltung ist die Schnittstelle zum Empfangen des zumindest einen elektronischen Münzdatensatzes eine Datenschnittstelle zum Empfangen des elektronischen Münzdatensatzes von dem anderen Gerät mittels einer Applikation. Diese Applikation empfängt sodann den Münzdatensatz in einem entsprechenden Dateiformat. Es kann ein für Münzdatensätze spezifisches Dateiformat verwendet werden. In einfachster Form wird der Münzdatensatz als ASCII-Zeichenfolge oder als Textnachricht, beispielsweise SMS, MMS, Threema oder WhatsApp übertragen. In einer alternativen Form wird der Münzdatensatz als APDU-Zeichenfolge übertragen. Zusätzlich kann die Übertragung mittels einer Geldbörsen-Applikation erfolgen.

In einer bevorzugten Ausgestaltung ist die Schnittstelle zum Empfangen des zumindest einen elektronischen Münzdatensatzes auch die Schnittstelle zum Ausgeben des elektronischen Münzdatensatzes, sodass eine Schnittstelle sowohl zum Senden als auch zum Empfangen des Münzdatensatzes vorgesehen ist.

In einer bevorzugten Ausgestaltung umfassend das Gerät zumindest ein Sicherheitselement-Lesegerät, eingerichtet zum Lesen eines Sicherheitselements; einen Zufallszahlengenerator; und/oder eine Kommunikationsschnittstelle zu einem Tresormodul und/ oder Bankinstitut mit zu autorisierendem Zugriff auf ein Bankkonto.

In einer bevorzugten Ausgestaltung ist der Datenspeicher ein gemeinsamer Datenspeicher, auf den zumindest noch ein anderes Gerät zugreifen kann, wobei jedes der Endgeräte eine Applikation aufweist, wobei diese Applikation zum Kommunizieren mit der Überwachungsinstanz zum entsprechenden Registrieren von elektronischen Münzteildatensätzen eingerichtet ist.

Vorgeschlagen wird hierbei also eine Lösung, die digitales Geld in Form von elektronischen Münzdatensätzen herausgibt, die an die Verwendung von konventionellen (analogen) Banknoten und/oder Münzen angelehnt ist. Das digitale Geld wird hierbei durch elektronische Münzdatensätze abgebildet. Wie bei (analogen) Banknoten werden auch diese elektronischen Münzdatensätze für alle Formen von Zahlungen, einschließlich Peer-to-Peer-Zahlungen und/oder POS-Zahlungen, verwendbar. Die Kenntnis aller Bestandteile (insbesondere monetärer Betrag und Verschleierungsbetrag) eines gültigen elektronischen Münzdatensatzes ist gleichbedeutend mit dem Besitz (Eigentum) des digitalen Geldes. Es ist daher ratsam, diese gültigen elektronischen Münzdatensätze vertraulich zu behandeln, also beispielsweise in einem Sicherheitselement/ Tresormodul eines Endgeräts aufzubewahren und dort zu verarbeiten. Um über die Authentizität eines elektronischen Münzdatensatzes zu entscheiden und Doppelausgaben zu verhindern, werden in der Überwachungsinstanz maskierte elektronische Münzdatensätze als einzigartige, korrespondierende öffentliche Darstellung des elektronischen Münzdatensatzes vorgehalten. Die Kenntnis oder der Besitz eines maskierten elektronischen Münzdatensatzes stellt nicht den Besitz von Geld dar. Vielmehr gleicht dies dem Überprüfen der Echtheit des analogen Zahlungsmittels.

Die Überwachungsinstanz enthält auch Markierungen über durchgeführte und geplante Verarbeitungen des maskierten elektronischen Münzdatensatzes. Aus den Markierungen zu den Verarbeitungen wird ein Status des jeweiligen maskierten elektronischen Münzdatensatzes abgeleitet, der angibt, ob der entsprechende (nicht maskierte) elektronische Münzdatensatz gültig, d.h. zahlungsbereit ist. Daher wird ein Empfänger eines elektronischen Münzdatensatzes zunächst einen maskierten elektronischen Münzdatensatz erzeugen und sich durch die Überwachungsinstanz die Gültigkeit der maskierten elektronischen Münzdatensatz authentifizieren lassen. Ein großer Vorteil dieser erfindungsgemäßen Lösung ist, dass das digitale Geld auf Endgeräte, Händler, Banken und andere Nutzer des Systems verteilt wird, aber kein digitales Geld oder weitere Metadaten bei der Überwachungsinstanz - also einer gemeinsamen Instanz - gespeichert wird.

Die vorgeschlagene Lösung kann in bestehende Zahlsysteme und Infrastrukturen eingebunden werden. Insbesondere können eine Kombination aus analogen Zahlungsvorgängen mit Geldscheinen und Münzen und digitale Zahlungsvorgänge gemäß der vorliegenden Lösung vorliegen. So kann ein Bezahlvorgang mit Banknoten und/ oder Münzen erfolgen, das Wechselgeld bzw. Rückgeld liegt aber als elektronischer Münzdatensatz vor. Zur Transaktion können beispielsweise ATMs mit entsprechender Konfiguration, insbesondere mit geeigneter Kommunikationsschnittstelle, und/ oder mobile Endgeräte vorgesehen sein. Weiterhin ist ein Umtausch von elektronischem Münzdatensatz in Banknoten bzw. Münzen denkbar.

Die vorliegend aufgeführten Schritte des Erstellens, Umschaltens, Aufteilens, Verbindens und Deaktivierens werden jeweils durch einen entsprechenden Erstell-, Umschalt-, Aufteil-, Verbinden- bzw. Deaktivier-Befehl ausgelöst.

## KURZE ZUSAMMENFASSUNG DER FIGUREN

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Es zeigen:

Fig.1 ein Ausführungsbeispiel eines Bezahlsystems gemäß der Erfindung;

Fig.2 ein Ausführungsbeispiel einer Überwachungsinstanz;

Fig.3 ein Ausführungsbeispiel eines Bezahlsystems gemäß der Erfindung zum Aufteilen und Umschalten von elektronischen Münzdatensätzen;

Fig.4 ein Ausführungsbeispiel eines Bezahlsystems gemäß der Erfindung zum Verbinden von elektronischen Münzdatensätzen;

Fig.5 ein Ausführungsbeispiel eines Verfahrensablaufdiagramms eines erfindungsgemäßen Verfahrens und entsprechenden Verarbeitungsschritte eines Münzdatensatzes;

Fig.6 ein Ausführungsbeispiel eines Verfahrensablaufdiagramms eines erfindungsgemäßen Verfahrens und entsprechenden Verarbeitungsschritte eines Münzdatensatzes;

Fig.7 ein weiteres Ausführungsbeispiel eines Verfahrensablaufdiagramms eines erfindungsgemäßen Verfahrens;

Fig. 8 ein Ausführungsbeispiel eines erfindungsgemäßen Geräts;

Fig. 9 ein Ausführungsbeispiel eines Ablaufs von erfindungsgemäßen Bezahlvorgängen unter Überwachung der monetären Beträge pro Endgerät; und

Fig. 10 ein Ausführungsbeispiel eines Ablaufs einer erfindungsgemäßen Bereichsbestätigung.

## FIGURENBESCHREIBUNG

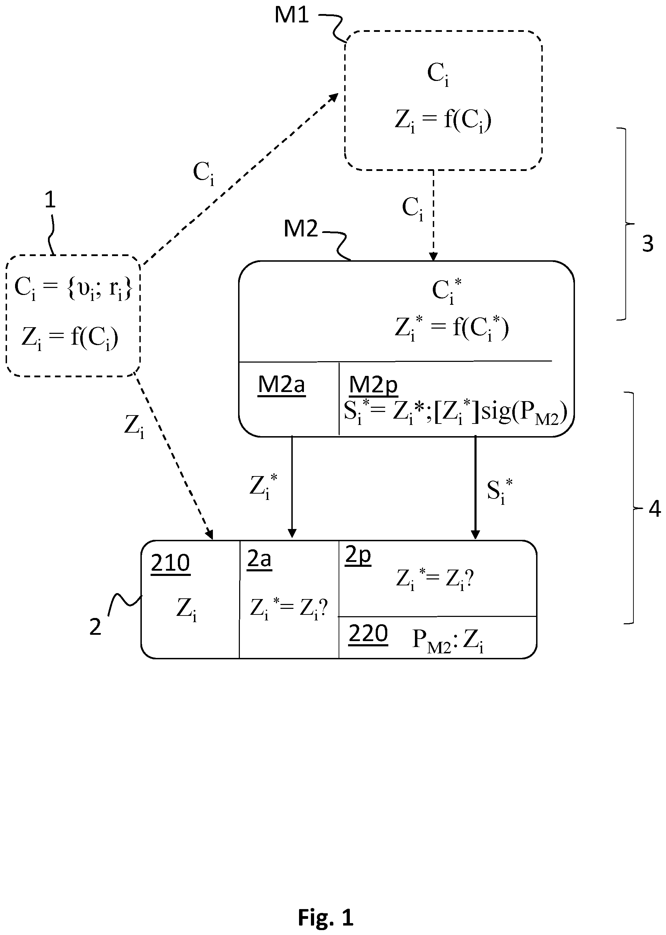

Fig.1 zeigt ein Ausführungsbeispiel eines Bezahlsystems mit Endgeräten M1 und M2, einer Herausgeberinstanz 1 und einer Überwachungsinstanz 2. Die Endgeräte M1 und M2 können dabei auch Geräte sein.

In der Herausgeberinstanz 1, beispielsweise einer Zentralbank, wird ein elektronischer Münzdatensatz Ci erzeugt. Zu dem elektronischen Münzdatensatz Ci wird ein maskierter elektronische Münzdatensatz $Z_i$ erzeugt, der in der Überwachungsinstanz 2 registriert wird. Die Überwachungsinstanz 2 enthält ein Register 210, in welchem gültige maskierte elektronische Münzdatensatz Zi gespeichert sind. Der elektronische Münzdatensatz Ci repräsentiert einen monetären Betrag $v_i$. Der elektronische Münzdatensatz Ci wird an ein erstes Endgerät M1 ausgegeben. Elektronische Münzdatensätze Ci, bevorzugt für welche ein maskierter elektronischer Münzdatensatz $Z_i$ registriert ist, können zur Bezahlung verwendet werden. Der maskierte elektronische Münzdatensatz $Z_i$ kann auch als betragsmaskierter elektronischer Münzdatensatz bezeichnet werden, da der monetäre Betrag $v_i$ für die Überwachungsinstanz 2 unbekannt ist (und auch im weiteren Verlauf unbekannt bleibt). Ein Empfänger, beispielsweise ein weiteres Endgerät, des elektronischen Münzdatensatzes Ci kann dessen Gültigkeit mit Hilfe der Überwachungsinstanz 2 prüfen. Die Überwachungsinstanz 2 kann die Gültigkeit des elektronischen Münzdatensatzes Ci mit Hilfe des maskierten elektronischen Münzdatensatzes $Z_i$ bestätigen. Für die Überwachungsinstanz 2 ist der maskierte elektronische Münzdatensatz $Z_i$ ein anonymer elektronischer Münzdatensatz, insbesondere da sie einen Besitzer des zugehörigen elektronischen Münzdatensatz Ci nicht kennt.

Das erste Endgerät M1 überträgt den elektronischen Münzdatensatz Ci an ein zweites Endgerät M2. Das empfangende zweite Endgerät M2 berechnet für den empfangenen Münzdatensatz $C_i^*$ (oder einen daraus abgeleiteten, sogenannten modifizierten, Münzdatensatz) einen maskierten elektronischen Münzdatensatz Zi*, dessen Gültigkeit die Überwachungsinstanz 2 anhand der registrierten maskierten elektronischen Münzdatensätze bestätigen kann.

In Fig. 1 ist dargestellt, dass das zweite Endgerät M2 maskierte elektronische Münzdatensätze $Z_i^*$ in einem anonymen Modus M2a anonym an die Überwachungsinstanz 2 sendet, also insbesondere nur den maskierten elektronischen Münzdatensatz $Z_i^*$ sendet. Die Überwachungsinstanz 2 bearbeitet die anonym gesendeten maskierten elektronischen Münzdatensatz $Z_i^*$ in einem anonymen Modus 2a, in welchem beispielsweise dem zweiten Endgerät M2 nur bestätigt wird, dass der gesendete maskierte elektronische Münzdatensatz Zi* gültig ist.

Die Überwachungsinstanz 2 speichert in dem Register 210 anonyme (betrags)maskierte Münzdatensätze $Z_i$, die neu erzeugten elektronischen Münzdatensätzen Ci der Herausgeberinstanz 1 oder modifizierten elektronischen Münzdatensätzen der Endgerätezugeordnet sind.

In Fig. 1 ist weiterhin dargestellt, dass das zweite Endgerät M2 nun gemäß der vorliegenden Lösung maskierte elektronische Münzdatensätze $S_i^*$ auch in einem pseudonymen Modus M2p pseudonymisiert an die Überwachungsinstanz 2 senden kann. Das zweite Endgerät M2 verknüpft beispielsweise den maskierten elektronischen Münzdatensatz $Z_i^*$ mit einem Pseudonym $P_{M2}$ und sendet den pseudonymisierten maskierten elektronischen Münzdatensatz $S_i^*$ an die Überwachungsinstanz 2. Das zweite Endgerät M2 könnte einen pseudonymisierten maskierten elektronischen Münzdatensatz $S_i^*$ durch Anhängen des Pseudonyms $P_{M2}$ an den maskierten elektronischen Münzdatensatz $Z_i^*$ erzeugen. In der dargestellten Ausgestaltung erstellt das zweite Endgerät M2 eine Signatur über den maskierten elektronischen Münzdatensatz $Z_i^*$ und fügt die Signatur dem Münzdatensatz $Z_i^*$ hinzu. Als Pseudonym $P_{M2}$ kann beispielsweise der öffentliche Schlüssel des Signaturschlüsselpaares dienen. Alternativ ist als Pseudonym $P_{M2}$ jedoch auch eine Endgerätenummer, wie IMEI, IMSI ..., oder eine daraus abgeleitetes Nummer verwendbar.

Die Überwachungsinstanz 2 bearbeitet die pseudonym gesendeten maskierten elektronischen Münzdatensatz $S_i^*$ in einem pseudonymen Modus 2p, in welchem dem zweiten Endgerät M2 ebenfalls bestätigt wird, dass der gesendete maskierte elektronische Münzdatensatz $Z_i^*$ gültig ist. Jedoch wird zusätzlich in einer Datenstruktur 220 der Überwachungsinstanz 2 die Zuordnung des maskierten elektronischen Münzdatensatzes Zi zum Pseudonym $P_{M2}$ gespeichert. Wie in den weiteren Ausgestaltungen deutlich wird, kann die Datenstruktur 220 als ein Register für noch zu prüfende maskierte elektronische Münzdatensatze Zi verwendet werden. Die Überwachungsinstanz 2 verschiebt oder überspringt im pseudonymen Modus 2p insbesondere einen im anonymen Modus 2a (häufiger oder stets) ausgeführten Prüfungsschritt. Der Prüfungsschritt prüft - weiterhin in Unkenntnis des monetären Betrages $v_i$ - bevorzugt, ob der monetäre Betrag $v_i$ des maskierten elektronischen Münzdatensatzes Zi in einem Bereich liegt.

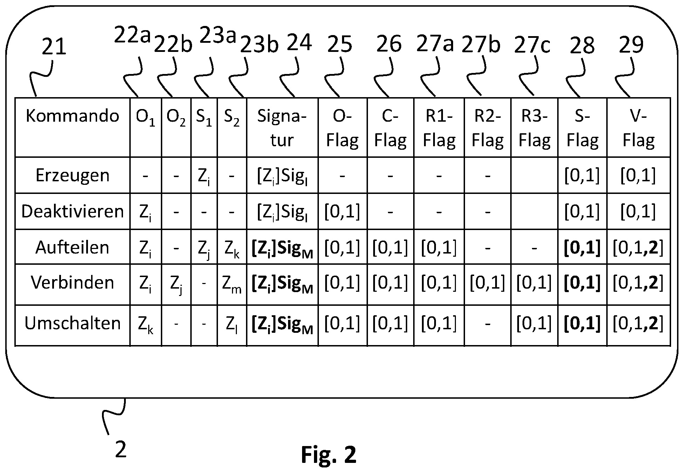

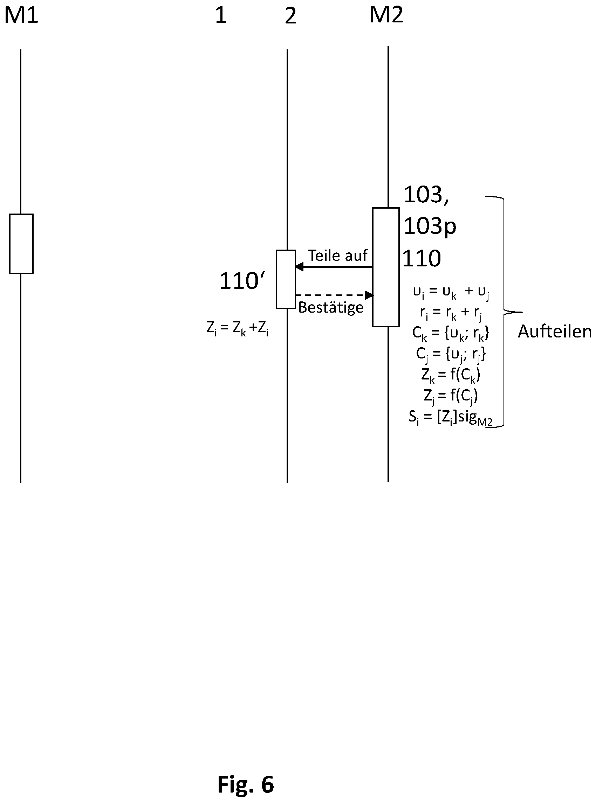

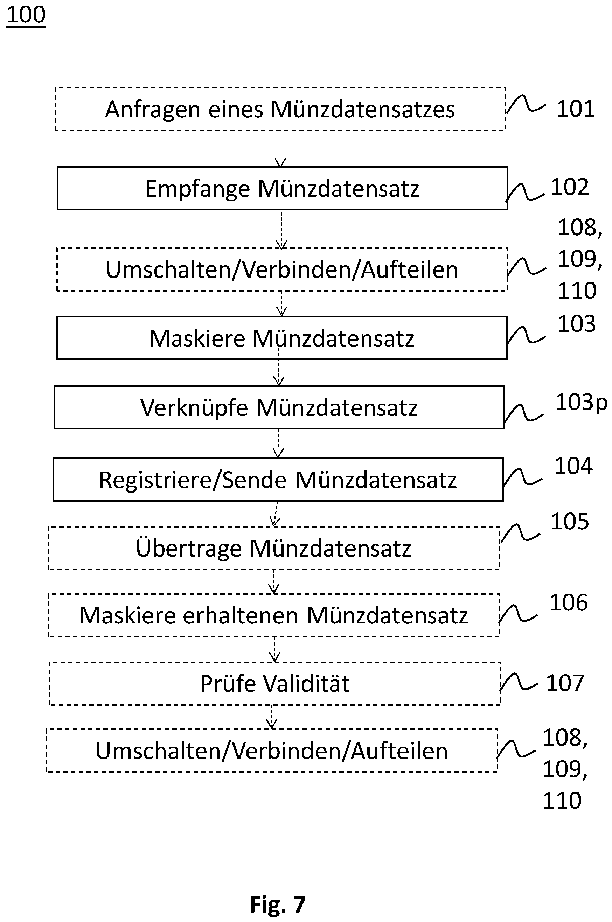

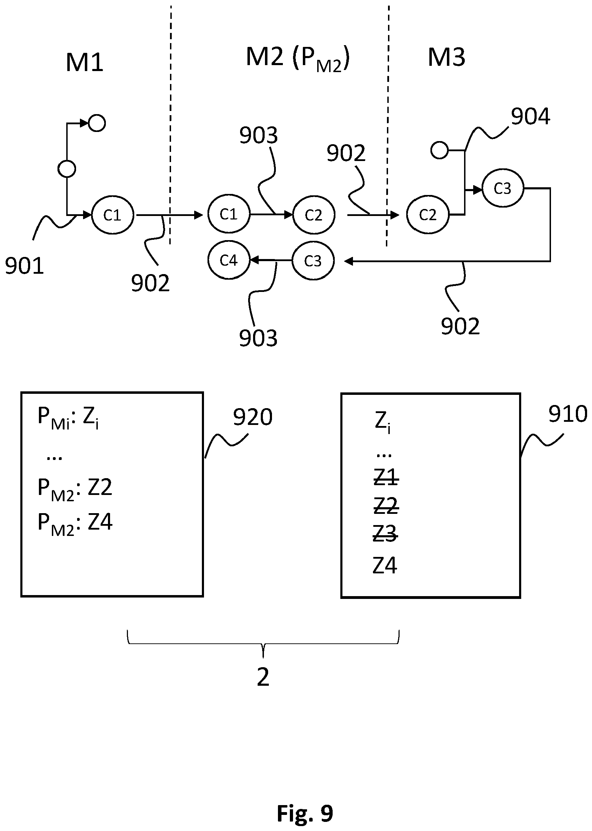

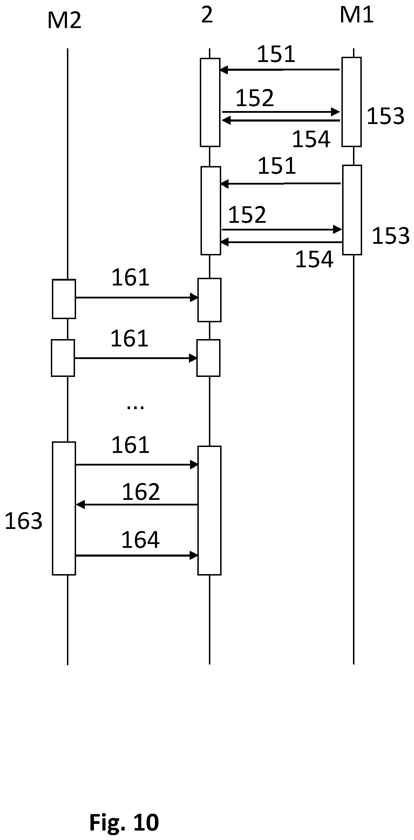

Weitere Details einer bevorzugten Ausgestaltung werden nun für Fig. 1 beschrieben. Die anschließend zu Figuren 2 bis 7 beschriebenen Aspekte, bauen zumindest teilweise auf Details dieser Ausgestaltung auf. Beschrieben wird dort primär der komplexere pseudonyme Modus 2p bzw. M2p, da der einfachere anonyme Modus 2a bzw. M2a ohne Pseudonym (bzw. Signatur) abläuft. In den Figuren 9 und 10 werden dagegen Ausgestaltungen beschrieben, die nur optional mit den Details der anderen Ausgestaltungen kombiniert werden können.

Die Überwachungsinstanz kann ein "Verschleierter-elektronischer-Datensatz-Ledger" sein. Als Ledger wird im Rahmen dieser Erfindung eine Liste, ein Verzeichnis, vorzugsweise eine Datenbankstruktur verstanden.

Beispielsweise wurde als Verschleierungsbetrag $r_i$ eine echte Zufallszahl erzeugt. Diese Verschleierungsbetrag $r_i$ wird mit einem monetären Betrag $v_i$ verknüpft und bildet sodann einen erfindungsgemäßen i-ten elektronischen Münzdatensatz:

$$C_i = \{v_i;\ r_i\} \tag{1}$$

Ein gültiger elektronischer Münzdatensatz kann zur Bezahlung eingesetzt werden. Der Besitzer der beiden

Werte $v_i$ und $r_i$ ist daher im Besitz des digitalen Geldes. Das digitale Geld wird im Gesamtsystem repräsentiert durch ein Paar bestehend aus einem gültigen elektronischen Münzdatensatz Ci und einem entsprechenden maskierten elektronischen Münzdatensatz Zi. Ein maskierter elektronischer Münzdatensatz $Z_i$ wird durch Anwenden einer Einwegfunktion f ($S_i$) gemäß Gleichung (2) erhalten:

$$Z_i = f(C_i) \qquad (2)$$

Die Einwegfunktion f(Ci) ist beispielsweise homomorph. Die Funktion f (Ci) ist öffentlich, d.h. jeder Systemteilnehmer kann diese Funktion aufrufen und verwenden. Diese Funktion f (Ci) ist gemäß Gleichung (3) oder Gleichung (3a) beispielsweise definiert:

$$Z_i = v_i \cdot H + r_i \cdot G \qquad (3)$$

$$Z_i = r_i \cdot G \qquad (3a)$$

wobei H und G Generatorpunkte einer Gruppe G, in der das diskrete Logarithmusproblem schwer ist, mit den Generatoren G und H, für die der diskrete Logarithmus der jeweils anderen Basis unbekannt ist. Beispielsweise ist G (Gleichung (3), (3a)) als auch H (Gleichung (3) jeweils ein Generatorpunkt einer elliptischen Kurvenverschlüsselung, ECC, - also private Schlüssel der ECC, sind. Im Fall von Gleichung (3) müssen diese Generatorpunkte G und H in der Art gewählt werden, dass der Zusammenhang von G und H nicht öffentlich bekannt ist, sodass bei:

$$G = n \cdot H \qquad (4)$$

die Verknüpfung n praktisch nicht auffindbar sein darf, um zu verhindern, dass der monetäre Betrag $v_i$ manipuliert wird und trotzdem ein gültiges Zi berechnet werden könnte. Die Gleichung (3) ist ein "Pederson-Commitment für ECC", das sicherstellt, dass der monetäre Betrag $v_i$ einer Überwachungsinstanz 2 zugestanden, also "commited", werden kann, ohne diesen der Überwachungsinstanz 2 zu offenbaren. Der öffentlichen und entfernten Überwachungsinstanz 2 wird daher nur der maskierte Münzdatensatz Zi zugesendet (offenbart).

Auch wenn im vorliegenden Beispiel eine Verschlüsselung basierend auf elliptischen Kurven beschrieben ist bzw. wird, so wäre auch ein anderes kryptographische Verfahren denkbar, welches auf einem diskreten logarithmischen Verfahren beruht und auf Gleichung (3a) basiert.

Bei Anwendung der Gleichung (3a) wird eine Einwegfunktion nur auf einen Teil des Münzdatensatzes C, hier der Verschleierungsbetrag r, angewendet, dieser teilmaskierte Münzdatensatz kann auch als R bezeichnet werden.

Die Gleichung (3) ermöglicht durch die Entropie des Verschleierungsbetrags $r_i$, dass auch bei kleinem Wertebereich für monetäre Beträge $v_i$ ein kryptografisch starkes Zi erhalten wird. Somit ist ein einfacher Brute-Force-Angriff durch bloßes Schätzen von monetären Beträgen $v_i$ praktisch nicht möglich.

Die Gleichungen (3) und (3a) verwenden Einwegfunktionen, das heißt, dass die Berechnung von Zi aus Ci einfach ist, da ein effizienter Algorithmus existiert, wohingegen die Berechnung von Ci ausgehend von Zi sehr schwer ist, da kein in polynomialer Zeit lösbarer Algorithmus existiert.

Zudem ist die Gleichung (3) homomorph für Addition und Subtraktion, das heißt es gilt:

$$Z_i + Z_j = (v_i \cdot H + r_i \cdot G) + (v_j \cdot H + r_j \cdot G) = (v_i + v_j) \cdot H + (r_i + r_j) \cdot G \qquad (5)$$

Somit können Additions-Operationen und Subtraktions-Operationen sowohl in der Direkttransaktionsschicht 3 also auch parallel in der Überwachungsschicht 4 ausgeführt werden, ohne dass die Überwachungsschicht 4 Kenntnis von den elektronischen Münzdatensätzen Ci hat. Die homomorphe Eigenschaft der Gleichung (3) ermöglicht eine Überwachung von gültigen und ungültigen elektronischen Münzdatensätzen Ci auf alleiniger Basis der maskierten Münzdatensätze Zi zu führen und sicherzustellen, dass kein neuer monetärer Betrag $v_j$ geschaffen wurde.

Durch diese homomorphe Eigenschaft kann der Münzdatensatz Ci gemäß Gleichung (1) aufgeteilt werden in:

$$C_i = C_j + C_k = \{v_j; r_j\} + \{v_k; r_k\} \qquad (6)$$

wobei gilt:

$$v_i = v_j + v_k \qquad (7)$$

$$r_i = r_j + r_k \qquad (8)$$

Für die entsprechenden maskierten Münzdatensätze gilt:

$$Z_i = Z_j + Z_k \qquad (9)$$

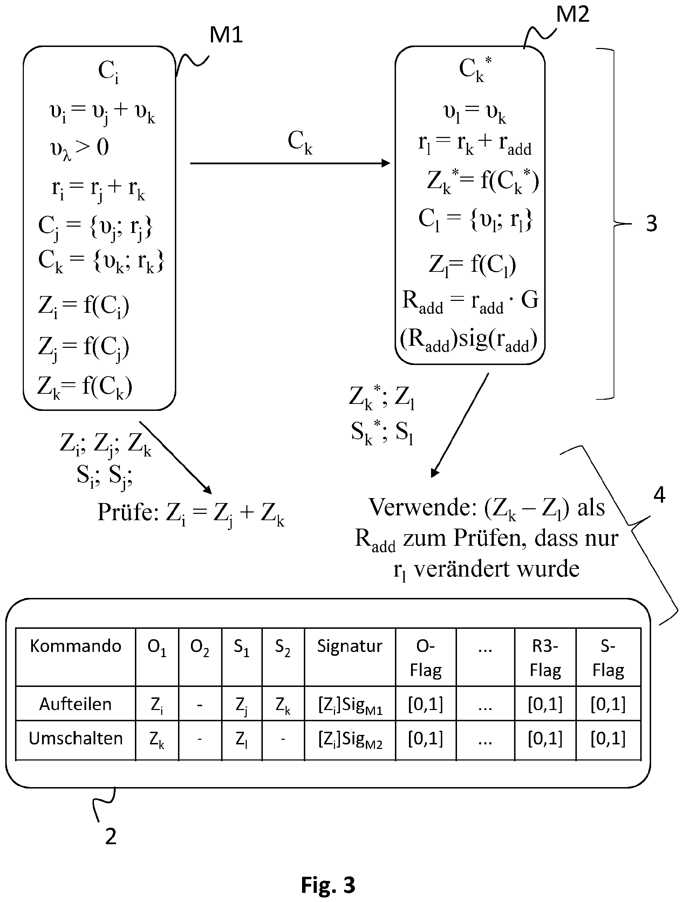

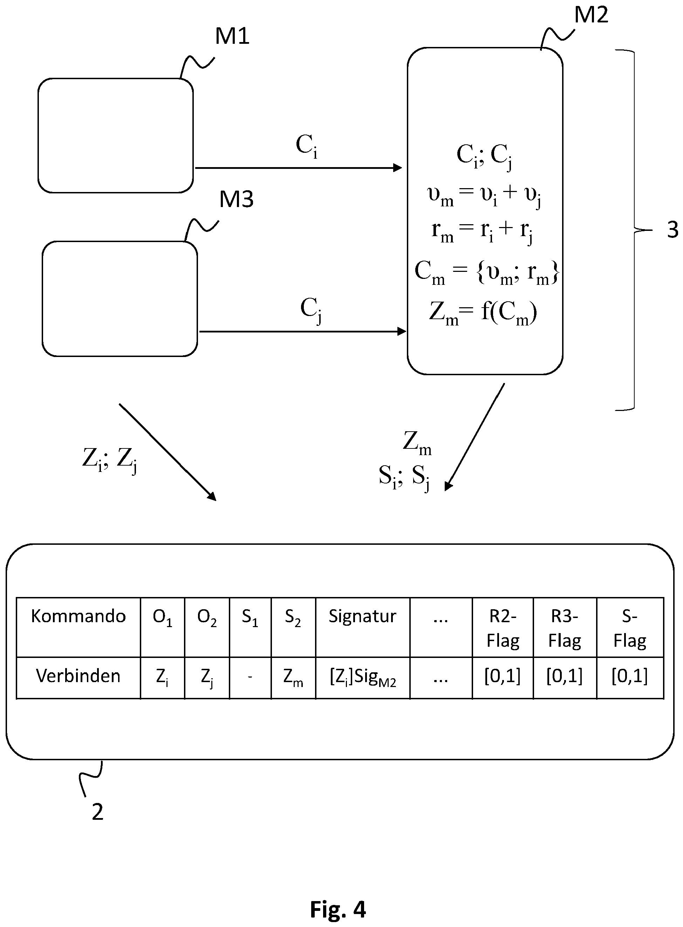

Mit Gleichung (9) kann beispielsweise auf einfache Weise eine asymmetrische Aufteilen-Verarbeitung bzw. ein asymmetrischer Aufteilen-Verarbeitungsschritt eines Münzdatensatzes gemäß Fig. 3 geprüft werden, ohne dass die Überwachungsinstanz 2 Kenntnis von Ci, $C_j$, $C_k$ hat. Insbesondere wird die Bedingung der Gleichung (9) geprüft, um aufgeteilte Münzdatensätze $C_j$ und $C_k$ für gültig zu erklären und den Münzdatensatz Ci für ungültig zu erklären. Ein derartiges Aufteilen eines elektronischen Münzdatensatzes Ci ist in Fig. 3 gezeigt.
Auf die gleiche Weise können elektronische Münzdatensätze auch zusammengefügt (verbunden) werden, siehe dazu Fig. 4 und die Erläuterungen dazu.
Vorliegend erfolgt nach dem Maskieren ein Signieren des Münzdatensatzes, um ein Pseudonym eines Endgeräts mit dem maskierten Münzdatensatz zu verknüpfen. Das Signieren erfolgt insbesondere mit einem privaten Signaturschlüssel SK eines PKI-Schlüssels des jeweiligen Endgeräts $M_x$. Der öffentliche Teil des Signaturschlüssels kann als das Pseudonym $P_{M2}$ dienen. Diese Signatur wird dem maskierten Münzdatensatz Zi hinzugefügt, siehe Gleichung (3a):

$$S_i = Z_i; \ [Z_i]sig(SK_{Mx}) \qquad (3a)$$

Zusätzlich gilt es zu prüfen, ob nicht erlaubte hohe oder negative monetäre Beträge registriert werden. Ein Besitzer eines elektronischen Münzdatensatzes Ci muss dabei der Überwachungsinstanz 2 nachweisen können, dass alle monetären Beträge $v_i$ in einer Verarbeitungs-Operation innerhalb eines Wertebereichs von [0, ..., n] liegen, ohne der Überwachungsinstanz 2 dabei die monetären Beträge $v_i$ mitzuteilen. Diese Bereichsnachweise werden auch "Range-Proofs" genannt. Als Bereichsnachweise werden bevorzugt Ringsignaturen (engl. ring signature) verwendet. Für das vorliegende Ausführungsbeispiel werden sowohl der monetäre Betrag $v$ als auch der Verschleierungsbetrag $r$ eines elektronischen Münzdatensatzes C in Bitdarstellung aufgelöst. Es gilt:

$$v_i = \sum a_j \cdot 2^j \text{ für } 0 \leq j \leq n \text{ und } a_j \in \{0; 1\} \qquad (9a)$$

sowie

$$r_i = \sum b_j \cdot 2^j \text{ für } 0 \leq j \leq n \text{ und } b_j \in \{0; 1\} \qquad (9b)$$

Für jedes Bit wird vorzugsweise eine Ringsignatur mit

$$C_{ij} = a_j \cdot H + b_j \cdot G \qquad (9c)$$

und

$$C_{ij} - a_j \cdot H \qquad (9d)$$

durchgeführt, wobei in einer Ausgestaltung vorgesehen sein kann, nur für bestimmte Bits eine Ringsignatur durchzuführen.
Die Überwachungsinstanz 2 kann jedes Endgerät $M_x$ auffordern, einen Bereichsnachweis zu erbringen. Dieser bezieht sich nicht notwendigerweise auf eine einzelne Transaktion, wie in Gleichungen 9a bis 9d dargestellt, sondern kann mehrere Transaktionen umfassen, beispielsweise indem er um eine Dimension "Zeiteinheit" erweitert wird. Zu Prüfen wäre dann, ob die Summe aller Transaktionen pro Zeiteinheit, hier pro Tag, einen Schwellwert überschreiten, siehe Gleichung (9e):

$$v_{Tag} = \sum v_i \in [0; v_{Tag}] \leq v_{Schwellwert} \text{ ?} \tag{9e}$$

In Fig. 1 wird ein elektronischer Münzdatensatz Ci von der Herausgeberinstanz 1 erzeugt und mittels der Gleichung (3) oder der Gleichung (3a) ein maskierter elektronischer Münzdatensatz $Z_i$ von der Herausgeberinstanz 1 errechnet und dieser in der Überwachungsinstanz 2 registriert. Im Anschluss überträgt das erste Endgerät M1, das den elektronischen Münzdatensatz Ci an ein zweites Endgerät M2 übertragen kann oder einen der Verarbeitungs-Schritte (Umschalten, Verbinden, Aufteilen) ausführen kann. Die Übertragung erfolgt beispielsweise drahtlos über WLAN, NFC oder Bluetooth. Die Übertragung kann durch kryptografische Verschlüsselungsverfahren zusätzlich abgesichert sein, indem beispielsweise ein Sitzungsschlüssel ausgehandelt wird oder eine PKI-Infrastruktur angewendet wird.

Im zweiten Endgerät M2 wird der übertragene elektronische Münzdatensatz Ci als $C_i^*$ erhalten. Mit dem Erhalt des elektronischen Münzdatensatzes $Ci^*$ ist das zweite Endgerät M2 im Besitz des digitalen Geldes, den der elektronische Münzdatensatz $C_i^*$ repräsentiert. Wenn sich beide Endgeräte gegenseitig vertrauen, sind keine weiteren Schritte notwendig, um das Verfahren zu beenden. Allerdings ist dem Endgerät M2 nicht bekannt, ob der elektronische Münzdatensatz $C_i^*$ tatsächlich gültig ist. Zudem könnte das Endgerät M1 den elektronischen Münzdatensatz Ci auch noch einem dritten Endgerät (nicht dargestellt) übertragen. Um dies zu verhindern sind weitere bevorzugte Schritte im Verfahren vorgesehen.

Zum Prüfen der Validität des erhaltenen elektronischen Münzdatensatzes $Ci^*$ wird im zweiten Endgerät M2 mit der - öffentlichen - Einwegfunktion aus Gleichung (3) oder der Gleichung (3a) der maskierte übertragene elektronische Münzdatensatz $Z_i^*$ errechnet. Zudem wird - nur im pseudonymen Modus - eine Signatur gemäß Gleichung (3a) berechnet und angehängt. Der pseudonymisierte maskierte übertragene elektronische Münzdatensatz $S_i^*$ wird dann an die Überwachungsinstanz 2 übertragen. Bei Übereinstimmung des maskierten übertragenen elektronischen Münzdatensatz $Z_i^*$ mit einem registrierten und gültigen maskierten elektronischen Münzdatensatz wird dem zweiten Endgerät M2 die Validität des erhaltenen Münzdatensatzes $C_i^*$ angezeigt und es gilt, dass der erhaltene elektronische Münzdatensatz $C_i^*$ gleich dem registrierten elektronischen Münzdatensatz Ci ist. Mit der Prüfung auf Validität kann in einer Ausgestaltung festgestellt werden, dass der erhaltene elektronische Münzdatensatz $Ci^*$ noch gültig ist, d.h., dass er nicht bereits durch einen anderen Verarbeitungsschritt oder bei einer anderen Transaktion bereits verwendet wurde und/ oder einer weiteren Veränderung unterworfen war.

Bevorzugt findet danach ein Umschalten des erhaltenen elektronischen Münzdatensatzes statt.

Es gilt für das erfindungsgemäße Verfahren, dass die alleinige Kenntnis eines maskierten elektronischen Münzdatensatzes $Z_i$ oder signierten maskierten elektronischen Münzdatensatzes Si nicht dazu berechtigt, das digitale Geld auszugeben. Die alleinige Kenntnis des elektronischen Münzdatensatzes Ci berechtigt aber zum Bezahlen, d.h. eine Transaktion erfolgreich durchzuführen, insbesondere wenn der Münzdatensatz Ci gültig ist. Es herrscht eine eineindeutige Beziehung zwischen den elektronischen Münzdatensätzen Ci und den entsprechenden maskierten elektronischen Münzdatensätzen $Z_i$. Die maskierten elektronischen Münzdatensätze $Z_i$ bzw. die signierten maskierten elektronischen Münzdatensätze $S_i$, werden in der Überwachungsinstanz 2, beispielsweise einer öffentlichen dezentralen Datenbank, registriert. In der Ausgestaltung nach Fig. 1 werden sowohl anonyme als auch pseudonym erhaltene maskierte elektronische Münzdatensätzen Zi in der Datenstruktur 210 gespeichert. Der pseudonym maskierte elektronische Münzdatensätzen Si (oder mit Zuordnung zum Münzdatensätzen Zi das Pseudonym bzw. die Signatur) wird in der Datenstruktur 220 gespeichert. Durch dieses Registrieren wird zunächst die Gültigkeit des elektronischen Münzdatensatzes Zi prüfbar, beispielsweise ob neue monetäre Beträge (illegaler Weise) erschaffen wurden. Zudem wird es zusammen mit Pseudonymisierung des maskierten Münzdatensatzes möglich, eine Transaktion einem Pseudonym eines Endgerätes $M_x$ zuzuordnen.

Ein Hauptunterscheidungsmerkmal gegenüber konventionellen Lösungen ist, dass die maskierten elektronischen Münzdatensätze $Z_i$ bzw. die signierten maskierten elektronischen Münzdatensätze Si in einer Überwachungsschicht 4 gespeichert werden und alle Verarbeitungen an dem elektronischen Münzdatensatz $S_i$, $Z_i$ dort registriert werden, wohingegen die tatsächliche Übertragung des digitalen Geldes in einer (geheimen, d.h. einer der Öffentlichkeit nicht bekannten) Direkttransaktionsschicht 3 erfolgt.

Um ein mehrfaches Ausgeben zu verhindern oder um ein flexibleres Übertragen zu gewährleisten, können die elektronischen Münzdatensätze nunmehr im erfindungsgemäßen Verfahren verarbeitet werden. In der nachfolgenden Tabelle 1 sind die einzelnen Operationen aufgelistet, wobei mit dem angegebenen Befehl auch ein entsprechender Verarbeitungsschritt ausgeführt wird:

*Tabelle 1 - Anzahl von Operationen, die pro Verarbeitung eines Münzdatensatzes im Endgerät bzw. Herausgeberinstanz durchführbar sind;*

| Befehl bzw. Schritt | Signatur erstellen | Zufallszahl erstellen | Maskierung erstellen | Bereichsnachweis erstellen |
|---|---|---|---|---|
| Erzeugen | 1 | 1 | 1 | 0 oder 1 |
| Deaktivieren | 1 | 0 | 1 | 0 oder 1 |
| Aufteilen | 1 | 1 | 3 | 0 oder 1 |
| Verbinden | 1 | 0 | 3 | 1 |
| Umschalten | 1 | 1 | 2 | 1 |

Weitere Operationen, die in Tabelle 1 nicht aufgeführt sind, können benötigt werden. Anstelle der angeführten Implementierung sind auch andere Umsetzungen denkbar, die andere Operationen implizieren. Die Tabelle 1 zeigt, dass für jeden Münzdatensatz, jede der Verarbeitungen "Erstellen", "Deaktivieren", "Aufteilen", "Verbinden" und "Umschalten" verschiedene Operationen "Signatur erstellen"; "Zufallszahl erstellen"; "Maskierung erstellen"; "Bereichsprüfung" vorgesehen sein können, wobei jede der Verarbeitungs-Operation in der Überwachungsinstanz 2 registriert und dort in unveränderlicher Form an eine Liste vorheriger Verarbeitungs-Operationen für maskierte elektronische Münzdatensätze $Z_i$ angehängt wird. Die Operationen der Verarbeitungen "Erstellen" und "Deaktivieren" eines elektronischen Münzdatensatzes werden nur an sicheren Orten und/ oder nur von ausgewählten Instanzen, beispielsweise der Herausgeberinstanz 1, ausgeführt, während die Operationen aller übrigen Verarbeitung auf den Endgeräten M1 bis M3 ausgeführt werden können.

Die Anzahl der Operationen für die einzelnen Verarbeitungen ist in der Tabelle 1 mit "0", "1" oder "2" gekennzeichnet. Die Anzahl "0" zeigt dabei an, dass das Endgerät bzw. die Herausgeberinstanz 1 diese Operation für diese Verarbeitung des elektronischen Münzdatensatzes nicht durchführen muss. Die Anzahl "1" zeigt dabei an, dass das Endgerät bzw. die Herausgeberinstanz 1 diese Operation für diese Verarbeitung des elektronischen Münzdatensatzes einmal durchführen können muss. Die Anzahl "2" zeigt dabei an, dass das Endgerät bzw. die Herausgeberinstanz 1 diese Operation zweimal für diese Verarbeitung des elektronischen Münzdatensatzes durchführen können muss.

Grundsätzlich kann in einer Ausgestaltung auch vorgesehen sein, dass eine Bereichsprüfung durch die Herausgeberinstanz 1 auch beim Erzeugen und/ oder Löschen durchgeführt wird.

In der nachfolgenden Tabelle 2 sind für die einzelnen Verarbeitungen die für die Überwachungsinstanz 2 benötigten Operationen aufgelistet:

*Tabelle 2 - Anzahl von Operationen, die pro Verarbeitung eines Münzdatensatzes in der Überwachungsinstanz durchführbar sind;*

| Befehl bzw. Schritt | Signatur vom Herausgeber prüfen | Signatur vom Endgerät prüfen | Gültigkeit des maskierten elektronischen Münzdatensatzes prüfen | Bereichs nachweis nachvollziehen | homomorphe Eigenschaften der maskierten elektronischen Münzdatensätze nachvollziehen, d.h. Addieren oder Substrahieren |
|---|---|---|---|---|---|
| Erzeugen | 1 | 0 | 0 | 0 oder 1 | 0 |
| Deaktivieren | 1 | 0 | 1 | 0 oder 1 | 0 |
| Aufteilen | 0 | 1 | 1 | 2 oder mehr | 1 |
| Verbinden | 0 | 1 | 2 oder mehr | 1 | 1 |
| Umschalten | 0 | 1 | 1 | 1 | 0 |

Weitere Operationen, die in Tabelle 2 nicht aufgeführt sind, können benötigt werden. Anstelle der angeführten Implementierung sind andere Umsetzungen denkbar, die andere Operationen implizieren. Alle Operationen der Tabelle 2 können in der Überwachungsinstanz 2 durchgeführt werden, die als vertrauenswürdige Instanz, beispielsweise als dezentraler Server, insbesondere Distributed-Trusted-Server, für eine ausreichende Integrität der elektronischen Münzdatensätze sorgt. Die Überwachungsinstanz 2 weist einen öffentlichen Verifikationsschlüssel auf, um die Signatur des signierten maskierten Münzdatensatzes S zu prüfen. Der öffentliche Verifikationsschlüssel kann als Pseudonym dienen oder einem Pseudonym zugeordnet sein. Der pseudonymisierte maskierte Münzdatensatz S umfasst zumindest den Münzdatensatz Z und direkt oder indirekt das Pseudonym, indirekt beispielsweise als Teil der Signatur.

Die Tabelle 3 zeigt die für die Systemteilnehmer im Bezahlsystem der Fig. 1 bevorzugt zu installierenden Komponenten:

*Tabelle 3 - Bevorzugte Einheiten in den Systemkomponenten*

| Befehl bzw. Schritt | Herausgeberinstanz | Endgerät | Überwachungsinstanz |
|---|---|---|---|
| Zufallszahlgenerator (hohe Sicherheit) | Ja | - | - |
| Zufallsgenerator (deterministisch) | - | Ja | - |
| PKI zum Signieren | Ja | Ja | - |
| PKI zur Signaturprüfung | - | (Ja) | Ja |
| Lesezugriff auf DLT | Ja | Ja | Ja |
| Schreibzugriff auf DLT | Ja | Ja | Ja |
| Deaktivieren des elektronischen Münzdatensatzes | Ja | Ja | - |
| Transportverschlüsselung | Ja | Ja | - |
| Sicherer Speicher | (Ja) | Ja | -/Ja |
| Maskierungs-Einheit | Ja | Ja | - |
| Bereichsnachweis | - | Ja | - |
| Bereichsnachweis prüfen | - | - | Ja |
| DLT Software | - | - | Ja |

Tabelle 3 zeigt eine Übersicht über die bevorzugt zu verwendenden Komponenten in jedem Systemteilnehmer, also der Herausgeberinstanz 1, einem Endgerät M1 und der Überwachungsinstanz 2. Das Endgerät M1 kann als ein Wallet für elektronische Münzdatensätze Ci, d.h. als elektronische Geldbörse, also ein Datenspeicher des Endgeräts M1, in dem eine Vielzahl von Münzdatensätzen Ci hinterlegt sein können, ausgebildet sein und beispielsweise in Form einer Applikation auf einem Smartphone oder IT-System eines Händlers, einer Geschäftsbank oder eines anderen Marktteilnehmers implementiert sein und einen elektronischen Münzdatensatz senden oder empfangen. Somit sind die Komponenten in dem Endgerät, so wie sie in Tabelle 3 gezeigt sind, als Software implementiert. Es wird davon ausgegangen, dass die Überwachungsinstanz 2 auf einer DLT basiert und von einer Reihe vertrauenswürdiger Marktteilnehmer betrieben wird.

Fig. 2 zeigt ein Ausführungsbeispiel einer Überwachungsinstanz 2, die auch in Fig. 1 verwendet werden könnte. In der Fig. 2 ist eine beispielhafte Datenbank in Form einer Tabelle dargestellt, in der die maskierten elektronischen Münzdatensätze $Z_i$ und ggf. ihre Verarbeitungen registriert sind. Die Überwachungsinstanz 2 ist bevorzugt lokal entfernt von den Endgeräten M1 bis M3 angeordnet und ist beispielsweise in einer Server-Architektur untergebracht.

Jede Verarbeitungs-Operation für eine Verarbeitung (Erstellen, Deaktivieren, Aufteilen, Verbinden und Umschalten) wird dabei in der Überwachungsinstanz 2 registriert und dort beispielsweise in unveränderlicher Form an eine Liste vorheriger Verarbeitungs-Operationen für maskierte elektronische Münzdatensätze Zi angehängt. Die einzelnen Operationen bzw. deren Prüfergebnis, also quasi die Zwischenergebnisse einer Verarbeitung, werden in der Überwachungsinstanz 2 festgehalten. Zwar wird im Folgenden von einer sich fortsetzenden Liste ausgegangen, jedoch kann auch diese Datenstruktur, gegebenenfalls nach vorbestimmten Regeln, bereinigt oder komprimiert werden bzw. in einer bereinigten oder komprimierten Form separat bereitgestellt werden.

Die Verarbeitungen "Erstellen" und "Deaktivieren", die die Existenz des monetären Betrags $v_i$, an sich betreffen, also die Schaffung und die Vernichtung von Geld bedeuten, bedürfen einer zusätzlichen Genehmigung durch die Herausgeberinstanz 1, um in der Überwachungsinstanz 2 registriert (also protokolliert) zu werden. Die übrigen Verarbeitungsoperationen (Aufteilen, Verbinden, Umschalten) bedürfen keiner Autorisierung durch die Herausgeberinstanz 1 oder durch den Befehlsinitiator (= Zahler, bspw. das erste Endgerät M1). Die übrigen Verarbeitungsoperationen sind jedoch hinsichtlich verschiedener Prüfkriterien zu prüfen.

Eine Registrierung der jeweiligen Verarbeitung in der Überwachungsinstanz 2 wird beispielsweise durch entsprechende Listeneinträge in der Datenbank gemäß Fig. 2 realisiert. Jeder Listeneintrag hat dabei weitere Markierungen 25 bis 28, die die Zwischenergebnisse der jeweiligen Verarbeitung dokumentiert, die von der Überwachungsinstanz 2 durchgeführt werden müssen. Bevorzugt werden die Markierungen 25 bis 28 als Hilfestellung benutzt und nach Abschluss der Befehle von der Überwachungsinstanz verworfen. Für anonyme Münzdatensätze sind stets alle Prüfungen auszuführen, so dass auch alle Markierungen 25 -28 verworfen werden könnten. Für pseudonymisierte Münzdatensätze kann dagegen eine Prüfung auch entfallen bzw. später ausgeführt werden. In Fig. 2 sind beispielsweise die Prüfungen, die den Markierungen 27b und 27c entsprechen, für pseudonymisierte Münzdatensätze nicht nötig, weil sie später in anderer Form durchgeführt werden. Die Prüfungsschritte der Markierungen 25, 26, 27a und 28 sind dagegen notwendig. Im Folgenden wird entsprechend teilweise von notwendigen bzw. gültigkeitsrelevanten Prüfungsschritten und nachholbaren bzw. gültigkeitsunabhängigen Prüfungsschritten gesprochen, da sie die direkt oder indirekt nachgeholt werden. Ein Münzdatensatz kann als gültig behandelt werden, wenn die notwendigen Prüfungen erfolgt sind.

Die in Fig. 2 fett hervorgehobenen Daten in den Spalten 24, 28 und 29 sind nur für pseudonymisiert erhaltene Münzdatensätze relevant.

Eine optionale Markierung 29 kann beispielsweise den Abschluss der Verarbeitung anzeigen. Die Markierungen 29 sind bei Eingehen eines Verarbeitung-Befehls beispielsweise im Zustand "-" und werden nach erfolgreichem Absolvieren aller Prüfungen (zu Markierungen 25-28) auf den Zustand "1" gesetzt und bei mindestens einer gescheiterten Prüfung auf den Zustand "0" gesetzt. Eine (Abschluss-)Markierung 29 könnte mit dem Wert "2" beispielsweise anzeigen, dass nur die notwendigen Prüfungen abgeschlossen und nachholbare Prüfungen ausgelassen wurden. Werden später von dem Endgerät mit dem Pseudonym Prüfungen für einen oder mehrere Einträge nachgeholt, kann die Markierung auf den Wert "1" gesetzt werden. Anstelle einer solchen Verwendung der Abschluss-Markierung 29 könnten natürlich auch die Markierungen 27b und 27c der nachzuholenden Prüfungen verwendet und/oder eine separate Pseudonym-Markierung eingesetzt werden.

Eine mögliche Struktur für einen Listeneintrag eines Münzdatensatzes umfasst beispielsweise zwei Spalten 22a, 22b für einen Vorgänger-Münzdatensatz (O1, O2), zwei Spalten 23a, 23b für einen Nachfolger-Münzdatensatz (S1, S2), eine Signatur-Spalte 24 für Signaturen von Herausgeberinstanz(en) 1 und Signaturen von Endgeräten M, und sechs Markierungsspalten 25, 26, 27a, 27b und 27c sowie 28. Jeder der Einträge in den Spalten 25 bis 28 weist drei alternative Zustände "-", "1" oder "0" auf.

Die Spalte 25 (O-Flag) zeigt an, ob eine Gültigkeitsprüfung bezüglich eines elektronischen Vorgänger-Münzdatensatzes in Spalte 22a/b erfolgreich war. Der Zustand "1" bedeutet, dass eine Validitäts-Prüfung ergab, dass der elektronische Münzdatensatz der Spalte 22a/b gültig ist und der Zustand "0" anzeigt, dass eine Validitäts-Prüfung ergab, dass der elektronische Münzdatensatz der Spalte 22a/b ungültig und der Zustand "-" anzeigt, dass eine Validitäts-Prüfung noch nicht abgeschlossen ist. Für mehrere Vorgänger-Münzdatensätze wird bevorzugt ein gemeinsames O-Flag eingesetzt (beide gültig), anstatt zwei getrennte O-Flags. Die Spalte 26 (C-Flag) zeigt an, ob eine erste Prüfberechnung für die maskierten elektronischen Münzdatensätze erfolgreich war. Mit der ersten Prüfberechnung wird insbesondere überprüft, ob der Befehl betragsneutral ist, also primär dass die Summe der beteiligten monetären Beträge Null ergibt. Der Zustand "1" bedeutet, dass eine Berechnung erfolgreich war und der Zustand "0" gibt an, dass Berechnung nicht erfolgreich war und der Zustand "-" anzeigt, dass eine Berechnung noch nicht abgeschlossen ist.

Die in Spalte 26 durchzuführende Berechnung lautet basierend auf Gleichung (3) beispielsweise:

$$(Z_{O1} + Z_{O2}) - (Z_{S1} + Z_{S2}) == 0 \qquad\qquad (10)$$

Die Spalte 27a (R1-Flag) zeigt an, ob eine erste Prüfung eines Bereichsnachweises oder des Bereichsnachweises erfolgreich war. Gleiches gilt für die weiteren Spalten 27b (R2-Flag) und 27c (R3-Flag). Der Zustand "1" bedeutet, dass eine Validitäts-Prüfung ergab, dass die Bereichsnachweise oder der Bereichsnachweis nachzuvollziehen sind oder ist und der Zustand "0" zeigt an, dass eine Validitäts-Prüfung ergab, dass die Bereichsnachweise oder der Bereichsnachweis nicht nachvollzogen werden konnten oder konnte und der Zustand "-" zeigt an, dass eine Validitäts-Prüfung noch nicht abgeschlossen ist, nicht erfolgreich war. Der erste Bereichsnachweis der Spalte 27a ist immer nötig, damit der oder die Münzdatensätze als gültig betrachtet werden können. Ein typisches Beispiel für eine notwendige Prüfung ist die Prüfung, dass der monetäre Betrag nicht negativ ist (bzw. keiner der monetären Beträge negativ ist). Der zweite und dritte Bereichsnachweis beeinflusst die Gültigkeit des Münzdatensatzes nicht und kann/können für pseudonymisierte maskierte Münzdatensätze, beispielsweise bei einer späteren Transaktion des Pseudonyms, nachgeholt werden. Mit dem Bereichsnachweis der Spalte 27b wird geprüft, ob der monetäre Betrag des maskierten Münzdatensatzes (bzw. jedes Münzdatensatzes) unter einem Maximalbetrag liegt. Der Maximalbetrag kann systemweit oder für bestimmte Endgerätetypen vorbestimmt sein. Mit dem Bereichsnachweis der Spalte 27c wird beispielsweise eine Summe monetärer Beträge, die das Endgerät (gesendet oder) in einem bestimmten Zeitraum - wie 24 Stunden - empfangen hat, mit einem Summengrenzwert verglichen oder beispielsweise eine Transaktionsanzahl pro Zeiteinheit für das Endgerät geprüft, wie maximal 5 pro Minute oder 100 pro Tag. Die Grenzwerte können vom Bezahlsystem systemweit vorgegeben oder für bestimmte Endgerätetypen (also endgerätespezifisch) definiert werden (z.B.: Kaffeemaschine vom Typ X kann gerätebedingt nur 4 Portionen Heißgetränke pro Minute ausgeben und dementsprechend sind nur 4 Transaktionen pro Minute gestattet).

Die Spalte 28 (S-Flag) zeigt an, ob eine Signatur des elektronischen Münzdatensatzes mit der Signatur der Spalte 24 übereinstimmt, wobei Zustand "1" bedeutet, dass eine Validitäts-Prüfung ergab, dass die Signatur als die der Herausgeberinstanz identifiziert werden konnte und der Zustand "0" anzeigt, dass eine Validitäts-Prüfung ergab, dass die Signatur nicht als die der Herausgeberinstanz identifiziert werden konnte und der Zustand "-" anzeigt, dass eine Validitäts-Prüfung noch nicht abgeschlossen ist.

Eine Änderung des Status eines der Markierungen (auch als "Flag" bezeichnet) bedarf der Genehmigung durch die Überwachungsinstanz 2 und muss sodann unveränderlich in der Datenstruktur gespeichert werden. Eine Verarbeitung ist im anonymen Modus (bzw. für einen anonymen maskierten Münzdatensatz) endgültig, wenn und nur wenn die erforderlichen Markierungen 25 bis 28 durch die Überwachungsinstanz 2 validiert wurden, d.h. nach der entsprechenden Prüfung vom Zustand "0" in den Zustand "1" oder den Zustand "1" gewechselt wurden. Eine Verarbeitung ist im pseudonymen Modus (bzw. für einen pseudonymisiert maskierten Münzdatensatz) abgeschlossen, wenn die Prüfungen zu den Markierungen 25 bis 27a und 28 erfolgt sind.

Im Folgenden wird von einer Datenstruktur ohne Abschlussmarkierungen 29 ausgegangen und zunächst die Gültigkeit anonymer Münzdatensätze betrachtet. Um festzustellen, ob ein maskierter elektronischer Münzdatensatz Z gültig ist, sucht die Überwachungsinstanz 2 nach der letzten Änderung, die den maskierten elektronischen Münzdatensatz Z betrifft. Es gilt, dass der maskierte elektronische Münzdatensatz Z gültig ist, sofern der maskierte elektronische Münzdatensatz Z für seine letzte Verarbeitung in einer der Nachfolger-Spalten 23a, 23b aufgeführt ist, wenn und nur wenn diese letzte Verarbeitung die entsprechende endgültige Markierung 25 bis 28 aufweist. Es gilt auch, dass der maskierte elektronische Münzdatensatz Z gültig ist, sofern der maskierte elektronische Münzdatensatz Z für seine letzte Verarbeitung in einer der Vorgänger-Spalten 22a, 22b aufgeführt ist, wenn und nur wenn diese letzte Verarbeitung fehlgeschlagen ist, also zumindest einer der entsprechend geforderten Zustände der Markierungen 25 bis 28 auf "0" gesetzt ist.

Wenn der maskierte elektronische Münzdatensatz Z nicht in der Überwachungsinstanz 2 gefunden wird, ist er ungültig. Es gilt zudem, dass der anonyme maskierte elektronische Münzdatensatz Z für alle übrigen Fälle nicht gültig ist. Beispielsweise wenn die letzte Verarbeitung des maskierten elektronischen Münzdatensatzes Z in einer der Nachfolger-Spalten 23a, 23b aufgeführt ist, diese letzte Verarbeitung aber nie endgültig wurde oder wenn die letzte Verarbeitung des maskierten elektronischen Münzdatensatzes Z in einer der Vorgänger-Spalten 22a, 22b ist und diese letzte Verarbeitung endgültig ist.

Die Prüfungen, die durch die Überwachungsinstanz 2 erfolgen, um festzustellen, ob eine Verarbeitung endgültig ist, werden durch die Spalten 25 bis 28 abgebildet: Der Zustand in der Spalte 25 zeigt an, ob der/die maskierten elektronischen Münzdatensätze gemäß Vorgänger-Spalten 22a, 22b gültig sind. Der Zustand in der Spalte 26 gibt an, ob die Berechnung des maskierten elektronischen Münzdatensatzes gemäß Gleichung (10) stimmt. Der Zustand in der Spalte 27a gibt an, ob die Bereichsnachweise für die maskierten elektronischen Münzdatensätze Z erfolgreich geprüft werden konnten. Der Zustand in Spalte 28 zeigt an, ob die Signatur in der Spalte 24 des maskierten elektronischen Münzdatensatzes Z eine gültige Signatur der Herausgeberinstanz 1 ist.

Der Zustand "0" in einer Spalte 25 bis 28 zeigt dabei an, dass die Prüfung nicht erfolgreich war. Der Zustand "1" in einer Spalte 25 bis 28 zeigt dabei an, dass die Prüfung erfolgreich war. Der Zustand "-" in einer Spalte 25 bis 28 zeigt dabei an, dass keine Prüfung erfolgt ist. Die Zustände können auch einen anderen Wert aufweisen, solange eindeutig zwischen Erfolg/Misserfolg einer Prüfung unterschieden werden kann und ersichtlich ist, ob eine bestimmte Prüfung durchgeführt wurde.

Beispielhaft sind fünf verschiedene Verarbeitungen definiert, die hier im Einzelnen erläutert werden. Dabei wird auf den entsprechenden Listeneintrag in Fig. 2 verwiesen.

Eine Verarbeitung ist beispielsweise "Erzeugen" eines elektronischen Münzdatensatzes Ci. Das Erzeugen in der Direkttransaktionsschicht 3 durch die Herausgeberinstanz 1 beinhaltet das Wählen eines monetären Betrags $\upsilon_i$ und das Erstellen eines Verschleierungsbetrags $r_i$, wie mit Gleichung (1) bereits beschrieben wurde. Wie in Fig. 2 gezeigt, bedarf es bei der Verarbeitung "Erzeugen" keiner Eintragungen/Markierungen in den Spalten 22a, 22b, 23b und 25 bis 27. In der Nachfolger-Spalte 23a wird der maskierte elektronische Münzdatensatz Zi registriert. Diese Registrierung erfolgt bevorzugt vor dem Übertragen an ein Endgerät M1 bis M3, insbesondere oder bereits beim Generieren durch die Herausgeberinstanz 1, wobei in beiden Fällen dazu die Gleichung (3) oder die Gleichung (3a) ausgeführt werden muss. Der maskierte elektronische Münzdatensatz Zi ist beim Erstellen von der Herausgeberinstanz 1 signiert, diese Signatur ist in der Spalte 24 eingetragen, um sicherzustellen, dass der elektronische Münzdatensatz Ci tatsächlich von einer Herausgeberinstanz 1 erstellt wurde, wobei auch andere Verfahren dafür in Frage kommen. Stimmt die Signatur eines erhaltenen Zi mit der Signatur in Spalte 24 überein, so wird die Markierung in Spalte 28 gesetzt (von "0" auf "1"). Die Markierungen gemäß Spalte 25 bis 27 benötigen keine Statusänderung und können ignoriert werden. Der Bereichsnachweis wird nicht benötigt, da die Überwachungsinstanz 2 darauf vertraut, dass die Herausgeberinstanz 1 keine negativen monetären Beträge ausgibt. In einer alternativen Ausführung kann er aber von der Herausgeberinstanz 1 im Erstellen-Befehl mitgesendet werden und von der Überwachungsinstanz 2 geprüft werden.

Eine Verarbeitung ist beispielsweise "Deaktivieren". Das Deaktivieren, also das Geldvernichten (DESTROY), bewirkt, dass der maskierte elektronische Münzdatensatz Zi nach erfolgreichem Ausführen des Deaktivieren-Befehls durch die Herausgeberinstanz 1 ungültig wird. Man kann also den zu deaktivierenden (maskierten) elektronischen Münzdatensatz in der Überwachungsschicht 4 also nicht mehr weiterverarbeiten. Um Verwirrung zu vermeiden, sollten die entsprechenden (nicht maskierten) elektronischen Münzdatensätze Ci auch in der Direkttransaktionsschicht 3 deaktiviert werden. Beim "Deaktivieren" wird die Vorgängerspalte 22a mit dem elektronischen Münzdatensatz Zi beschrieben, aber keine Nachfolgerspalte 23a, 23b besetzt. Der maskierte elektronische Münzdatensatz $Z_i$ ist beim Deaktivieren daraufhin zu prüfen, ob die Signatur mit der Signatur gemäß Spalte 24 übereinstimmt, um sicherzustellen, dass der elektronische Münzdatensatz Ci tatsächlich von einer Herausgeberinstanz 1 erstellt wurde, wobei wieder andere Mittel für diese Prüfung verwendet werden können. Kann das signierte Zi, das im Deaktivieren-Befehl mitgesendet wird, als von der Herausgeberinstanz 1 signiert bestätigt werden oder als gültig signiert bestätigt werden, wird die Markierung 28 gesetzt (von "0" auf "1"). Die Markierungen gemäß Spalte 26 bis 27 benötigen keine Statusänderung und können ignoriert werden. Die Markierungen gemäß Spalte 25 und 28 werden nach entsprechender Prüfung gesetzt.

Eine Verarbeitung ist beispielsweise das "Aufteilen". Das Aufteilen, also das Teilen eines elektronischen Münzdatensatzes Zi in eine Anzahl n, beispielsweise 2, von elektronischen Münzteildatensätzen $Z_j$ und $Z_k$ erfolgt zunächst in der Direkttransaktionsschicht 3, so wie es in Fig. 3, 5 bis 7 und auch Fig. 9 bis 11 noch gezeigt wird, wobei die monetären Beträge $\upsilon_j$ und des Verschleierungsbetrags $r_i$ generiert werden. $v_k$ und $r_k$ ergeben sich durch Gleichungen (7) und (8). In der Überwachungsinstanz 2 werden die Markierungen 24 bis 27 gesetzt, die Vorgängerspalte 22a wird mit dem elektronischen Münzdatensatz Zi beschrieben, Nachfolgerspalte 23a wird mit $Z_j$ und Nachfolgerspalte 23b wird mit $Z_k$ beschrieben. Die gemäß Spalten 24 bis 27 benötigten Statusänderungen erfolgen nach der entsprechenden Prüfung durch die Überwachungsinstanz 2 und dokumentieren das jeweilige Prüfungsergebnis. Die Markierung gemäß Spalte 28 wird insbesondere im anonymen Modus ignoriert. Ein erster Bereichsnachweis R1 nach Spalte 27a muss beispielsweise erbracht werden, um zu zeigen, dass kein monetärer Betrag negativ ist. Ein zweiter Bereichsnachweis R2 in Spalte 27b ist nicht nötig, da die monetären Teilbeträge der Nachfolger stets kleiner als der monetäre Ausgangsbetrag des Vorgängers ist. Ein Summenbereichsnachweis R3 in Spalte 27c ist ebenfalls in der Regel nicht erforderlich (keine neuen monetären Beträge). Die Spalte 24 wird zum Eintragen einer vom aufteilenden Endgerät M1 bis M3 erzeugten Signatur verwendet.

Eine Verarbeitung ist beispielsweise "Verbinden". Das Verbinden, also das Zusammenfügen zweier elektronischer Münzdatensätze $Z_i$ und $Z_j$ zu einem elektronischen Münzdatensatz $Z_m$ erfolgt zunächst in der Direkttransaktionsschicht 3, so wie es in Fig. 4 noch gezeigt wird, wobei der monetäre Betrag $\upsilon_m$ und der Verschleierungsbetrag $r_m$ berechnet werden. In der Überwachungsinstanz 2 werden die Markierungen 25 bis 28 gesetzt, die Vorgängerspalte 22a wird mit dem elektronischen Münzdatensatz Zi beschrieben, Vorgängerspalte 22b wird mit $Z_j$ und Nachfolgerspalte 23b wird mit $Z_m$ beschrieben. Die Markierungen in den Spalten 25 bis 28 benötigen Statusänderungen und die Überwachungsinstanz 2 führt die entsprechenden Prüfungen durch. Ein erster Bereichsnachweis R1 nach Spalte 27a muss erbracht werden, um zu zeigen, dass kein neues Geld generiert wurde. Ein zweiter Bereichsnachweis R2 in Spalte 27b ist sinnvoll, da der neue monetäre Betrag des Nachfolgers größer sein könnte als ein Maximalwert. Ein Summenbereichsnachweis R3 in Spalte 27c ist ebenfalls in der Regel sinnvoll, da das Endgerät neu empfangene Vorgänger nutzen könnte. Die Markierung gemäß Spalte 28 kann ignoriert werden. Die Spalte 24 wird zum Eintragen einer vom verbindenden Endgerät M1 bis M3 erzeugten Signatur verwendet.

Eine weitere Verarbeitung ist beispielsweise "Umschalten". Das Umschalten ist dann nötig, wenn ein elektronischer Münzdatensatz auf ein anderes Endgerät übertragen wurde und ein erneutes Ausgeben durch das übertragende Endgerät (hier M1) ausgeschlossen werden soll. Beim Umschalten, auch "switch" genannt, wird der vom ersten Endgerät M1 erhaltene elektronische Münzdatensatz $C_k$ gegen einen neuen elektronischen Münzdatensatz Ci mit gleichem monetärem Betrag ausgetauscht. Der neue elektronische Münzdatensatz Ci wird vom zweiten Endgerät M2 generiert. Dieses Umschalten ist notwendig, um die vom ersten Endgerät M1 erhaltenen elektronischen Münzdatensatz $C_k$ zu invalideren (ungültig machen), wodurch ein erneutes Ausgeben des gleichen elektronischen Münzdatensatzes $C_k$ vermieden wird. Denn, solange der elektronische Münzdatensatz $C_k$ nicht umgeschaltet ist, kann - da das erste Endgerät M1 in Kenntnis des elektronischen Münzdatensatzes $C_k$ ist - das erste Endgerät M1 diesen elektronischen Münzdatensatz $C_k$ an ein drittes Endgerät M3 weitergeben. Das Umschalten erfolgt beispielsweise durch Hinzufügen eines neuen Verschleierungsbetrags $r_{add}$ zum Verschleierungsbetrag $r_k$ des erhaltenen elektronischen Münzdatensatz $C_k$, wodurch ein Verschleierungsbetrag $r_l$ erhalten wird, die nur das zweite Endgerät M2 kennt. Dies kann auch in der Überwachungsinstanz 2 erfolgen. Um zu beweisen, dass nur ein neuer Verschleierungsbetrag $r_{add}$ zum Verschleierungsbetrag $r_k$ des maskierten erhaltenen elektronischen Münzdatensatzes $Z_k$ hinzugefügt wurde, der monetäre Betrag aber gleichgeblieben ist, und also Gleichung (11):

$$\upsilon_k = \upsilon_l \qquad\qquad (11)$$

gilt, so muss das zweite Endgerät M2 nachweisen können, dass sich $Z_l$-$Z_k$ als skalares Vielfaches von G also als $r_{add}$*G darstellen lässt. Das heißt, dass nur ein Verschleierungsbetrag $r_{add}$ erzeugt wurde und der monetäre Betrag von Zi gleich dem monetären Betrag von $Z_k$ ist, also $Z_l = Z_k + r_{add}*G$. Dies erfolgt durch das Erzeugen einer Signatur mit dem öffentlichen Schlüssel $Z_l - Z_k = r_{add}*G$. Diese Signatur wird in der Überwachungsschicht 4 verwendet, um die Gültigkeit des umzuschaltenden elektronischen Münzdatensatzes zu bestätigen.

Die Modifikationen "Aufteilen" und "Verbinden" an einem elektronischen Münzdatensatz können auch von einem Endgerät M1 an ein anderes Endgerät M2, M3 delegiert werden, beispielsweise wenn eine Kommunikationsverbindung zur Überwachungsinstanz 2 nicht vorhanden ist.

In Fig. 3 ist ein Ausführungsbeispiel eines Bezahlsystems gemäß der Erfindung zum "Aufteilen", "Verbinden" und "Umschalten" von elektronischen Münzdatensätzen C gezeigt. In Fig. 3 hat das erste Endgerät M1 den Münzdatensatz Ci erhalten und möchte nun eine Bezahltransaktion nicht mit dem gesamten monetären Betrag $v_i$, sondern nur mit einem Teilbetrag $v_k$ durchführen. Dazu wird der Münzdatensatz Ci aufgeteilt. Dazu wird zunächst der monetäre Betrag geteilt:

$$v_i = v_j + v_k \qquad (12)$$

Dabei muss jeder der erhaltenen Beträge $v_j$, $v_k$, größer 0 sein, denn negative monetäre Beträge sind nicht zulässig.

Zudem werden neue Verschleierungsbeträge abgeleitet:

$$r_i = r_j + r_k \qquad (13)$$

Bei einem Aufteilen werden maskierte Münzdatensätze $Z_j$ und $Z_k$ gemäß Gleichung (3) aus den Münzdatensätzen $C_j$ und $C_k$ erhalten und in der Überwachungsinstanz 2 registriert. Für das Aufteilen werden die Vorgängerspalte 22a mit dem Münzdatensatz Zi, die Nachfolgerspalte 23a mit $Z_j$ und die Nachfolgerspalte 23b mit $Z_k$ beschrieben. Zusätzliche Informationen für den Bereichsnachweis R1 (zero-knowledge-proof) sind zu generieren. Die Markierungen in den Spalten 25 bis 27c benötigen Statusänderung und die Überwachungsinstanz 2 führt die entsprechenden Prüfungen durch. Die Markierung gemäß Spalte 28 wird ignoriert.

Dann wird ein Münzteildatensatz, hier $C_k$, vom ersten Endgerät M1 an das zweite Endgerät M2 übertragen. Um ein doppeltes Ausgeben zu verhindern, ist eine Umschalt-Operation sinnvoll, um den vom ersten Endgerät M1 erhaltenen elektronischen Münzdatensatz $C_k$ gegen einen neuen elektronischen Münzdatensatz Ci mit gleichem monetären Betrag auszutauschen. Der neue elektronische Münzdatensatz Ci wird vom zweiten Endgerät M2 generiert. Dabei wird der monetäre Betrag des Münzdatensatzes $C_k$ übernommen und nicht verändert, siehe Gleichung (11).

Dann wird gemäß Gleichung (14) ein neuer Verschleierungsbetrag $r_{add}$ zum Verschleierungsbetrag $r_k$ des erhaltenen elektronischen Münzdatensatz $C_k$ hinzugefügt,

$$r_l = r_k + r_{add} \qquad (14)$$

wodurch ein Verschleierungsbetrag $r_l$ erhalten wird, den nur das zweite Endgerät M2 kennt. Um zu beweisen, dass nur ein neuer Verschleierungsbetrag $r_{add}$ zum Verschleierungsbetrag $r_k$ des erhaltenen elektronischen Münzdatensatz $Z_k$ hinzugefügt wurde, der monetäre Betrag aber gleichgeblieben ist ($v_k = v_l$), muss das zweite Endgerät M2 nachweisen können, dass sich $Z_l - Z_k$ als Vielfaches von G darstellen lässt. Dies erfolgt mittels (öffentlicher) Signatur $R_{add}$ gemäß Gleichung (15):

$$R_{add} = r_{add} \cdot G \qquad (15)$$
$$= Z_l - Z_k = (v_l - v_k)*H + (r_k + r_{add} - r_k)*G$$

wobei G der Generatorpunkt der ECC ist. Dann wird der umzuschaltende Münzdatensatz Ci maskiert mittels der Gleichung (3) oder der Gleichung (3a), um den maskierten Münzdatensatz Zi zu erhalten. Dann wird der maskierte Münzdatensatz Zi signiert mittels der Gleichung (3a), um den signierten Münzdatensatz Si zu erhalten. In der Überwachungsinstanz 2 kann dann die private Signatur $r_{add}$ genutzt werden um beispielsweise den maskierten umzuschaltenden elektronischen Münzdatensatz Zi zu signieren, was als Beweis gilt, dass das zweite Endgerät M2 nur ein Verschleierungsbetrag $r_{add}$ zum maskierten elektronischen Münzdatensatz hinzugefügt hat und keinen zusätzlichen monetären Wert, d.h. $v_l = v_k$.

Die Signatur wird in das Feld der Spalte 24 eingetragen. Hierbei wurde beispielhaft davon ausgegangen, dass die Pseudonyme der empfangenden Endgeräte $M_x$ in der Überwachungsinstanz 2 nachgehalten werden. Sodann wird beim "Aufteilen" die Signatur des ersten Endgeräts M1 eingetragen, da dieses den Münzdatensatz Ci erhalten hat. Sodann wird beim "Umschalten" die Signatur des zweiten Endgeräts M2 eingetragen, da dieses den Münzdatensatz $C_k$ erhalten hat. Alternativ könnten auch die Pseudonyme der sendenden Endgeräte $M_x$ eingetragen werden. Dann wird der umzuschaltende Münzdatensatz Ci maskiert mittels der Gleichung (3), um den maskierten Münzdatensatz Zi zu erhalten. Dann wird der maskierte Münzdatensatz Zi signiert mittels der Gleichung (3a), um den signierten Münzdatensatz $S_l$ zu erhalten.

Der Beweis lautet für Maskierungen mittels Gleichung (3) wie folgt:

$$Z_k = v_k \cdot H + r_k \cdot G \qquad (16)$$
$$Z_l = v_l \cdot H + r_l \cdot G = v_k \cdot H + (r_k + r_{add}) \cdot G$$
$$Z_l - Z_k = ( r_k + r_{add} - r_k) \cdot G$$
$$= r_{add} \cdot G$$

Für Maskierungen mittels der Gleichung (3a) wird eine Signatur über dem monetären Betrag $v_k$, dem Verschleierungsbetrag $r_k$ und dem maskierten Münzdatensatz Z (auch als R bezeichnet) erzeugt. So kann die Signatur durch Neuberechnen der Maskierung in der Überwachungsinstanz 4 validiert werden, um die Echtheit und das Vorhandensein/Besitz des Münzdatensatzes C beweisen zu können.

Fig. 4 zeigt ein Ausführungsbeispiel eines Bezahlsystems gemäß der Erfindung zum Verbinden von elektronischen Münzdatensätzen. Dabei werden im zweiten Endgerät M2 die beiden Münzdatensätze Ci und $C_j$ erhalten. In Anlehnung an das Aufteilen gemäß Fig. 3 wird nun ein neuer Münzdatensatz $Z_m$ erhalten, indem sowohl die monetären Beträge als auch der Verschleierungsbetrag der beiden Münzdatensätze Ci und $C_j$ addiert werden. Dann wird der erhaltene zu verbindende Münzdatensatz $C_m$ mittels der Gleichung (3) oder der Gleichung (3a) maskiert und der maskierte Münzdatensatz $Z_m$ wird in der Überwachungsinstanz registriert. Sodann wird beim "Verbinden" die Signatur des zweiten Endgeräts M2 eingetragen, da dieses die Münzdatensätze Ci und $C_j$ erhalten hat.

Für Maskierungen mittels der Gleichung (3a) kann eine erste Signatur über den monetären Betrag $v_i$, dem Verschleierungsbetrag $r_i$ und dem maskierten Münzdatensatz $Z_i$ erzeugt werden und es kann eine zweite Signatur über den monetären Betrag $v_j$, dem Verschleierungsbetrag $r_j$ und dem maskierten Münzdatensatz $Z_j$ erzeugt werden. Beide Signaturen können durch jeweiliges Neuberechnen der Maskierung in der Überwachungsinstanz 4 validiert werden, um die Echtheit und das Vorhandensein/Besitz des Münzdatensatzes C beweisen zu können. Die erste Signatur kann auch mit der zweiten Signatur verknüpft werden, um eine gemeinsame Signatur zu bilden.

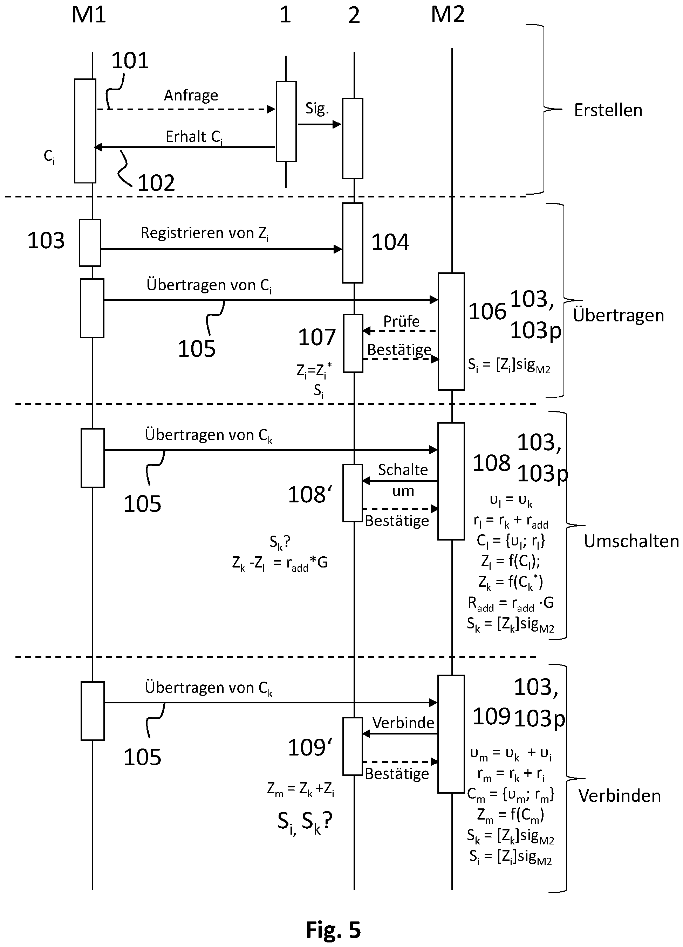

Fig. 5 bis 7 ist jeweils ein Ausführungsbeispiel eines Verfahrensablaufdiagramms eines Verfahrens 100. Nachfolgend werden die Figuren 5 bis 7 gemeinsam erläutert. In den optionalen Schritten 101 und 102 wird ein Münzdatensatz angefragt und seitens der Herausgeberinstanz 1 dem ersten Endgerät M1 nach Erstellen des elektronischen Münzdatensatzes bereitgestellt. Ein signierter maskierter elektronischer Münzdatensatz wird im Schritt 103 an die Überwachungsinstanz 2 gesendet. Im Schritt 103 erfolgt ein Maskieren des erhaltenen elektronischen Münzdatensatzes Ci gemäß der Gleichung (3) und ein Signieren im Schritt 103p gemäß Gleichung (3a) wie in Fig. 1 erläutert. Dann wird im Schritt 104 der maskierte elektronische Münzdatensatz Zi in der Überwachungsinstanz 2 registriert. Optional kann M1 den erhaltenen elektronischen Münzdatensatz umschalten, dann würde eine Signatur Si in der Überwachungsinstanz 2 eingetragen. Im Schritt 105 erfolgt das Übertragen des Münzdatensatzes Ci in der Direkttransaktionsschicht 3 an das zweite Endgerät M2. In den optionalen Schritten 106 und 107 erfolgt eine Validitäts-Prüfung mit vorheriger Maskierung, bei der im Gutfall die Überwachungsinstanz 2 die Gültigkeit des Münzdatensatzes Zi bzw. Ci bestätigt wird.

Im optionalen Schritt 108 erfolgt dann das Umschalten eines erhaltenen Münzdatensatzes $C_k$ (es könnte natürlich auch der erhaltene Münzdatensatz Ci umgeschaltet werden) auf einen neuen Münzdatensatz Ci, wodurch der Münzdatensatz $C_k$ ungültig wird und ein Doppeltausgeben verhindert wird. Dazu wird der monetäre Betrag $v_k$ des übertragenen Münzdatensatzes $C_k$ als "neuer" monetärer Betrag $v_l$ verwendet. Zudem wird, wie bereits mit Gleichungen (14) bis (17) erläutert, der Verschleierungsbetrag $r_l$ erstellt. Der zusätzliche Verschleierungsbetrag $r_{add}$ wird verwendet, um zu beweisen, dass kein neues Geld (in Form eines höheren monetären Betrags) von dem zweiten Endgerät M2 generiert wurde. Dann wird der maskierte Münzdatensatz signiert und der signierte maskierte umzuschaltende Münzdatensatz Zi an die Überwachungsinstanz 2 gesendet und das Umschalten von $C_k$ auf Ci beauftragt. Zudem wird eine Signatur $S_k$ vom ersten oder zweiten Endgerät M1, M2 erstellt und in der Überwachungsinstanz 2 hinterlegt. Zudem oder alternativ könnte auch eine Signatur Si erstellt und in der Überwachungsinstanz 2 hinterlegt werden, wenn sendende Endgeräte $M_x$ anstelle empfangende Endgeräte $M_x$ registriert würden.

Im Schritt 108' erfolgt die entsprechende Prüfung in der Überwachungsinstanz 2. Dabei wird $Z_k$ in die Spalte 22a gemäß Tabelle in Fig. 2 eingetragen und in Spalte 23b der umzuschreibende Münzdatensatz Zi. Es erfolgt sodann eine Prüfung in der Überwachungsinstanz 2, ob $Z_k$ (noch) gültig ist, also ob die letzte Verarbeitung von $Z_k$ in einer der

Spalten 23a/b eingetragen ist (als Beweis dafür, dass $Z_k$ nicht weiter aufgeteilt oder deaktiviert oder verbunden wurde) und ob eine Prüfung für die letzte Verarbeitung fehlgeschlagen ist. Zudem wird Zi in die Spalte 23b eingetragen und die Markierungen in den Spalten 25, 26, 27 werden zunächst auf "0" gesetzt. Nun erfolgt eine Prüfung, ob Zi gültig ist, wobei dabei die Prüfung gemäß Gleichungen (16) und (17) verwendet werden können. Im Gutfall wird die Markierung in Spalte 25 auf "1" gesetzt, ansonsten auf "0". Nun erfolgt eine Prüfung, die Berechnung gemäß Gleichung (10) ergibt, dass $Z_k$ und Zi gültig sind und entsprechend wird die Markierung in Spalte 26 gesetzt. Weiterhin wird geprüft, ob die Bereiche schlüssig sind, sodann wird die Markierung in Spalte 27 gesetzt. Dann wird die Signatur Si mit dem entsprechend in der Überwachungsinstanz 2 vorhandenen öffentlichen Verifikationsschlüssel verifiziert und entsprechend protokolliert. Wenn alle Prüfungen erfolgreich waren, und dies entsprechend unveränderlich in der Überwachungsinstanz 2 festgehalten wurde, gilt der Münzdatensatz als umgeschaltet. D.h. der Münzdatensatz $C_k$ ist nicht mehr gültig und ab sofort ist der Münzdatensatz Ci gültig. Ein Doppelausgeben ist nicht mehr möglich, wenn ein drittes Endgerät M3 die Validität des (doppelt ausgegebenen) Münzdatensatz an der Überwachungsinstanz 2 erfragt. Beim Prüfen der Signatur kann im pseudonymen Modus geprüft werden, ob das Endgerät M2 einen Grenzwert für monetäre Beträge überschritten hat. Die Prüfung erfolgt im Hinblick auf eine Zeiteinheit, beispielsweise könnte ein Tagesgrenzwert damit überwacht werden. Wenn der Grenzwert überschritten ist, verweigert die Überwachungsinstanz 2 zunächst das Umschalten des Münzdatensatzes Ci und fordert das Endgerät M2 auf, sich zu deanonymisieren. Systembedingt ist ein deanonymisiertes Umschalten möglicherweise gestattet.

Im optionalen Schritt 109 erfolgt ein Verbinden von zwei Münzdatensätzen $C_k$ und Ci auf einen neuen Münzdatensatz $C_m$, wodurch die Münzdatensätze $C_k$, Ci ungültig werden und ein Doppelausgeben verhindert wird. Dazu wird der monetäre Betrag $\upsilon_m$ aus den beiden monetären Beträgen $\upsilon_k$ und $\upsilon_i$ gebildet. Dazu wird der Verschleierungsbetrag $r_m$ aus den beiden Verschleierungsbeträgen $r_k$ und $r_i$ gebildet. Zudem wird mittels Gleichung (3) der maskierte zu verbindende Münzdatensatz $Z_m$ erhalten und dieser (mit anderen Informationen zusammen) an die Überwachungsinstanz 2 gesendet und das Verbinden als Verarbeitung erbeten. Zudem wird eine Signatur $S_k$ und eine Signatur Si erzeugt und der Überwachungsinstanz 2 mitgeteilt.

Im Schritt 109' erfolgt die entsprechende Prüfung in der Überwachungsinstanz 2. Dabei wird $Z_m$ in die Spalte 23b gemäß Tabelle in Fig. 2 eingetragen, was auch gleich einer Umschreibung. Es erfolgt sodann eine Prüfung in der Überwachungsinstanz 2, ob $Z_k$ und Zi (noch) gültig sind, also ob die letzte Verarbeitung von $Z_k$ oder Zi in einer der Spalten 23a/b eingetragen ist (als Beweis dafür, dass $Z_k$ und Zi nicht weiter aufgeteilt oder deaktiviert oder verbunden wurden) und ob eine Prüfung für die letzte Verarbeitung fehlgeschlagen ist. Zudem werden die Markierungen in den Spalten 25, 26, 27 zunächst auf "0" gesetzt. Nun erfolgt eine Prüfung, ob $Z_m$ gültig ist, wobei dabei die Prüfung gemäß Gleichungen (16) und (17) verwendet werden können. Im Gutfall wird die Markierung in Spalte 25 auf "1" gesetzt, ansonsten auf "0". Nun erfolgt eine Prüfung, die Berechnung gemäß Gleichung (10) ergibt, dass Zi plus $Z_k$ gleich $Z_m$ ist und entsprechend wird die Markierung in Spalte 26 gesetzt. Weiterhin wird geprüft, ob die Bereiche schlüssig sind, sodann wird die Markierung in Spalte 27 gesetzt. Beim Prüfen der Signatur kann geprüft werden, ob das Endgerät M2 einen Grenzwert für monetäre Beträge überschritten hat. Die Prüfung erfolgt im Hinblick auf eine Zeiteinheit, beispielsweise könnte ein Tagesgrenzwert damit überwacht werden. Wenn der Grenzwert überschritten ist, verweigert die Überwachungsinstanz 2 zunächst das Verbinden des Münzdatensatzes $C_m$ und fordert das Endgerät M2 auf, sich zu deanonymisieren. Ein deanonymisiertes Verbinden ist dann möglicherweise gestattet.

Im optionalen Schritt 110 erfolgt ein asymmetrisches Aufteilen eines Münzdatensatz Ci in zwei Münzteildatensätzen $C_k$ und $C_j$, wodurch der Münzdatensatz Ci ungültig gemacht wird und die beiden asymmetrisch geteilten Münzteildatensätze $C_k$ und $C_j$ gültig gemacht werden sollen. Bei einem asymmetrischen Aufteilen wird der monetären Betrag $\upsilon_i$ in verschieden große monetäre Teilbeträge $\upsilon_k$ und $\upsilon_j$ aufgeteilt. Dazu wird der Verschleierungsbetrag $r_i$ in die beiden Verschleierungsbeträge $r_k$ und $r_j$ aufgeteilt. Zudem werden mittels Gleichung (3) die maskierten Münzteildatensätze $Z_k$ und $Z_j$ erhalten und diese mit weiteren Informationen, beispielsweise den Bereichsprüfungen (Zero-knowledge-proofs), an die Überwachungsinstanz 2 gesendet und das Aufteilen als Verarbeitung erbeten. Zudem wird eine Signatur Si erstellt und an die Überwachungsinstanz 2 gesendet.

Im Schritt 110' erfolgt die entsprechende Prüfung in der Überwachungsinstanz 2. Dabei werden $Z_j$ und $Z_k$ in die Spalten 23a/b gemäß Tabelle in Fig. 2 eingetragen. Es erfolgt sodann eine Prüfung in der Überwachungsinstanz 2, ob Zi (noch) gültig ist, also ob die letzte Verarbeitung von Zi in einer der Spalten 23a/b eingetragen ist (als Beweis dafür, dass Zi nicht weiter aufgeteilt oder deaktiviert oder verbunden wurde) und ob eine Prüfung für die letzte Verarbeitung fehlgeschlagen ist. Zudem werden die Markierungen in den Spalten 25, 26, 27 zunächst auf "0" gesetzt. Nun erfolgt eine Prüfung, ob $Z_j$ und $Z_k$ gültig sind, wobei dabei die Prüfung gemäß Gleichungen (16) und (17) verwendet werden können. Im Gutfall wird die Markierung in Spalte 25 auf "1" gesetzt. Nun erfolgt eine Prüfung, die Berechnung gemäß Gleichung (10) ergibt, dass Zi gleich $Z_k$ plus $Z_j$ ist und entsprechend wird die Markierung in Spalte 26 gesetzt. Weiterhin wird geprüft, ob die Bereiche schlüssig sind, sodann wird die Markierung in Spalte 27 gesetzt. Beim Prüfen der Signatur kann geprüft werden, ob das Endgerät M2 einen Grenzwert für monetäre Beträge überschritten hat. Die Prüfung erfolgt im Hinblick auf eine Zeiteinheit, beispielsweise könnte ein Tagesgrenzwert damit überwacht werden. Wenn der Grenzwert überschritten ist, verweigert die Überwachungsinstanz 2 zunächst das Aufteilen des Münzdatensatzes Ci und fordert das Endgerät M2 auf, sich zu deanonymisieren. Ein deanonymisiertes Aufteilen ist dann möglicherweise gestattet.

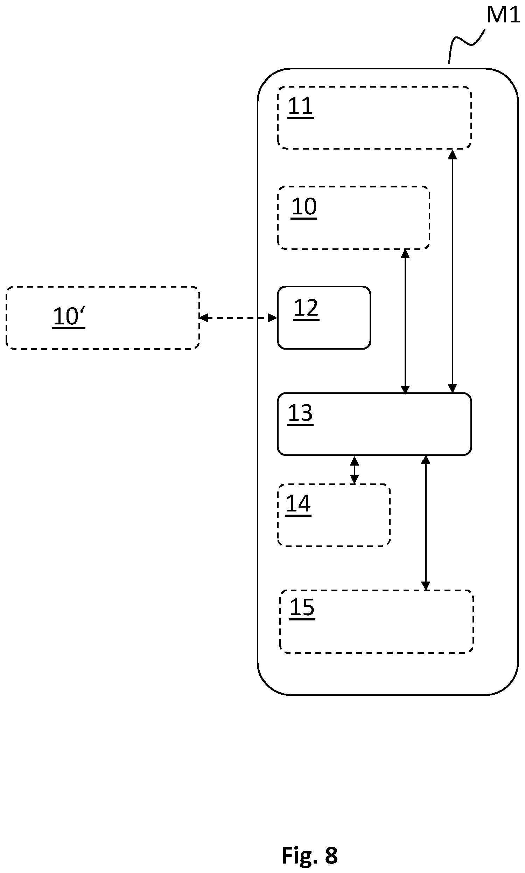

In Fig. 8 ist ein Ausführungsbeispiel eines erfindungsgemäßen Geräts M1 gezeigt. Das Gerät M1 kann elektronische Münzdatensätze Ci in einem Datenspeicher 10, 10' ablegen. Dabei können die elektronischen Münzdatensätze Ci auf dem Datenspeicher 10 des Geräts M1 liegen oder in einem externen Datenspeicher 10' verfügbar sein. Bei Verwenden eines externen Datenspeichers 10' könnten die elektronischen Münzdatensätze Ci in einem Online-Speicher abgelegt sein, beispielsweise einem Datenspeicher 10' eines Anbieters für digitale Geldbörsen. Zusätzlich könnten auch private Datenspeicher, bspw. ein Network-Attached-Storage, NAS in einem privaten Netzwerk verwendet werden.

In einem Fall ist der elektronische Münzdatensatz Ci als ein Ausdruck auf Papier dargestellt. Dabei kann der elektronische Münzdatensatz durch einen QR-Code, ein Bild eines QR-Codes dargestellt werden, oder aber auch eine Datei oder eine Zeichenfolge (ASCII) sein.

Das Gerät M1 hat mindestens eine Schnittstelle 12 als Kommunikationskanal zum Ausgeben des Münzdatensatzes Ci zur Verfügung. Diese Schnittstelle 12 ist beispielsweise eine optische Schnittstelle, beispielsweise zum Darstellen des Münzdatensatzes Ci auf einem Anzeigeeinheit (Display), oder einen Drucker zum Ausdrucken des elektronischen Münzdatensatzes Ci als Papier-Ausdruck. Diese Schnittstelle 12 kann auch eine digitale Kommunikationsschnittstelle, beispielsweise für Nahfeldkommunikation, wie NFC, Bluetooth, oder eine Internetfähige Schnittstelle, wie TCP, IP, UDP, HTTP oder ein Zugriff auf eine Chipkarte als Sicherheitselement sein. Diese Schnittstelle 12 ist beispielsweise eine Datenschnittstelle, sodass der Münzdatensatz Ci über eine Applikation, beispielsweise einem Instant-Messenger-Dienst oder als Datei oder als Zeichenfolge zwischen Geräten übertragen wird.

Zudem ist die Schnittstelle 12 oder eine weitere Schnittstelle (nicht dargestellt) des Geräts M1 dazu eingerichtet, mit der Überwachungsinstanz 2 gemäß der Beschreibung in den Figuren 1 bis 6 zu interagieren. Das Gerät M1 ist dazu bevorzugt onlinefähig.

Darüber hinaus kann das Gerät M1 auch eine Schnittstelle zum Empfang von elektronischen Münzdatensätzen aufweisen. Diese Schnittstelle ist eingerichtet visuell präsentierte Münzdatensätze, beispielsweise mittels Erfassungsmodul wie Kamera oder Scanner, oder digital präsentierte Münzdatensätze, empfangen via NFC, Bluetooth, TCP, IP, UDP, HTTP oder mittels einer Applikation präsentierte Münzdatensätze zu empfangen.

Das Gerät M1 umfasst auch eine Recheneinheit 13, die das oben beschriebene Verfahren zum Maskieren von Münzdatensätzen und die Verarbeitungen an Münzdatensätzen durchführen kann.

Das Gerät M1 ist onlinefähig und kann bevorzugt mittels eines Standorterkennungs-Moduls 15 erkennen, wenn es mit einem WLAN verbunden ist. Optional kann ein spezifisches WLAN Netz als bevorzugt markiert sein (=Standortzone), sodass das Gerät M1 besondere Funktionen nur ausführt, wenn es in diesem WLAN Netz angemeldet ist. Alternativ erkennt das Standorterkennungs-Modul 15, wenn das Gerät M1 in vordefinierten GPS-Koordinaten inklusive eines definierten Radius ist und führt die besonderen Funktionen entsprechend der so definierten Standortzone durch. Diese Standortzone kann entweder manuell in das Gerät M1 oder via andere Einheiten/Module in das Gerät M1 eingebracht werden. Die besonderen Funktionen, die das Gerät M1 bei Erkennen der Standortzone durchführt, sind insbesondere das Übertragen von elektronischen Münzdatensätzen von/zum externen Datenspeicher 10 von/zu einem Tresormodul 14 und ggf. das Übertragen maskierter Münzdatensätze Z an die Überwachungsinstanz 2, beispielsweise im Rahmen von den o.g. Verarbeitungen an einem Münzdatensatz.

Im einfachsten Fall werden im Endgerät M1 alle Münzdatensätze Ci nach Erhalt automatisch zu einem Münzdatensatz verbunden (siehe Verbinden-Verarbeitung bzw. Verbinden-Schritt). Das heißt, sobald ein neuer elektronischer Münzdatensatz empfangen wird, wird ein Verbinden bzw. Umschalten-Befehl an die Überwachungsinstanz 2 gesendet. Das Gerät M1 kann elektronische Münzdatensätze auch in algorithmisch festgelegten Denominationen vorbereiten und im Datenspeicher 10, 10' vorhalten, damit auch ohne Datenverbindung zur Überwachungsinstanz 2 ein Bezahlvorgang möglich ist.

In Fig. 9 ist ein Ablaufschema eines Verfahrens gezeigt, mit dem beispielsweise das Einhalten eines Grenzwertes für monetäre Beträge pro Zeiteinheit ermöglicht wird.

Im oberen Teil der Figur ist das Bezahlsystem bestehend aus drei Endgeräten M1, M2, M3 gezeigt. Im unteren Teil der Figur sind zwei Datenstrukturen 910, 920 der Überwachungsinstanz 2 gezeigt. In der Datenstruktur 910 sind die gültigen maskierten Münzdatensätze Zi gespeichert. Die Datenstruktur 920 umfasst die Zuordnung pseudonym gesendeter maskierten Münzdatensätze zu den Pseudonym und von kann als Register noch zu prüfender pseudonym gesendeter Münzdatensätze betrachtet werden. Anhand der Daten in der Datenstruktur 920 kann die Überwachungsinstanz 2 entscheiden, ob für ein Pseudonym ein Bereichsnachweis angefordert wird.

Folgende Transaktionen wurden durchgeführt:

1. Das erste Endgerät M1 hat eine Münze aufgeteilt 901. Die Überwachungsinstanz 2 weiß daher, dass die Münze C1 ein Ergebnis dieser Aufteilung ist und speichert den maskierten Münzdatensatz Z1 in der Datenstruktur 910. Das erste Endgerät M1 könnte die Aufteilung der Überwachungsinstanz 2 anonym oder pseudonym senden. In der Darstellung wird davon ausgegangen, dass die Endgeräte M1 und M3 ihre maskierten Münzdatensätze anonym an die Überwachungsinstanz 2 senden.

2. Das erste Endgerät M1 sendet die Münze C1 direkt an das zweite Endgerät M2 in einem direkten Übertragungsschritt 902. Die Überwachungsinstanz 2 erhält hierüber keine Informationen.

3. Das zweite Endgerät M2 wandelt die Münze C1 in die Münze C2 um (schaltet um) 903. In der Datenstruktur 910 wird der neue maskierte Münzdatensatz Z2 gespeichert und der alte maskierte Münzdatensatz Z1 gelöscht (bzw. als ungültig markiert). Das zweite Endgerät M2 sendet seine maskierten (oder zumindest die dargestellten) Münzdatensätze pseudonymisiert an die Überwachungsinstanz 2. Somit erhält die Überwachungsinstanz 2 zudem die Information, dass das zweite Endgerät M2 mit dem Pseudonym $P_{M2}$ die Münze C1 empfangen hat (und nun Münze C2 besitzt) und speichert entsprechend in der Datenstruktur 920 Z2 (und/oder Z1) für $P_{M2}$. Zudem wird die Überwachungsinstanz 2 mindestens einen Prüfungsschritt, wie einen Bereichsnachweis für den Münzdatensatz Z2 oder einen Summenbereichsnachweis für das Endgerät M2, überspringen.

4. Das zweite Endgerät M2 sendet die Münze C2 in einem weiteren direkten Übertragungsschritt 902 an das dritte Endgerät M3. Die Überwachungsinstanz 2 erhält hierüber keine Informationen.

5. Das dritte Endgerät M3 verbindet im Schritt 904 die empfangene Münze C2 zur verbundenen Münze C3 und sendet diese Information mit anonymen maskierten Münzdatensätzen an die Überwachungsinstanz 2. Die Überwachungsinstanz 2 führt daher zunächst alle Prüfungsschritte aus, also insbesondere alle Bereichsnachweise für die beteiligten maskierten Münzdatensätze Z2 ... und Z3 oder auch einen Summenbereichsnachweis für das dritte Endgerät M3. Die Überwachungsinstanz 2 löscht erst danach den maskierten Münzdatensatz Z2 (sowie die anderen Münzdatensätze des Vorgangs) aus der Datenstruktur 910 und speichert den neuen maskierten Münzdatensatz Z3 als gültigen maskierten Münzdatensatz.

6. Das dritte Endgerät M3 sendet im Schritt 902 die Münze C3 direkt an das zweite Endgerät M2. Die Überwachungsinstanz 2 erhält hierüber wiederum keine Informationen.

7. Das zweite Endgerät M2 wandelt in einem weiteren Schritt 903 die Münze C3 in die Münze C4 um (umschalten) und sendet einen maskierten Münzdatensatz Z4 zusammen mit seinem Pseudonym an die Überwachungsinstanz 2. Die Überwachungsinstanz 2 erhält die Information führt die notwendigen Prüfungen aus. Mit Hilfe der Datenstruktur 920 bestimmt die Überwachungsinstanz 2, ob nun für das Pseudonym des Endgerätes M2 eine oder mehrere Prüfungen nachgeholt werden sollen. Ist das Kriterium für ein Nachholen, wie Zeitablauf oder Anzahl an Transaktionen für ein Pseudonym, noch nicht erfüllt, vermerkt lediglich den weiteren maskierten Münzdatensatz Z4 für das Pseudonym in der Datenstruktur 920. Die Überwachungsinstanz 2 speichert den maskierten Münzdatensatz Z4 in die Datenstruktur 910 und löscht dort den maskierten Münzdatensatz Z3. Ist ein Kriterium für einen nachholbaren Prüfungsschritt dagegen erfüllt, führt es dagegen zunächst den nachholbaren Prüfungsschritt aus (oder dessen Äquivalent).

Die Überwachungsinstanz 2 hat im konkreten Beispiel die Information, dass das zweite Endgerät M2 die Münze C2 hatte (siehe Schritt 3). Da die Summe der monetären Beträge von Münze C2 und Münze C4 einen Münzschwellwert überschreiten könnte, fordert die Überwachungsinstanz 2 von dem zweiten Endgerät M2 einen Summenbereichsnachweis (oder eine Summenbereichsbestätigung) an. Der Summenbereichsnachweis zeigt, dass die Summe der monetären Beträge der Münzen C2 und C4 noch nicht das - beispielsweise tägliche - Limit der Transaktionen für das zweite Endgerät M2 überschreitet. Die Überwachungsinstanz 2 kann auch ein Limit für eine zeitunabhängige Anzahl von Transaktionen überwachen (Bereichsnachweis nach 3/5/10/... Transaktionen). Alternativ oder zusätzlich zu einer Summenprüfung mehrerer Münzdatensätze kann die Überwachungsinstanz 2 eine Bereichsprüfung für die einzelnen Münzdatensätze nachholen, die in der Datenstruktur 920 mit dem Pseudonym $P_{M2}$ verknüpft sind (Ist der monetäre Betrag jedes Münzdatensatzes Z2 und Z4 kleiner als X?). Wurden Prüfungen erfolgreich nachgeholt, können auch die entsprechenden Datensätze in der Datenstruktur 920 gelöscht werden.

In Fig. 10 ist ein weiteres Ausführungsbeispiel eines Ablaufs in einem Bezahlsystem mit maskierten Münzdatensätzen gezeigt. Ein erstes Endgerät M1 sendet in Schritten 151 anonyme maskierte Münzdatensätze an die Überwachungsinstanz 2. Ein zweites Endgerät M2 sendet dagegen in Schritten 161 pseudonymisierte maskierte Münzdatensätze an die Überwachungsinstanz 2.

Die Überwachungsinstanz 2 reagiert auf jeden der anonymen Sendeschritte 151 des ersten Endgerätes M1 (in seinem anonymen Modus) mit einer (nachholbaren) Prüfung für den maskierten Münzdatensatz oder das erste Endgerät M1. Die gegebenenfalls zusätzlichen, notwendigen Prüfungen sind in Fig. 10 nicht dargestellt. In Schritt 152 fordert die Überwachungsinstanz 2 für jeden maskierten Münzdatensatz einen Bereichsnachweis, dass der monetäre Betrag des maskierten Münzdatensatzes aus dem Schritt 151 unter einem Maximalwert liegt (oder eine entsprechende Bereichsbestätigung). Alternativ oder zusätzlich fordert die Überwachungsinstanz mit Schritt 152 einen Summenbereichsnachweis (oder - bestätigung) von dem ersten Endgerät M1. Den (oder die) angeforderten Nachweis(e) muss das erste Endgerät M1 in Schritt 153 erstellen und in Schritt 154 senden, damit der (mindestens eine) maskierte Münzdatensatz des Schrittes 151 in der Überwachungsinstanz 2 als gültig behandelt wird.

Die Überwachungsinstanz 2 reagiert auf den ersten Sendeschritte 161 des zweiten Endgerätes M2 (in seinem pseudonymen Modus) mit dem Überspringen einer (nachholbaren) Prüfung für den maskierten Münzdatensatz oder das zweite Endgerät M2. Der pseudonym gesendete maskierte Münzdatensatz wird als gültig registriert. Es erfolgen beispielsweise hier nicht dargestellte notwendige Prüfungen, die jedoch nicht eine weitere Kommunikation mit dem zweiten Endgerät M2 voraussetzen. Wie zuvor an anderen Beispielen beschrieben, speichert die Überwachungsinstanz 2 eine Zuordnung zwischen dem Pseudonym und dem(/n) pseudonym gesendeten maskierten Münzdatensatz(-sätzen). In dem gezeigten Beispiel reagiert die Überwachungsinstanz 2 auch auf einen zweiten (oder weitere) Sendeschritte 161 des zweiten Endgerätes M2 analog. Sie prüft dabei jeweils für das Pseudonym, ob ein Nachholkriterium erfüllt ist.

Erst im dritten dargestellten Schritt 161 stellt die Überwachungsinstanz 2 fest, dass für das Pseudonym eine Prüfung nachgeholt werden soll. Es sendet eine Aufforderung 162 an das zweite Endgerät M2, beispielsweise Bereichsnachweise für mehrere Münzdatensätze oder eine Summenbereichsnachweis zu erstellen. In Schritt 163 erstellt das zweite Endgerät M2 mehrere Bereichsnachweise, eine Summenbereichsnachweis oder eine Summenbereichsbestätigung und sendet diese in Schritt 164 an die Überwachungsinstanz 2. Im Schritt 163 werden beispielsweise mehrere Münzdatensätze des zweiten Endgeräts M2 ausgewählt und über deren monetären Beträge eine Summe gebildet. Diese Münzdatensätze betreffen entweder nur pseudonymisierte Münzdatensätze oder anonyme und pseudonymisierte Münzdatensätze (hierbei wird auf die bereits versendeten maskierten Münzdatensätze abgestellt und die Summe wird aus den monetären Beträgen der korrespondierenden unmaskierten Münzdatensätzen gebildet). Die Auswahl kann anhand von Kriterien getroffen werden, die entweder systembedingt bekannt sind oder im Schritt 162 von der Überwachungsinstanz 2 übertragen wurden. Die Kriterien sind beispielsweise ein Zeitraum, insbesondere eine vordefinierte Zeitspanne in der eine Summe aller monetären Beträge einen bestimmten Bereich nicht überschreiten sollten/dürfen, beispielsweise ein monetärere Betrag x Euro pro Zeiteinheit y. Das Kriterium kann alternativ oder zusätzlich auch eine Liste im ersten Endgerät M1 oder der Überwachungsinstanz 2 sein. Damit wird eine gewisse Randomisierung des Bereichs möglich, mit der das System noch weiter abgesichert wird. Die gebildete Summe wird dann mit dem Bereich (und ggf. unter Anwendung des Kriteriums) abgeglichen. Im Schritt 164 wird die angeforderte Summenbereichsbestätigung (oder der angeforderte Summenbereichsnachweis) von dem zweiten Endgerät M2 an die Überwachungsinstanz 2 übertragen.

Da eine Bezahltransaktion (Übertragung von Münzdatensätzen) eines großen geldwerten Betrags auch in mehrere Bezahltransaktionen kleinerer geldwerter Beträge aufgeteilt werden kann, die jeweils unterhalb eines Bereichs liegen könnten, wird mit dem Verfahren der Bereich (=Grenzwert) gegebenenfalls endgerätspezifisch und zeitraumabhängig definiert. Der Bereich betrifft in der Regel eine Summe aller Transaktionen innerhalb einer bestimmten Zeiteinheit, die von einem Endgerät empfangen und/oder gesendet werden. Es wird daher ein Mechanismus geschaffen, mit dem festgestellt wird, wie hoch die Summe aller monetären Beträge, die von einem Endgerät gesendet oder empfangen wurden, innerhalb einer bestimmten Zeiteinheit ist.

Im Rahmen der Erfindung können alle beschriebenen und/oder gezeichneten und/oder beanspruchten Elemente beliebig miteinander kombiniert werden.

BEZUGSZEICHENLISTE

1 Herausgeberinstanz oder Bank
2 Überwachungsinstanz
21 Befehls-Eintrag
22a, b Eintrag eines zu verarbeitenden elektronischen Münzdatensatzes (Vorgänger)
23a, b Eintrag eines verarbeiteten elektronischen Münzdatensatzes (Nachfolger)
24 Signatur-Eintrag
25 Markierung der Gültigkeitsprüfung
26 Markierung der Berechnungsprüfung
27a, 27b, 27c Markierung der Bereichsnachweisprüfung
28 Markierung der Signatur-Prüfung
29 Abschluss-Markierung
3 Direkttransaktionsschicht
4 Überwachungsschicht
5 Applikation gemeinsame Geldbörse
10, 10' Datenspeicher
11 Anzeige

12 Schnittstelle

13 Recheneinheit

14 Tresormodul

15 Standorterkennungs-Modul

M1 erstes Endgerät

M2 zweites Endgerät

M3 drittes Endgerät

$C_i$ elektronischer Münzdatensatz

$C_j$, $C_k$ aufgeteilter elektronischer Münzteildatensatz,

$C_l$ umzuschaltender elektronischer Münzdatensatz

$C_m$ zu verbindendender elektronischer Münzdatensatz

$Z_i$ maskierter elektronischer Münzdatensatz

$Z_j$, $Z_k$ maskierter aufgeteilter elektronischer Münzteildatensatz

$Z_l$ maskierter umzuschaltender elektronischer Münzdatensatz

$Z_m$ maskierter zu verbindender elektronischer Münzdatensatz

S Signierter maskierter elektronischer Münzdatensatz

$\upsilon_i$, Monetärer Betrag

$\upsilon_j$, $\upsilon_j$ Aufgeteilter monetärer Betrag

$\upsilon_l$, Monetärer Betrag eines umzuschaltenden/umgeschalteten elektr. Münzdatensatzes

$\upsilon_m$, Monetärer Betrag eines zu verbindenden/verbundenen elektr. Münzdatensatz

$r_i$ Verschleierungsbetrag, Zufallszahl

$r_j$, $r_j$ Verschleierungsbetrag eines aufgeteilten elektronischen Münzdatensatzes

$r_m$ Verschleierungsbetrag eines zu verbindenden verbundenen elektr. Münzdatensatzes

$Ci^*$ übertragener elektronischer Münzdatensatz

$C_j^*$, $C_k^*$ übertragener aufgeteilter elektronischer Münzteildatensatz,

$Z_i^*$ maskierter übertragener elektronischer Münzdatensatz

$Z_j^*$, $Z_k^*$ maskierter übertragener aufgeteilter elektronischer Münzdatensatz

f(C) (Homomorphe) Einwegfunktion

$[Zi]Sig(SKi)$ Signatur der Herausgeberinstanz

$[Zi] Sig(SK_Mx)$ Signatur des Endgeräts

151-154, 161-164 Verfahrensschritte gemäß einem Ausführungsbeispiel

901-904 Verfahrensschritte gemäß einem Ausführungsbeispiel

210, 910 Register der Überwachungsinstanz

220, 920 Zusätzliche Datenstruktur der Überwachungsinstanz

## Patentansprüche

1. Ein Verfahren (100) zum direkten Übertragen von elektronischen Münzdatensätzen ($C_i$) zwischen Endgeräten (M1, M2, M3), wobei eine Überwachungsinstanz (2) anonyme maskierte elektronische Münzdatensätze ($Z_i$, $Z_k$, Zi, $Z_m$) registriert, mit den folgenden Schritten in einem ersten Endgerät (M1):

   - Empfangen (102) eines elektronischen Münzdatensatzes ($C_i$), wobei der zumindest eine elektronische Münzdatensatz ($C_i$) einen monetären Betrag ($\upsilon_i$) und einen Verschleierungsbetrag ($r_i$) aufweist;
   - Maskieren (103) eines modifizierten elektronischen Münzdatensatzes ($C_k$, $C_l$, $C_m$) oder des empfangenen elektronischen Münzdatensatzes ($C_i$) durch Anwenden einer Einwegfunktion (f(C)), die beispielsweise homomorph ist, auf den elektronischen Münzdatensatz ($C_i$, $C_k$, $C_l$, $C_m$), vorzugsweise auf dessen Verschleierungsbetrag (n, $r_j$, $r_k$) zum Erhalten eines maskierten elektronischen Münzdatensatzes ($Z_i$, $Z_k$, Zi, $Z_m$),
   - Verknüpfen (103p) des maskierten elektronischen Münzdatensatzes ($Z_i$, $Z_k$, $Z_l$, $Z_m$) mit einem Pseudonym zum Erhalten eines pseudonymisierten maskierten elektronischen Münzdatensatzes ($S_i$, $S_k$, $S_l$, $S_m$); und
   - Senden (104) des pseudonymisierten maskierten elektronischen Münzdatensatzes ($S_i$, $S_k$, Si, $S_m$) an die Überwachungsinstanz (2).

2. Das Verfahren (100) nach Anspruch 1, wobei durch das Senden (104) des pseudonymisierten maskierten elektronischen Münzdatensatzes ($S_i$, $S_k$, $S_l$, $S_m$) anstelle eines anonymen maskierten elektronischen Münzdatensatzes ($Z_i$, $Z_k$, $Z_l$, $Z_m$) die Anzahl von Bereichsbestätigungen oder Bereichsnachweisen reduziert wird, welche die Überwachungsinstanz (2) von dem ersten Endgerät (M1) anfordert.

3. Das Verfahren (100) nach Anspruch 1 oder 2, mit den weiteren Schritten im ersten Endgerät (M1):

- Empfangen einer Anforderung für eine Summenbereichsbestätigung oder eines Summenbereichsnachweises von der Überwachungsinstanz (2), und
- Senden der angeforderten Summenbereichsbestätigung oder des angeforderten Summenbereichsnachweises an die Überwachungsinstanz (2).

4. Das Verfahren (100) nach Anspruch 1 oder 2, mit den weiteren Schritten im ersten Endgerät (M1):

- Erstellen einer unaufgeforderten Summenbereichsbestätigung oder eines unaufgeforderten Summenbereichsnachweises, und
- Senden der unaufgeforderten Summenbereichsbestätigung oder des angeforderten Summenbereichsnachweises an die Überwachungsinstanz (2).

5. Das Verfahren (100) nach einem der Ansprüche 1 bis 4, wobei das erste Endgerät (M1) eine Summe aus monetären Beträgen mehrerer elektronischer Münzdatensätze bildet und wobei das erste Endgerät (M1) mit der Summenbereichsbestätigung bestätigt, dass die gebildete Summe in einem Bereich liegt.

6. Das Verfahren (100) nach einem der Ansprüche 1 bis 5, wobei das erste Endgerät (M1) für mehrere elektronische Münzdatensätze einen durch die Überwachungsinstanz (2) überprüfbaren Summenbereichsnachweis erstellt.

7. Das Verfahren (100) nach einem der Ansprüche 5 oder 6, wobei die mehreren elektronische Münzdatensätze nur ausgewählte elektronische Münzdatensätze umfassen, insbesondere

- nur elektronische Münzdatensätze von gesendeten pseudonymisierten maskierten elektronischen Münzdatensätzen, oder
- nur elektronische Münzdatensätze von gesendeten anonymen maskierten elektronischen Münzdatensätzen oder gesendeten pseudonymisierten maskierten elektronischen Münzdatensätzen, oder
- nur elektronische Münzdatensätze von gesendeten anonymen maskierten elektronischen Münzdatensätzen, gesendeten pseudonymisierten maskierten elektronischen Münzdatensätzen und/oder nicht an die Überwachungsinstanz (2) gesendeten maskierten elektronischen Münzdatensätzen.

8. Das Verfahren (100) nach einem der Ansprüche 5 bis 7, wobei die mehreren elektronischen Münzdatensätze ausgewählt werden nach mindestens einem der folgenden Kriterien:

- einem vorausgewählten Zeitraum, und/oder
- einer Liste in dem ersten Endgerät (M1) oder in der Überwachungsinstanz (2).

9. Das Verfahren (100) nach einem der Ansprüche 1 bis 8, wobei die Überwachungsinstanz (2) im Rahmen einer Summenprüfung Bereichsbestätigungen oder Bereichsnachweise von Endgeräten (M1, M2, M3) anfordert und vorzugsweise:

- für anonyme maskierte elektronische Münzdatensatze ($Z_i$, $Z_k$, $Z_l$, $Z_m$) einen ersten Summenprüfmodus anwendet,
- für pseudonymisierte maskierte elektronische Münzdatensätze ($S_i$, $S_m$, $S_k$, $S_l$) einen zweiten Summenprüfmodus anwendet.

10. Das Verfahren (100) nach einem der Ansprüche 1 bis 9, wobei die Überwachungsinstanz (2) für jeden empfangenen modifizierten Münzdatensatz einen Bereichsnachweis für den Betrag prüft.

11. Das Verfahren (100) nach einem der Ansprüche 1 bis 10, wobei die Überwachungsinstanz (2)

- regelmäßig oder quasizufällig Bereichsbestätigungen oder Bereichsnachweise von Endgeräten (M1, M2, M3) anfordert, und/oder
- erst ab einer Anzahl von für ein pseudonym empfangenen Münzdatensätzen von dem Endgerät (M1, M2, M3) eine Bereichsbestätigung oder einen Bereichsnachweis anfordert, wobei die Anzahl insbesondere abhängig vom Endgerätetyp und/oder Münzbetragsbereich ist.

**12.** Ein Endgerät, eingerichtet zum direkten Übertragen von elektronischen Münzdatensätzen ($C_i$) zwischen Endgeräten (M2, M3) aufweisend eine Recheneinheit, eingerichtet zum Ausführen der Endgeräte-Schritte des Verfahrens (100) nach einem der vorhergehenden Ansprüche 1 bis 11.

**13.** Bezahlsystem zum Austausch von monetären Beträgen, wobei das Bezahlsystem umfasst:

- eine Überwachungsschicht (2) mit einer Datenbank, in der anonyme maskierte elektronische Münzdatensätze abgelegt sind; und
- eine Direkttransaktionsschicht (3) mit zumindest zwei Endgeräten (M1, M2, M3), in welcher das Verfahren (100) nach einem der vorhergehenden Ansprüche 1 bis 11 durchführbar ist.

**Claims**

**1.** A method (100) for directly transmitting electronic coin data sets ($C_i$) between terminals (M1, M2, M3), wherein a monitoring entity (2) registers anonymous masked electronic coin data sets ($Z_i$, $Z_k$, $Z_l$, $Z_m$), the method comprising the following steps in a first terminal (M1):

- receiving (102) an electronic coin data set ($C_i$), wherein the at least one electronic coin data set ($C_i$) has a monetary value ($U_i$) and an obfuscation value ($r_i$);
- masking (103) a modified electronic coin data set ($C_k$, $C_l$, $C_m$) or the received electronic coin data set ($C_i$) by applying a one-way function ($f(C)$), which is, for example, homomorphic, to the electronic coin data set ($C_i$, $C_k$, $C_l$, $C_m$), preferably to its obfuscation value ($r_i$, $r_j$, $r_k$), to obtain a masked electronic coin data set ($Z_i$, $Z_k$, $Z_l$, $Z_m$);
- linking (103p) the masked electronic coin data set ($Z_i$, $Z_k$, $Z_l$, $Z_m$) to a pseudonym to obtain a pseudonymized masked electronic coin data set ($S_i$, $S_k$, $S_l$, $S_m$); and
- sending (104) the pseudonymized masked electronic coin data set ($S_i$, $S_k$, $Si$, $S_m$) to the monitoring entity (2).

**2.** The method (100) according to claim 1, wherein by sending (104) the pseudonymized masked electronic coin data set ($S_i$, $S_k$, $Si$, $S_m$) instead of an anonymous masked electronic coin data set ($Z_i$, $Z_k$, $Z_l$, $Z_m$), the quantity of range confirmations or range verifications which the monitoring entity (2) requests from the first terminal (M1) is reduced.

**3.** The method (100) according to claim 1 or 2, comprising the further steps in the first terminal (M1):

- receiving a request for a sum range confirmation or a sum range verification from the monitoring entity (2), and
- sending the requested sum range confirmation or the requested sum range verification to the monitoring entity (2).

**4.** The method (100) according to claim 1 or 2, comprising the further steps in the first terminal (M1):

- creating an unrequested sum range confirmation or an unrequested sum range verification, and
- sending the unrequested sum range confirmation or the requested sum range verification to the monitoring entity (2).

**5.** The method (100) according to any of claims 1 to 4, wherein the first terminal (M1) forms a sum of monetary values of a plurality of electronic coin data sets, and wherein the first terminal (M1) confirms that the formed sum is in a range by means of the sum range confirmation.

**6.** The method (100) according to any of claims 1 to 5, wherein the first terminal (M1) generates a sum range verification for a plurality of electronic coin data sets, which verification can be checked by the monitoring entity (2).

**7.** The method (100) according to either of claims 5 or 6, wherein the plurality of electronic coin data sets include only selected electronic coin data sets, in particular

- only electronic coin data sets of sent pseudonymized masked electronic coin data sets, or
- only electronic coin data sets of sent anonymous masked electronic coin data sets or sent pseudonymized masked electronic coin data sets, or
- only electronic coin data sets of sent anonymous masked electronic coin data sets, sent pseudonymized masked electronic coin data sets and/or masked electronic coin data sets not sent to the monitoring entity (2).

8. The method (100) according to any of claims 5 to 7, wherein the plurality of electronic coin data sets are selected according to at least one of the following criteria:

  - a pre-selected time frame, and/or
  - a list in the first terminal (M1) or in the monitoring entity (2).

9. The method (100) according to any of claims 1 to 8, wherein the monitoring entity (2) requests range confirmations or range verifications from terminals (M1, M2, M3) in the context of a sum check, and preferably:

  - applies a first sum check mode for anonymous masked electronic coin data sets ($Z_i$, $Z_k$, $Z_l$, $Z_m$),
  - applies a second sum check mode for pseudonymized masked electronic coin data sets ($S_i$, $S_m$, $S_k$, $S_l$).

10. The method (100) according to any of claims 1 to 9, wherein the monitoring entity (2) checks a range verification for the value for each received modified coin data set.

11. The method (100) according to any of claims 1 to 10, wherein the monitoring entity (2)

  - regularly or quasi-randomly requests range confirmations or range verifications from terminals (M1, M2, M3), and/or
  - requests a range confirmation or a range verification from the terminal (M1, M2, M3) only once a quantity of coin data sets are received for a pseudonym, wherein the quantity is in particular dependent on the terminal type and/or the coin value range.

12. A terminal, configured to directly transmit electronic coin data sets ($C_i$) between terminals (M2, M3), having a computing unit configured to execute the terminal steps of the method (100) according to any of the preceding claims 1 to 11.

13. A payment system for exchanging monetary values, wherein the payment system comprises:

  - a monitoring layer (2) having a database in which anonymous masked electronic coin data sets are stored; and
  - a direct transaction layer (3) having at least two terminals (M1, M2, M3), in which the method (100) according to any of the preceding claims 1 to 11 can be carried out.


**Revendications**

1. Procédé (100) permettant la transmission directe de jeux de données de pièces de monnaie électroniques ($C_i$) entre des terminaux (M1, M2, M3), dans lequel une entité de surveillance (2) enregistre des jeux de données de pièces de monnaie électroniques masqués ($Z_i$, $Z_k$, $Z_l$, $Z_m$) anonymes, comportant les étapes suivantes dans un premier terminal (M1) :

  - réception (102) d'un jeu de données de pièce de monnaie électronique ($C_i$), dans lequel l'au moins un jeu de données de pièce de monnaie électronique ($C_i$) présente une valeur monétaire ($U_i$) et une valeur de dissimulation (n) ;
  - masquage (103) d'un jeu de données de pièce de monnaie électronique modifié ($C_k$, $C_l$, $C_m$) ou du jeu de données de pièce de monnaie électronique ($C_i$) reçu en appliquant une fonction à sens unique (f(C)) qui est par exemple homomorphe au jeu de données de pièce de monnaie électronique ($C_i$, $C_k$, $Ci$, $C_m$), de préférence à sa valeur de dissimulation ($r_i$, $r_j$, $r_k$), pour l'obtention d'un jeu de données de pièce de monnaie électronique masqué ($Z_i$, $Z_k$, $Z_l$, $Z_m$) ;
  - association (103p) du jeu de données de pièce de monnaie électronique masqué ($Z_i$, $Z_k$, $Zi$, $Z_m$) à un pseudonyme pour l'obtention d'un jeu de données de pièce de monnaie électronique masqué à pseudonyme ($S_i$, $S_k$, $S_l$, $S_m$) ; et
  - envoi (104) du jeu de données de pièce de monnaie électronique masqué à pseudonyme ($S_i$, $S_k$, $S_l$, $S_m$) à l'entité de surveillance (2).

2. Procédé (100) selon la revendication 1, dans lequel, par l'envoi (104) du jeu de données de pièce de monnaie électronique masqué à pseudonyme ($S_i$, $S_k$, $Si$, $S_m$) au lieu d'un jeu de données de pièce de monnaie électronique masqué ($Z_i$, $Z_k$, $Z_l$, $Z_m$) anonyme, le nombre de confirmations de plage ou de preuves de plage est réduit, lequel nombre est demandé par l'entité de surveillance (2) au premier terminal (M1).

3.  Procédé (100) selon la revendication 1 ou 2, comportant les étapes supplémentaires dans le premier terminal (M1) :

    - réception d'une demande pour une confirmation de plage de sommes ou une preuve de plage de sommes en provenance de l'entité de surveillance (2), et
    - envoi de la confirmation de plage de sommes demandée ou de la preuve de plage de sommes demandée à l'entité de surveillance (2).

4.  Procédé (100) selon la revendication 1 ou 2, comportant les étapes supplémentaires dans le premier terminal (M1) :

    - création d'une confirmation de plage de sommes non demandée ou d'une preuve de plage de sommes non demandée, et
    - envoi de la confirmation de plage de sommes non demandée ou de la preuve de plage de sommes demandée à l'entité de surveillance (2).

5.  Procédé (100) selon l'une des revendications 1 à 4, dans lequel le premier terminal (M1) constitue une somme de valeurs monétaires de plusieurs jeux de données de pièces de monnaie électroniques et dans lequel le premier terminal (M1) confirme avec la confirmation de plage de sommes que la somme constituée se situe dans une plage.

6.  Procédé (100) selon l'une des revendications 1 à 5, dans lequel le premier terminal (M1) crée une preuve de plage de sommes pouvant être vérifiée par l'entité de surveillance (2) pour plusieurs jeux de données de pièces de monnaie électroniques.

7.  Procédé (100) selon l'une des revendications 5 ou 6, dans lequel les jeux de données de pièces de monnaie électroniques comprennent uniquement des jeux de données de pièces de monnaie électroniques sélectionnés, en particulier

    - uniquement des jeux de données de pièces de monnaie électroniques parmi des jeux de données de pièces de monnaie électroniques masqués à pseudonyme envoyés, ou
    - uniquement des jeux de données de pièces de monnaie électroniques parmi des jeux de données de pièces de monnaie électroniques masqués anonymes envoyés ou des jeux de données de pièces de monnaie électroniques masqués à pseudonyme envoyés, ou
    - uniquement des jeux de données de pièces de monnaie électroniques parmi des jeux de données de pièces de monnaie électroniques masqués anonymes envoyés, des jeux de données de pièces de monnaie électroniques masqués à pseudonyme envoyés et/ou des jeux de données de pièces de monnaie électroniques masqués non envoyés à l'entité de surveillance (2).

8.  Procédé (100) selon l'une des revendications 5 à 7, dans lequel les jeux de données de pièces de monnaie électroniques sont sélectionnés selon au moins l'un des critères suivants :

    - une période présélectionnée, et/ou
    - une liste dans le premier terminal (M1) ou dans l'entité de surveillance (2).

9.  Procédé (100) selon l'une des revendications 1 à 8, dans lequel l'entité de surveillance (2) demande, dans le cadre d'une vérification de somme, des confirmations de plage ou des preuves de plage aux terminaux (M1, M2, M3) et de préférence :

    - applique un premier mode de vérification de somme pour des jeux de données de pièces de monnaie électroniques masqués ($Z_i$, $Z_k$, $Z_l$, $Z_m$) anonymes,
    - applique un second mode de vérification de somme pour des jeux de données de pièces de monnaie électroniques masqués à pseudonyme ($S_i$, $S_m$, $S_k$, $S_l$).

10. Procédé (100) selon l'une des revendications 1 à 9, dans lequel l'entité de surveillance (2) vérifie une preuve de plage pour la valeur pour chaque jeu de données de pièce de monnaie modifié reçu.

11. Procédé (100) selon l'une des revendications 1 à 10, dans lequel l'entité de surveillance (2)

- demande régulièrement ou de manière quasi-aléatoire des confirmations de plage ou des preuves de plage aux terminaux (M1, M2, M3), et/ou
- ne demande au terminal (M1, M2, M3) qu'une confirmation de plage ou une preuve de plage à partir d'un nombre de jeux de données de pièces de monnaie reçus pour un pseudonyme, dans lequel le nombre dépend en particulier du type de terminal et/ou de la plage de valeurs de pièce de monnaie.

12. Terminal, configuré pour la transmission directe de jeux de données de pièces de monnaie électroniques ($C_i$) entre des terminaux (M2, M3), présentant une unité de calcul, configurée pour l'exécution des étapes de terminal du procédé (100) selon l'une des revendications précédentes 1 à 11.

13. Système de paiement permettant l'échange de valeurs monétaires, dans lequel le système de paiement comprend :

- une couche de surveillance (2) comportant une base de données, dans laquelle sont déposés des jeux de données de pièces de monnaie électroniques masqués anonymes ; et
- une couche de transaction directe (3) comportant au moins deux terminaux (M1, M2, M3), dans laquelle le procédé (100) selon l'une des revendications précédentes 1 à 11 peut être mis en oeuvre.

M1

$C_i$

$Z_i = f(C_i)$

$C_i$

1

$C_i = \{v_i; r_i\}$

$Z_i = f(C_i)$

$C_i$

3

M2

$C_i^*$

$Z_i^* = f(C_i^*)$

| M2a | M2p |
|---|---|
| | $S_i^* = Z_i^*;[Z_i^*]sig(P_{M2})$ |

$Z_i$

$Z_i^*$

$S_i^*$

4

| 210 | 2a | 2p |
|---|---|---|
| $Z_i$ | $Z_i^* = Z_i$? | $Z_i^* = Z_i$? |

220   $P_{M2}:Z_i$

2

**Fig. 1**

| Kommando | $O_1$ | $O_2$ | $S_1$ | $S_2$ | Signa-tur | O-Flag | C-Flag | R1-Flag | R2-Flag | R3-Flag | S-Flag | V-Flag |
|---|---|---|---|---|---|---|---|---|---|---|---|---|
| Erzeugen | - | - | $Z_i$ | - | $[Z_i]Sig_I$ | - | - | - | - |  | [0,1] | [0,1] |
| Deaktivieren | $Z_i$ | - | - | - | $[Z_i]Sig_I$ | [0,1] | - | - | - |  | [0,1] | [0,1] |
| Aufteilen | $Z_i$ | - | $Z_j$ | $Z_k$ | $\mathbf{[Z_i]Sig_M}$ | [0,1] | [0,1] | [0,1] | - | - | **[0,1]** | [0,1,**2**] |
| Verbinden | $Z_i$ | $Z_j$ | - | $Z_m$ | $\mathbf{[Z_i]Sig_M}$ | [0,1] | [0,1] | [0,1] | [0,1] | [0,1] | **[0,1]** | [0,1,**2**] |
| Umschalten | $Z_k$ | - | - | $Z_l$ | $\mathbf{[Z_i]Sig_M}$ | [0,1] | [0,1] | [0,1] | - | [0,1] | **[0,1]** | [0,1,**2**] |

21  22a 22b 23a 23b 24 25 26 27a 27b 27c 28 29

2

**Fig. 2**

M1

$$C_i$$

$$\upsilon_i = \upsilon_j + \upsilon_k$$

$$\upsilon_\lambda > 0$$

$$r_i = r_j + r_k$$

$$C_j = \{\upsilon_j;\ r_j\}$$

$$C_k = \{\upsilon_k;\ r_k\}$$

$$Z_i = f(C_i)$$

$$Z_j = f(C_j)$$

$$Z_k = f(C_k)$$

$$C_k$$

M2

$$C_k^*$$

$$\upsilon_l = \upsilon_k$$

$$r_l = r_k + r_{add}$$

$$Z_k^* = f(C_k^*)$$

$$C_l = \{\upsilon_l;\ r_l\}$$

$$Z_l = f(C_l)$$

$$R_{add} = r_{add} \cdot G$$

$$(R_{add})sig(r_{add})$$

3

$$Z_i;\ Z_j;\ Z_k$$
$$S_i;\ S_j;$$

Prüfe: $Z_i = Z_j + Z_k$

$$Z_k^*;\ Z_l$$
$$S_k^*;\ S_l$$

Verwende: $(Z_k - Z_l)$ als $R_{add}$ zum Prüfen, dass nur $r_l$ verändert wurde

4

| Kommando | $O_1$ | $O_2$ | $S_1$ | $S_2$ | Signatur | O-Flag | ... | R3-Flag | S-Flag |
|---|---|---|---|---|---|---|---|---|---|
| Aufteilen | $Z_i$ | - | $Z_j$ | $Z_k$ | $[Z_i]Sig_{M1}$ | [0,1] | ... | [0,1] | [0,1] |
| Umschalten | $Z_k$ | - | $Z_l$ | - | $[Z_i]Sig_{M2}$ | [0,1] | ... | [0,1] | [0,1] |

2

**Fig. 3**

M1

M3

M2

3

$C_i$

$C_j$

$$C_i; C_j$$
$$\upsilon_m = \upsilon_i + \upsilon_j$$
$$r_m = r_i + r_j$$
$$C_m = \{\upsilon_m; r_m\}$$
$$Z_m = f(C_m)$$

$Z_i; Z_j$

$Z_m$
$S_i; S_j$

| Kommando | $O_1$ | $O_2$ | $S_1$ | $S_2$ | Signatur | ... | R2-Flag | R3-Flag | S-Flag |
|---|---|---|---|---|---|---|---|---|---|
| Verbinden | $Z_i$ | $Z_j$ | - | $Z_m$ | $[Z_i]Sig_{M2}$ | ... | [0,1] | [0,1] | [0,1] |

2

**Fig. 4**

**Fig. 5**

M1        1    2    M2

103,
103p
110

Teile auf

$v_i = v_k + v_j$

$r_i = r_k + r_j$

$C_k = \{v_k; r_k\}$

$C_j = \{v_j; r_j\}$

$Z_k = f(C_k)$

$Z_j = f(C_j)$

$S_i = [Z_i]sig_{M2}$

Aufteilen

110'

Bestätige

$Z_i = Z_k + Z_i$

**Fig. 6**

**100**

Fig. 7

**Fig. 8**

M1　　　　　　M2 ($P_{M2}$)　　　　M3

**Fig. 9**

**Fig. 10**

**IN DER BESCHREIBUNG AUFGEFÜHRTE DOKUMENTE**

**In der Beschreibung aufgeführte Patentdokumente**

- DE 102009038645 A1
- DE 102009034436 A1
- WO 2016200885 A1

**In der Beschreibung aufgeführte Nicht-Patentliteratur**

- **ISABELLE SIMPLOT-RYL.** Distributed architecture for electronic cash schemes: a survey. *International Journal of parallel, emergent and distributed systems,* 01. Juni 2009, vol. 24 (3), 243-271